(19) **Europäisches Patentamt / European Patent Office / Office européen des brevets**

(11) **EP 4 648 330 A1**

(12) **EUROPEAN PATENT APPLICATION**
published in accordance with Art. 153(4) EPC

(43) Date of publication:
**12.11.2025 Bulletin 2025/46**

(21) Application number: **23914044.5**

(22) Date of filing: **05.01.2023**

(51) International Patent Classification (IPC):
**H04L 5/00** *(2006.01)*

(52) Cooperative Patent Classification (CPC):
**H04L 5/00**

(86) International application number:
**PCT/CN2023/070786**

(87) International publication number:
**WO 2024/145886 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **GAO, Xueyuan
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **CHANNEL STATE INFORMATION REPORTING METHOD AND APPARATUS, AND STORAGE MEDIUM**

(57) The present disclosure relates to the technical field of communications, and in particular to a channel state information (CSI) reporting method and apparatus, and a storage medium, which are used for implementing CSI reporting corresponding to a plurality of channel state information reference signal (CSI-RS) resources.

The method comprises: in response to a network device configuring Ntrp CSI-RS resources for a terminal, determining N target CSI-RS resources from among the Ntrp CSI-RS resources, where Ntrp and N are positive integers, and $1 \leq N \leq Ntrp$; and sending CSI corresponding to the N target CSI-RS resources to the network device.

determining $N$ target channel status information-reference signal (CSI-RS) resources from $N_{trp}$ CSI-RS resources in response to configuring, by a network device, the $N_{trp}$ CSI-RS resources for the terminal — S11

sending CSI corresponding to the $N$ target CSI-RS resources to the network device — S12

FIG. 3

**Description**

**FIELD**

The present disclosure relates to the field of communication technologies, and in particular relates to a method and an apparatus for reporting channel status information (CSI) and a storage medium.

**BACKGROUND**

In new radio (NR) technologies, a coherent joint transmission (CJT) based on multiple transmission reception points (M-TRPs) is introduced. A network device can receive or send beams for transmissions via multiple transmission reception points (TRPs) to provide services to a terminal.

Currently, the terminal reports CSI to the network device, so that the network device performs resource scheduling and other processings according to the CSI reported by the terminal. However, in the related art, the reporting of CSI is only applicable to channel status information-reference signal (CSI-RS) resources corresponding to a single TRP.

**SUMMARY**

In order to overcome the problems existing in the related art, the present disclosure provides a method and an apparatus for reporting CSI and a storage medium.

According to a first aspect of embodiments of the present disclosure, there is provided a method for reporting CSI, performed by a terminal and including: determining $N$ target CSI-RS resources from $N_{trp}$ CSI-RS resources in response to configuring, by a network device, the $N_{trp}$ CSI-RS resources for the terminal, where $N_{trp}$ and $N$ are positive integers, and $1 \leq N \leq N_{trp}$; and sending CSI corresponding to the $N$ target CSI-RS resources to the network device.

According to a second aspect of embodiments of the present disclosure, there is provided a method for reporting CSI, performed by a network device and including: receiving CSI corresponding to $N$ target CSI-RS resources sent by a terminal, in which the $N$ target CSI-RS resources are CSI-RS resources among $N_{trp}$ CSI-RS resources configured by the network device for the terminal, where $N_{trp}$ and $N$ are positive integers, and $1 \leq N \leq N_{trp}$.

According to a third aspect of embodiments of the present disclosure, there is provided an apparatus for reporting CSI, applied to a terminal and including a determining module and a sending module. The determining module is configured to determine $N$ target CSI-RS resources from $N_{trp}$ CSI-RS resources in response to configuring, by a network device, the $N_{trp}$ CSI-RS resources for the terminal, where $N_{trp}$ and $N$ are positive integers, and $1 \leq N \leq N_{trp}$. The sending module is configured to send CSI corresponding to the $N$ target CSI-RS resources to the network device.

According to a fourth aspect of embodiments of the present disclosure, there is provided an apparatus for reporting CSI, applied to a network device and including a receiving module. The receiving module is configured to receive CSI corresponding to $N$ target CSI-RS resources sent by a terminal, in which the $N$ target CSI-RS resources are CSI-RS resources among $N_{trp}$ CSI-RS resources configured by the network device for the terminal, where $N_{trp}$ and $N$ are positive integers, and $1 \leq N \leq N_{trp}$.

According to a fifth aspect of embodiments of the present disclosure, there is provided a device for reporting CSI, including a processor and a memory for storing instructions executable by the processor, in which the processor is configured to perform the method in the first aspect and any one of its implementations described above.

According to a sixth aspect of embodiments of the present disclosure, there is provided a device for reporting CSI, including a processor and a memory for storing instructions executable by the processor, in which the processor is configured to perform the method in the second aspect and any one of its implementations described above.

According to a seventh aspect of embodiments of the present disclosure, there is provided a storage medium having stored therein instructions that, when executed by a processor of a terminal, cause the terminal to perform the method in the first aspect and any one of its implementations described above.

According to an eighth aspect of embodiments of the present disclosure, there is provided a storage medium having stored therein instructions that, when executed by a processor of a network device, cause the network device to perform the method in the second aspect and any one of its implementations described above.

The technical solution provided in the embodiments of the present disclosure may include the following advantageous effects. When the network device configures $N_{trp}$ CSI-RS resources for the terminal, the terminal can select $N$ target CSI-RS resources from the $N_{trp}$ CSI-RS resources, and send CSI corresponding to the $N$ target CSI-RS resources to the network device, so as to realize the reporting of the CSI corresponding to multiple CSI-RS resources, so that the network device can perform resource scheduling according to the CSI corresponding to the multiple CSI-RS resources.

It is to be understood that both the foregoing general description and the following detailed description are illustrative and explanatory only and are not restrictive of the disclosure.

## BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

FIG. 1 is a schematic diagram illustrating a wireless communication system according to an illustrative embodiment.
FIG. 2 is a schematic diagram illustrating a scenario in which multiple TRPs serve a terminal via a coherent joint transmission in an illustrative embodiment of the present disclosure.
FIG. 3 is a flow chart illustrating a method for reporting CSI according to an illustrative embodiment.
FIG. 4 is a schematic diagram illustrating the sorting of non-zero coefficients according to an illustrative embodiment.
FIG. 5 is a schematic diagram illustrating the sorting of non-zero coefficients according to an illustrative embodiment.
FIG. 6 is a flow chart illustrating a method for reporting CSI according to an illustrative embodiment.
FIG. 7 is a block diagram illustrating an apparatus for reporting CSI according to an illustrative embodiment.
FIG. 8 is a block diagram illustrating an apparatus for reporting CSI according to an illustrative embodiment.
FIG. 9 is a block diagram illustrating a device for reporting CSI according to an illustrative embodiment.
FIG. 10 is a block diagram illustrating a device for reporting CSI according to an illustrative embodiment.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure.

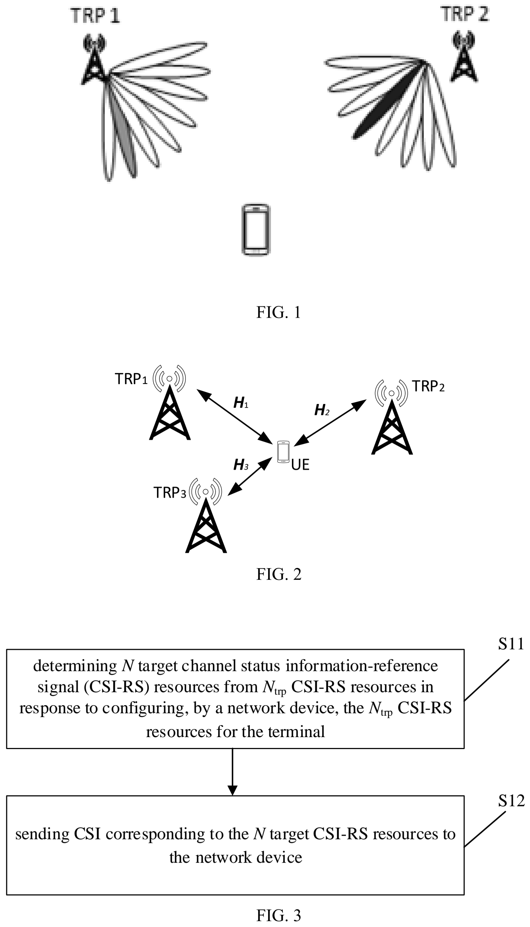

A method for reporting CSI provided in the embodiments of the present disclosure may be performed by a wireless communication system illustrated in FIG. 1. Referring to FIG. 1, the wireless communication system may include a network device and a terminal. The terminal is connected to the network device via wireless resources, and performs data transmissions with the network device via the wireless resources.

It may be understood that the wireless communication system shown in FIG. 1 is only for schematic illustration. The wireless communication system may also include other network devices, such as core network devices, wireless relay devices, and wireless backhaul devices, which are not shown in FIG. 1. The number of network devices and the number of terminals included in the wireless communication system are not limited in the embodiments of the present disclosure.

It may be further understood that the wireless communication system in the embodiments of the present disclosure is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The networks may be divided into a 2nd generation (2G) network, a 3G network, a 4G network, or a future evolution network, such as a 5th generation wireless communication system (5G) network, which may also be referred to as a new radio (NR) network, according to the capacity, rate, delay, and other factors of different networks. For ease of description, a wireless communication network will be sometimes abbreviated as a network in the present disclosure.

Further, the network device involved in the present disclosure may also be referred to as a radio access network device. The radio access network device may be a base station, an evolved node B, a home base station, an access point (AP) in a wireless fidelity (Wi-Fi) system, a wireless relay node, a wireless backhaul node, a transmission point (TP), a transmission and reception point (TRP), or the like, or may also be a generation NodeB (gNB) in an NR system, or may also be a component or a part of a device that constitutes a base station, or the like. It is to be understood that the specific technology and specific device form adopted by the network device are not limited in the embodiments of the present disclosure. In the present disclosure, the network device may provide communication coverage for a specific geographical area, and may communicate with a terminal located within the coverage area (cell). In addition, the network device may also be a vehicle-mounted device when it is used in a vehicle to everything (V2X) communication system.

Further, the terminal involved in the present disclosure, which may also be referred to as a terminal device, a user equipment (UE), a mobile station (MS), a mobile terminal (MT), or the like, is a device that provides voice and/or data connectivity to a user. For example, the terminal may be a handheld device with a wireless connection function, a vehicle-mounted device, or the like. At present, some examples of the terminal are a smart phone, a customer premise equipment (CPE), a pocket personal computer (PPC), a palmtop computer, a personal digital assistant (PDA), a notebook computer, a tablet computer, a wearable device, a vehicle-mounted device, or the like. In addition, the terminal device may also be a vehicle-mounted device when it is used in a vehicle to everything (V2X) communication system. It is to be understood that the specific technology and specific device form adopted by the terminal are not limited in the embodiments of the present disclosure.

Since the received signal strength of a user at an edge of a cell is low, the experience of the user at the edge is poor, and the spectrum efficiency of the system is low. In order to improve edge coverage and provide balanced service quality for each user in a service area, a multi-point coordinated transmission is proposed. Different from a single transmission reception point (TRP) or a single panel of a single-point transmission, the multi-point coordinated transmission means that multiple TRPs or multiple panels provide data services to one user. The multi-point coordinated transmission technology includes a coherent joint transmission (CJT) and a non-coherent joint transmission (NCJT). The CJT means that each data stream will be mapped to multiple TRPs or panels participating in the coordination via a weighted vector. The NCJT means that each data stream is only mapped to some of the TRPs or panels. The CJT is equivalent to splicing multiple sub-arrays into a higher-dimensional virtual array to obtain a higher shaping or precoding gain.

FIG. 2 shows a schematic diagram of a scenario in which multiple TRPs serve a terminal via a coherent joint transmission in an illustrative embodiment of the present disclosure. In FIG. 2, a scenario in which three TRPs provide data services to a terminal via a coherent joint transmission is taken as an example, but the present disclosure is not limited thereto. In FIG. 2, channels from the terminal to individual TRPs are represented as $H_1$, $H_2$, and $H_3$, respectively. When the downlink data transmission precoding of the terminal is calculated, the channels mapped by individual TRPs can be combined together and regarded as a channel of a higher dimension. That is, $H = \begin{bmatrix} H_1^T, & H_2^T, & H_3^T \end{bmatrix}^T$. Then, the downlink data transmission precoding of the terminal is calculated based on the combined channel $H$.

When multiple TRPs perform the CJT, the downlink data transmission precoding of the terminal can be calculated using the codebook structures in two modes:

Mode 1:

$$\begin{bmatrix} W_{1,1}\tilde{W}_{2,1}W_{f,1}^H \\ \vdots \\ W_{1,N}\tilde{W}_{2,N}W_{f,N}^H \end{bmatrix}$$

Mode 2:

$$\begin{bmatrix} W_{1,1} & 0 & 0 & 0 \\ 0 & \ddots & 0 & 0 \\ 0 & 0 & \ddots & 0 \\ 0 & 0 & 0 & W_{1,N} \end{bmatrix}\tilde{W}_2 W_f^H$$

where $W_{1,n}$ represents one or more spatial domain (SD) basis vectors or one or more unit vectors corresponding to an $n^{th}$ TRP; $W_{2,n}$ represents a combination coefficient corresponding to the $n^{th}$ TRP; $\tilde{W}_2$ represents a combination coefficient corresponding to $N$ TRPs; $W_f$ represents one or more frequency domain (FD) basis vectors corresponding to $N$ TRPs, and $n = 1,...,N$.

If $W_{1,n}$ represents one or more SD basis vectors corresponding to the $n^{th}$ TRP, the codebook structure is an enhanced codebook structure designed based on the Rel-16 Type II codebook. If $W_{1,n}$ represents one or more unit vectors corresponding to the $n^{th}$ TRP, the codebook structure is an enhanced codebook structure designed based on the Rel-17 Type II port selection (PS) codebook.

In the current standard specification, for the Rel-16 Type II codebook or the Rel-17 Type II PS codebook, the CSI is reported in two parts: Part 1 and Part 2. The specific contents of Part 1 and Part 2 are shown in Table 1. In addition, Part 2 is divided into three groups, G0, G1 and G2, according to the sorting of priorities of coefficients, SD basis vectors, FD basis vectors, and the indication of the strongest coefficient.

Table 1

| Codebook | Part 1 | Part 2 |
|---|---|---|
| Rel-16 Type II codebook | rank indication (RI) information, channel quality indication (CQI) information, and indication information of number of non-zero coefficients of all layers | G0: indication information of an SD basis vector in each polarization direction, indication information of strongest coefficient;<br>G1: FD basis vector indication information, reference amplitude, indication information of high-priority non-zero coefficients, amplitude and phase quantization information corresponding to high-priority non-zero coefficients except strongest coefficient;<br>G2: indication information of low-priority non-zero coefficients, amplitude and phase quantization information corresponding to low-priority non-zero coefficients. |
| Rel-17 Type II PS codebook | | G0: port selection indication information in each polarization direction, indication information of strongest coefficient, FD basis vector indication information;<br>G1: indication information of high-priority non-zero coefficients, reference amplitude, amplitude and phase quantization information corresponding to high-priority non-zero coefficients except strongest coefficient;<br>G2: indication information of low-priority non-zero coefficients, amplitude and phase quantization information corresponding to low-priority non-zero coefficients. |

When uplink resources are limited and the terminal cannot report both Part 1 and Part 2 in the CSI in one report, in order to reasonably discard some contents of the CSI, the following priority sorting function for the coefficients in the combination coefficient matrix is defined in the Rel-16 Type II codebook or Rel-17 Type II port selection codebook. The smaller the value of the function, the higher the priority, and vice versa.

The coefficient priority order in the Rel-16 Type II codebook is determined based on the following formula:

$$\mathrm{Pri}(l,i,f) = 2 \cdot L \cdot v \cdot \pi(f) + v \cdot i + l \qquad (1)$$

where $\pi(f) = \min\left(2 \cdot n_{3,l}^{(f)}, 2 \cdot \left(N_3 - n_{3,l}^{(f)}\right) - 1\right)$, $l = 1, 2, ..., v$, $i = 0, 1, ..., 2L-1$, and $f = 0, 1, ..., M_v-1$. $l$ represents the number of layers, $v$ represents the rank, $i$ represents an index of an SD basis vector, $f$ represents an index of a FD basis vector, $L$ represents the number of SD basis vectors in an upper left block matrix or a lower right block matrix of a block diagonal matrix $W_1$, $M_v$ represents the number of FD basis vectors, $n_{3,l}^{(f)}$ represents an index mapped from the index $f$ of the FD basis vector to $N_3$, and $N_3$ represents the number of candidate FD basis vectors.

The coefficient priority order in the Rel-17 Type II PS codebook is determined based on the following formula:

$$\mathrm{Pri}(l,i,f) = K_1 \cdot v \cdot f + v \cdot i + l \qquad (2)$$

where $l = 1, 2, ..., v$, $i = 0, 1, ..., K_1-1$, and $f = 0, 1, ..., M-1$. $l$ represents the number of layers, $v$ represents the rank, $i$ represents an index of a port, $f$ represents an index of a FD basis vector, $K_1$ represents the number of CSI-RS ports selected by the terminal, and $M$ represents the number of FD basis vectors.

It should be understood that the smaller the value of Pri($l$,$i$,$f$), the greater the priority of the non-zero coefficient.

In the related art, the reporting of the CSI is only applicable to CSI-RS resources corresponding to a single TRP. When multiple TRPs implement the CJT and each TRP corresponds to one CSI-RS resource, how to report the CSI of multiple CSI-RS resources corresponding to multiple TRPs is a problem that needs to be solved.

Based on this, an embodiment of the present disclosure proposes a method for reporting CSI. When a network device configures $N_{\mathrm{trp}}$ CSI-RS resources for a terminal, the terminal can select $N$ target CSI-RS resources from the $N_{\mathrm{trp}}$ CSI-RS resources, and send CSI corresponding to the $N$ target CSI-RS resources to the network device, so as to realize the reporting of the CSI corresponding to multiple CSI-RS resources, so that the network device can perform resource scheduling according to the CSI corresponding to the multiple CSI-RS resources.

FIG. 3 is a flow chart of a method for reporting CSI according to an illustrative embodiment. As shown in FIG. 3, the method for reporting CSI is performed by a terminal, and includes the following steps.

At step S11, target CSI-RS resources are determined from $N_{trp}$ CSI-RS resources in response to configuring, by a network device, the $N_{trp}$ CSI-RS resources for the terminal.

Each CSI-RS resource corresponds to one TRP, and $N_{trp}$ CSI-RS resources correspond to $N_{trp}$ TRPs. That is, the network device indicates the CSI-RS resources corresponding to the $N_{trp}$ TRPs.

In one implementation, the terminal measures $N_{trp}$ CSI-RS resources, and selects $N$ target CSI-RS resources from the $N_{trp}$ CSI-RS resources.

In another implementation, the terminal directly uses $N_{trp}$ CSI-RS resources configured by the network device, that is, $N=N_{trp}$. At this time, the terminal does not need to measure and select $N_{trp}$ CSI-RS resources.

It should be understood that $N_{trp}$ and $N$ are positive integers, and $1 \leq N \leq N_{trp}$.

At step S12, CSI corresponding to the $N$ target CSI-RS resources is sent to the network device.

In some embodiments, the CSI may also be referred to as a CSI report.

In the embodiments of the present disclosure, when the network device configures $N_{trp}$ CSI-RS resources for the terminal, the terminal can select $N$ target CSI-RS resources from the $N_{trp}$ CSI-RS resources, and send CSI corresponding to the $N$ target CSI-RS resources to the network device, so as to realize the reporting of the CSI corresponding to multiple CSI-RS resources, so that the network device can perform resource scheduling according to the CSI corresponding to the multiple CSI-RS resources.

In the method for reporting CSI provided in an embodiment of the present disclosure, $N$ target CSI-RS resources correspond to one CSI. That is, indication information of the $N$ target CSI-RS resources is carried in the same CSI.

In the method for reporting CSI provided in an embodiment of the present disclosure, the CSI may include first information (Part 1), and the size of an indication field corresponding to the first information may be a fixed value. For example, the size of the indication field corresponding to the first information may be a preset size, or a default size specified by a protocol.

In one implementation, the first information includes at least one of: rank indication information; wideband and/or sub-band channel quality indication information; non-zero coefficient number indication information of all layers; indication information of the number of SD basis vectors or the number of ports in each polarization direction corresponding to the $N$ target CSI-RS resources; indication information of the $N$ target CSI-RS resources; or indication information of a reference CSI-RS resource.

In some embodiments, the first information may include wideband and/or sub-band channel quality indication information.

A wideband may include multiple sub-bands. To reduce overheads, the sub-band channel quality indication (CQI) information is indicated in a differential manner.

In one implementation, if the wideband CQI information is indicated by 4 bits, the sub-band CQI information may be indicated by 2 bits.

In some embodiments, the first information may include non-zero coefficient number indication information of all layers.

For example, if the maximum number of non-zero coefficients in each layer is 16 and there are two layers, the non-zero coefficient number indication information of all layers may be indicated by 5 bits.

In some embodiments, when the reporting of the CSI is based on the enhanced Rel-16 Type II codebook, the first information may include indication information of the number of SD basis vectors in each polarization direction corresponding to the $N$ target CSI-RS resources; and when the reporting of the CSI is based on the enhanced Rel-17 Type II port selection codebook, the first information may include indication information of the number of ports in each polarization direction corresponding to the $N$ target CSI-RS resources.

If the total number of combinations of the number of SD basis vectors or the number of ports corresponding to $N_{trp}$ CSI-RS resources configured by the network device is $X_1, X_1, ..., X_{Ntrp}$, the terminal indicates the combination selected by the terminal by $\left\lceil \log_2^{\max\left(X_{N_{trp}}\right)} \right\rceil$ bits.

In some embodiments, the first information may include indication information of the $N$ target CSI-RS resources.

In one implementation, the indication information of the $N$ target CSI-RS resources is indicated in a bitmap manner.

For example, if the network device configures 4 CSI-RS resources for the terminal, and the terminal selects the first and second CSI-RS resources as target CSI-RS resources, then a 4-bit bitmap can be used to indicate the target CSI-RS resources selected by the terminal and non-target CSI-RS resources not selected by the terminal.

In some embodiments, the first information may include indication information of a reference CSI-RS resource.

The reference CSI-RS resource indicates a CSI-RS resource corresponding to a strongest coefficient, or a CSI-RS resource indicated by the terminal.

In one implementation, the reference CSI-RS resource may also be a first CSI-RS resource predefined between the terminal and the network device, but the indication information of the reference CSI-RS resource at this time does not need to be reported via the CSI.

In the embodiments of the present disclosure, by specifying the indication information in Part 1 of the CSI, the information length of Part 1 can be determined, thereby reducing the detection complexity of the network device.

In the method for reporting CSI provided in an embodiment of the present disclosure, the CSI may further include second information (Part 2), and the size of Part 2 of the CSI is determined based on the information in Part 1.

In one implementation, the second information includes at least one of: indication information of an SD basis vector or a selected port; indication information of the strongest coefficient at each layer; FD basis vector indication information; relative offset indication information of target CSI-RS resources relative to the reference CSI-RS resource; starting point indication information of at least one candidate FD basis vector window; indication information of non-zero coefficients; differential amplitude quantization information and phase quantization information of non-zero coefficients; or reporting information of indication information of reference amplitudes.

In some embodiments, when the reporting of the CSI is based on the enhanced Rel-16 Type II codebook, the second information may include indication information of an SD basis vector; and when the reporting of the CSI is based on the enhanced Rel-17 Type II port selection codebook, the second information may include indication information of a selected port.

The indication information of the SD basis vector or the indication information of the selected port indicates the SD basis vector or the selected port corresponding to the target CSI-RS resource selected by the terminal.

In some embodiments, the second information may include indication information of the strongest coefficient at each layer.

The indication information of the strongest coefficient indicates the position of the strongest coefficient in each layer of non-zero coefficients.

In some embodiments, the second information may include FD basis vector indication information.

The FD basis vector indication information indicates a FD basis vector corresponding to the target CSI-RS resource selected by the terminal.

In some embodiments, the second information may include relative offset indication information of target CSI-RS resources relative to the reference CSI-RS resource.

In some embodiments, the second information may include starting point indication information of at least one candidate FD basis vector window.

For example, the network device indicates $N_3$ candidate FD basis vectors, and the terminal can select a FD basis vector of a window from the $N_3$ candidate FD basis vectors. At this time, the terminal needs to report the starting position of the window.

In some embodiments, the second information may include indication information of non-zero coefficients.

The indication information of non-zero coefficients indicates the indication information of the non-zero coefficients reported by the terminal.

In some embodiments, the second information may include differential amplitude quantization information and phase quantization information of non-zero coefficients.

In some embodiments, the second information may include reporting information of indication information of reference amplitudes.

In the embodiments of the present disclosure, when multiple CSI-RS resources correspond to the same CSI, by specifying the indication information in Part 2 of the CSI, the information length of Part 2 can be determined, thereby reducing the detection complexity of the network device.

In the method for reporting CSI provided in an embodiment of the present disclosure, the second information includes multiple information groups, and different information groups in the multiple information groups correspond to different priorities.

In one implementation, one or more information groups with lower priorities in the second information are discarded in response to uplink resources allocated by the network device being unable to transmit all information included in the first information and the second information.

For example, the second information includes three information groups: a first information group, a second information group and a third information group. The priorities of the three information groups are: priority of first information group > priority of second information group > priority of third information group. When the uplink resources allocated by the network device cannot transmit all information included in the first information and the second information, the third information group is preferentially discarded. If the uplink resources are still unable to transmit the information included in the first information and in the first information group and the second information group in the second information, the second information group is discarded, and so on.

In the embodiments of the present disclosure, when the uplink resources allocated by the network device cannot transmit all the contents of the CSI, some of the contents of the CSI are discarded while ensuring a certain system performance.

A method for grouping indication information in Part 2 of the CSI will be described below when the CSI is reported based on the enhanced Rel-16 Type II codebook.

Grouping method 1:

In the method for reporting CSI provided in an embodiment of the present disclosure, the second information at least includes a first information group, and the first information group includes at least one of: indication information of an SD basis vector, or indication information of the strongest coefficient at each layer.

In the method for reporting CSI provided in an embodiment of the present disclosure, the second information at least further includes a second information group, and the second information group includes at least one of: FD basis vector indication information of one or $N$ target CSI-RS resources; relative offset indication information of $N$-1 target CSI-RS resources relative to the reference CSI-RS resource; starting point indication information of at least one candidate FD basis vector window; position indication information of $v \cdot 2 \sum_{n=1}^{N} L_n \cdot M_v - \left\lfloor \dfrac{K^{NZ}}{2} \right\rfloor$ bits of non-zero coefficients of high-priority target CSI-RS resources; indication information of reference amplitudes of one or 2N-1 target CSI-RS resources; or differential amplitude quantization information and phase quantization information of $\max\left(0, \left\lceil \dfrac{K^{NZ}}{2} \right\rceil - v\right)$ high-priority non-zero coefficients, where $N$ represents the target CSI-RS resources, $L_n$ represents the number of SD basis vectors in a polarization direction corresponding to an $n^{th}$ target CSI-RS resource, $M_v$ represents the number of FD basis vectors, $K^{NZ}$ represents the number of non-zero coefficients of all layers reported by the terminal, $v$ represents a rank, and $n$ represents the $n^{th}$ target CSI-RS resource.

In the method for reporting CSI provided in an embodiment of the present disclosure, the second information at least further includes a third information group, and the third information group includes at least one of: indication information of $\left\lfloor \dfrac{K^{NZ}}{2} \right\rfloor$ bits of low-priority non-zero coefficients, or differential amplitude quantization information and phase quantization information of $\min\left(K^{NZ} - v, \left\lceil \dfrac{K^{NZ}}{2} \right\rceil\right)$ low-priority non-zero coefficients, where $N$ represents the target CSI-RS resources, $K^{NZ}$ represents the number of non-zero coefficients reported by the terminal, and $v$ represents the rank.

Grouping method 2:

In the method for reporting CSI provided in an embodiment of the present disclosure, the second information at least includes a first information group, and the first information group includes at least one of: indication information of an SD basis vector, or indication information of the strongest coefficient at each layer.

In the method for reporting CSI provided in an embodiment of the present disclosure, the second information at least further includes a second information group, and the second information group includes at least one of: FD basis vector indication information of $n_1$ target CSI-RS resources; relative offset indication information of $n_1$ -1 target CSI-RS resources relative to the reference CSI-RS resource; starting point indication information of at least one candidate FD basis vector window; position indication information of non-zero coefficients of first $l_1$ layers, or position indication information of non-zero coefficients of $n_1$ target CSI-RS resources; indication information of reference amplitudes of first $l_1$ layers, or indication information of reference amplitudes of $n_1$ target CSI-RS resources; or differential amplitude quantization information and phase quantization information of non-zero coefficients of first $l_1$ layers, or differential amplitude quantization information and phase quantization information of high-priority non-zero coefficients correspond-ing to $n_1$ target CSI-RS resources, where $n_1 = \left\lfloor \dfrac{N}{2} \right\rfloor$ or $\left\lceil \dfrac{N}{2} \right\rceil$, $N$ represents the target CSI-RS resources, $l_1 = \left\lfloor \dfrac{v}{2} \right\rfloor$ or $\left\lceil \dfrac{v}{2} \right\rceil$, $K^{NZ}$ represents the number of non-zero coefficients of all layers reported by the terminal, and $v$ represents a rank.

In the method for reporting CSI provided in an embodiment of the present disclosure, the second information at least further includes a third information group, and the third information group includes at least one of: indication information of non-zero coefficients of v - $l_1$ layers, or indication information of non-zero coefficients of $N$ - $n_1$ target CSI-RS resources; or differential amplitude quantization information and phase quantization information of non-zero coefficients of $v$ - $l_1$ layers, or differential amplitude quantization information and phase quantization information of non-zero coefficients corresponding to $N$ - $n_1$ target CSI-RS resources, where $n_1 = \left\lfloor \dfrac{N}{2} \right\rfloor$ or $\left\lceil \dfrac{N}{2} \right\rceil$, $N$ represents the target CSI-RS resources, $l_1 = \left\lfloor \dfrac{v}{2} \right\rfloor$ or $\left\lceil \dfrac{v}{2} \right\rceil$, and $\upsilon$ represents the rank.

In the embodiments of the present disclosure, two grouping methods are provided for the indication information in Part 2 of the CSI when the CSI is reported based on the enhanced Rel-16 Type II codebook. Certainly, the actual reporting of the CSI is not limited to the two grouping methods provided in the embodiments of the present disclosure, as long as it meets the actual needs. Therefore, the information length of Part 1 or Part 2 can be determined to reduce the detection complexity of the network device.

A method for grouping indication information in Part 2 of the CSI will be described below when the CSI is reported based on the enhanced Rel-17 Type II port selection codebook.

Grouping method 1:

In the method for reporting CSI provided in an embodiment of the present disclosure, the second information at least includes a fourth information group, and the fourth information group includes at least one of: port selection indication information, indication information of the strongest coefficient at each layer, or FD basis vector selection indication information.

In the method for reporting CSI provided in an embodiment of the present disclosure, the second information at least further includes a fifth information group, and the fifth information group includes at least one of: port selection indication information; relative offset indication information of $N$-1 target CSI-RS resources relative to the reference CSI-RS resource; position indication information of $2\sum_{n=1}^{N} L_n \cdot v \cdot M - \left\lfloor \dfrac{K^{NZ}}{2} \right\rfloor$ bits of high-priority non-zero coefficients; indication information of reference amplitudes of one or 2N-1 target CSI-RS resources; or differential amplitude quantization information and phase quantization information of $\max\left(0, \left\lceil \dfrac{K^{NZ}}{2} \right\rceil - \upsilon\right)$ high-priority non-zero coefficients, where $N$ represents the target CSI-RS resources, $L_n$ represents the number of CSI-RS ports in a polarization direction corresponding to an $n$th target CSI-RS resource, $M$ represents the number of FD basis vectors, $K^{NZ}$ represents the number of non-zero coefficients of all layers reported by the terminal, and $\upsilon$ represents a rank.

In the method for reporting CSI provided in an embodiment of the present disclosure, the second information at least further includes a sixth information group, and the sixth information group includes at least one of: position indication information of $\left\lfloor \dfrac{K^{NZ}}{2} \right\rfloor$ bits of low-priority non-zero coefficients, or differential amplitude quantization information and phase quantization information of $\min\left(K^{NZ} - v, \left\lceil \dfrac{K^{NZ}}{2} \right\rceil\right)$ low-priority non-zero coefficients, where $N$ represents the target CSI-RS resources, $K^{NZ}$ represents the number of non-zero coefficients of all layers reported by the terminal, and $\upsilon$ represents the rank.

Grouping method 2:

In the method for reporting CSI provided in an embodiment of the present disclosure, the second information at least includes a fourth information group, and the fourth information group includes at least one of: port selection indication information, indication information of the strongest coefficient at each layer, or FD basis vector selection indication information.

In the method for reporting CSI provided in an embodiment of the present disclosure, the second information at least further includes a fifth information group, and the fifth information group includes at least one of: port selection indication information; relative offset indication information of $n_1$ -1 target CSI-RS resources relative to the reference CSI-RS resource; position indication information of non-zero coefficients of first $l_1$ layers, or position indication information of non-zero coefficients of $n_1$ target CSI-RS resources; indication information of reference amplitudes of first $l_1$ layers, or indication information of reference amplitudes of $n_1$ target CSI-RS resources; differential amplitude quantization information and phase quantization information of non-zero coefficients of first $l_1$ layers, or differential amplitude quantization information and phase quantization information of non-zero coefficients corresponding to $n_1$ target CSI-RS resources, where $n_1 = \left\lfloor \dfrac{N}{2} \right\rfloor$ or $\left\lceil \dfrac{N}{2} \right\rceil$, $N$ represents the target CSI-RS resources, $l_1 = \left\lfloor \dfrac{v}{2} \right\rfloor$ or $\left\lceil \dfrac{v}{2} \right\rceil$, $K^{NZ}$ represents the number of non-zero coefficients of all layers reported by the terminal, and $v$ represents a rank.

In the method for reporting CSI provided in an embodiment of the present disclosure, the second information at least further includes a sixth information group, and the sixth information group includes at least one of: position indication information of non-zero coefficients of $v$-$l_1$ layers, or position indication information of non-zero coefficients of $N$-$n_1$ target CSI-RS resources; or differential amplitude quantization information and phase quantization information of non-zero coefficients of $v$-$l_1$ layers, or differential amplitude quantization information and phase quantization information of non-zero coefficients corresponding to $N$-$n_1$ target CSI-RS resources, where $n_1 = \left\lfloor \dfrac{N}{2} \right\rfloor$ or $\left\lceil \dfrac{N}{2} \right\rceil$, $N$ represents the target CSI-RS resources, $l_1 = \left\lfloor \dfrac{v}{2} \right\rfloor$ or $\left\lceil \dfrac{v}{2} \right\rceil$, $K^{NZ}$ represents the number of non-zero coefficients of all layers reported by the terminal, and $v$ represents the rank.

In the embodiments of the present disclosure, two grouping methods are provided for the indication information in Part 2 of the CSI when the CSI is reported based on the enhanced Rel-17 Type II port selection codebook. Certainly, the actual reporting of the CSI is not limited to the two grouping methods provided in the embodiments of the present disclosure, as long as it meets the actual needs. Therefore, the information length of Part 1 or Part 2 can be determined to reduce the detection complexity of the network device.

In the above embodiments, different groups in Part 2 of the CSI may involve high-priority and low-priority non-zero coefficients. A method for determining the priorities of the non-zero coefficients will be described below.

In the method for reporting CSI provided in an embodiment of the present disclosure, when the CSI is reported based on the enhanced Rel-16 Type II codebook, the priority of the non-zero coefficient is determined based on one of the following modes.

Mode 1: the non-zero coefficients at the same position of the same target CSI-RS resource in different layers are sorted according to a priority order of the target CSI-RS resources with a single target CSI-RS resource as a unit, where the smaller the number of layers, the greater the priority of the non-zero coefficient; the non-zero coefficients corresponding to all SD basis vectors of the same target CSI-RS resource in the same layer are sorted, where the smaller an index of an SD basis vector, the greater the priority of the non-zero coefficient; and the non-zero coefficients corresponding to all FD basis vectors in the same layer are sorted in an interleaved way based on a preset algorithm, where the smaller a value of the preset algorithm, the greater the priority of the non-zero coefficient.

In one implementation, the preset algorithm is: $\pi(f) = \min\left(2 \cdot n_{3,l}^{(f)}, 2 \cdot \left(N_3 - n_{3,l}^{(f)}\right) - 1\right)$, where $n_{3,l}^{(f)}$ represents an index mapped from the index $f$ of the FD basis vector to $N_3$, $N_3$ represents the number of candidate FD basis vectors, and $l$ represents the number of layers.

In mode 1, according to the priority order of the target CSI-RS resources, the target CSI-RS resource with the highest priority among the target CSI-RS resources is preferentially sorted with a single target CSI-RS resource as a unit. First, the non-zero coefficients with the smallest SD basis vector index in the first FD basis vector in the first layer are sorted, and then the non-zero coefficients with the smallest SD basis vector index in the first FD basis vector in the second layer are sorted, and so on. After the non-zero coefficients with the smallest SD basis vector index in the first FD basis vector in all layers are sorted, the non-zero coefficients with the subminimum SD basis vector index in the first FD basis vector in the first layer are sorted, and then the non-zero coefficients with the subminimum SD basis vector in the second layer are sorted, and so on, until the non-zero coefficients corresponding to all the SD basis vectors in the target CSI-RS resource with the highest priority are sorted. Then, the non-zero coefficients of all FD basis vectors in the target CSI-RS resource with the highest priority are sorted in an interleaved way based on a preset algorithm. The smaller the value of the preset algorithm, the greater the priority of the non-zero coefficient corresponding to the FD basis vector. After all non-zero coefficients in the target CSI-RS resource with the highest priority are sorted, all non-zero coefficients in the target CSI-RS resource with the second highest priority are sorted. The method for sorting all non-zero coefficients in the target CSI-RS resource with the second highest priority is the same as the method for sorting all non-zero coefficients in the target CSI-RS resource with the highest priority, and so on, until all non-zero coefficients corresponding to all target CSI-RS resources are sorted.

In some embodiments, the priority of the non-zero coefficient is determined based on a following formula:

$$\mathrm{Pri}\left(l, i_n, f, n\right) = 2 \cdot \sum_{j=1}^{n-1} L_j \cdot v \cdot M_v + 2 \cdot L_n \cdot v \cdot \pi\left(f\right) + v \cdot i_n + l \qquad (3)$$

where $l$ represents the number of layers, $i_n$ represents an index of an SD basis vector of the $n^{th}$ target CSI-RS resource, $f$ represents the index of the FD basis vector, $n$ represents the $n^{th}$ target CSI-RS resource, $L_j$ represents the number of SD basis vectors in a polarization direction corresponding to a $j^{th}$ CSI-RS resource, $v$ represents the rank, $M_v$ represents the number of FD basis vectors, $L_n$ represents the number of SD basis vectors in a polarization direction corresponding to the $n^{th}$ target CSI-RS resource,

$\pi\left(f\right) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the FD basis vector to $N_3$, and $N_3$ represents the number of candidate FD basis vectors.

It should be understood that the smaller the value of Pri($l,i_n,f,n$), the greater the priority of the corresponding coefficient.

Mode 2: the non-zero coefficients at the same position of the same target CSI-RS resource in different layers are sorted according to a priority order of the target CSI-RS resources, where the smaller the number of layers, the greater the priority of the non-zero coefficient; the non-zero coefficients corresponding to all SD basis vectors of all target CSI-RS resources in the same layer are sorted, where the smaller an index of an SD basis vector, the greater the priority of the non-zero coefficient; and the non-zero coefficients corresponding to different FD basis vectors in the same layer are sorted in an interleaved way based on a preset algorithm, where the smaller a value of the preset algorithm, the greater the priority of the non-zero coefficient.

In one implementation, the preset algorithm is: $\pi\left(f\right) = \min\left(2 \cdot n_{3,l}^{(f)}, 2 \cdot \left(N_3 - n_{3,l}^{(f)}\right) - 1\right)$, where $n_{3,l}^{(f)}$ represents an index mapped from the index $f$ of the FD basis vector to $N_3$, $N_3$ represents the number of candidate FD basis vectors, and $l$ represents the number of layers.

In mode 2, according to the priority order of the target CSI-RS resources, the sorting is performed starting from the non-zero coefficients with the smallest SD basis vector index in the first FD basis vector in the target CSI-RS resource with the highest priority, and then the non-zero coefficients with the smallest SD basis vector index in the first FD basis vector in the second layer are sorted, and so on. After the non-zero coefficients with the smallest SD basis vector index in the first FD basis vector in all layers are sorted, the non-zero coefficients with the subminimum SD basis vector index in the first FD basis vector in the first layer are sorted, and then the non-zero coefficients with the subminimum SD basis vector index in the first FD basis vector in the second layer are sorted, and so on, until the non-zero coefficients of all the SD basis vectors in the first FD basis vector in all the target CSI-RS resources are sorted. Then, the non-zero coefficients of all FD basis vectors in the second FD basis vector in all the target CSI-RS resources are sorted in the same manner. After the non-zero coefficients of all SD basis vectors in all the target CSI-RS resources are sorted, the non-zero coefficients of all FD basis vectors in the target CSI-RS resources are sorted in an interleaved way based on a preset algorithm. The smaller a value of the preset algorithm, the greater the priority of the non-zero coefficient corresponding to the FD basis vector.

In some embodiments, the priority of the non-zero coefficient is determined based on a following formula:

$$\mathrm{Pri}\left(l, i, f\right) = 2 \cdot L_{tot} \cdot v \cdot \pi\left(f\right) + v \cdot i + l \qquad (4)$$

where $l$ represents the number of layers, $i = 0,1,...,2L_{tot}-1$, $L_{tot} = \sum_{n=1}^{N} L_n$ represents a total number of SD basis vectors in a polarization direction corresponding to $N$ CSI-RS resources, $n$ represents the $n^{th}$ target CSI-RS resource, $f$ represents the index of the FD basis vector, $v$ represents the rank, $\pi\left(f\right) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the FD basis vector to $N_3$, and $N_3$ represents the number of candidate FD basis vectors.

It should be understood that the smaller the value of Pri($l,i,f$), the greater the priority of the corresponding coefficient.

Mode 3: the non-zero coefficients of all SD basis vectors in a single target CSI-RS resource are sorted according to a priority order of the target CSI-RS resources with the single target CSI-RS resource as a unit, where the smaller an index of an SD basis vector, the greater a priority of a corresponding non-zero coefficient; the non-zero coefficients corresponding to all FD basis vectors in the single target CSI-RS resource are sorted based on a preset algorithm, where the smaller a value of the preset algorithm, the greater the priority of the non-zero coefficient; and the non-zero coefficients of all layers in the same target CSI-RS resource are sorted, where the smaller the number of layers, the greater the priority of the non-zero coefficient.

In one implementation, the preset algorithm is: $\pi\left(f\right) = \min\left(2 \cdot n_{3,l}^{(f)}, 2 \cdot \left(N_3 - n_{3,l}^{(f)}\right) - 1\right)$, where $n_{3,l}^{(f)}$ represents an index mapped from the index $f$ of the FD basis vector to $N_3$, $N_3$ represents the number of candidate FD basis vectors, and $l$ represents the number of layers.

In mode 3, according to the priority order of the target CSI-RS resources, the target CSI-RS resource with the highest priority among the target CSI-RS resources is preferentially sorted with a single target CSI-RS resource as a unit. First, the non-zero coefficients with the smallest SD basis vector index in the first FD basis vector in the first layer are sorted, and then the non-zero coefficients with the subminimum SD basis vector index in the first FD basis vector in the first layer are sorted. After the non-zero coefficients of all SD basis vectors in all FD basis vectors in the first layer are sorted, the non-zero coefficients of all SD basis vectors in all FD basis vectors in the second layer are sorted. After the non-zero coefficients of all SD basis vectors in all FD basis vectors in all layers corresponding to the target CSI-RS resource with the highest priority are sorted, the non-zero coefficients of all FD basis vectors in all layers corresponding to the target CSI-RS resource with the highest priority are sorted in an interleaved way based on a preset algorithm. The smaller the value of the preset algorithm, the greater the priority of the non-zero coefficient corresponding to the FD basis vector. After all non-zero coefficients in the target CSI-RS resource with the highest priority are sorted, all non-zero coefficients in the target CSI-RS resource with the second highest priority are sorted. The method for sorting all non-zero coefficients in the target CSI-RS resource with the second highest priority is the same as the method for sorting all non-zero coefficients in the target CSI-RS resource with the highest priority, and so on, until all non-zero coefficients corresponding to all target CSI-RS resources are sorted.

In some embodiments, the priority of the non-zero coefficient is determined based on a following formula:

$$\mathrm{Pri}\left(l, i_n, f, n\right) = 2 \cdot L_{tot} \cdot M_v \cdot l + 2 \cdot \sum_{j=1}^{n-1} L_j \cdot M_v + 2 \cdot L_n \cdot \pi\left(f\right) + i_n \tag{5}$$

where $l$ represents the number of layers, $i_n$ represents an index of an SD basis vector of the $n^{th}$ target CSI-RS resource, $f$ represents the index of the FD basis vector, $L_{tot} = \sum_{n=1}^{N} L_n$ represents a total number of SD basis vectors in a polarization direction corresponding to $N$ CSI-RS resources, $n$ represents the $n^{th}$ target CSI-RS resource, $L_j$ represents the number of SD basis vectors in a polarization direction corresponding to a $j^{th}$ CSI-RS resource, $v$ represents the rank, $M_v$ represents the number of FD basis vectors, $L_n$ represents the number of SD basis vectors in a polarization direction corresponding to the $n^{th}$ target CSI-RS resource, $\pi\left(f\right) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the FD basis vector to $N_3$, and $N_3$ represents the number of candidate FD basis vectors.

It should be understood that the smaller the value of Pri($l, i_n, f, n$), the greater the priority of the corresponding coefficient.

Mode 4: the non-zero coefficients corresponding to all SD basis vectors in all target CSI-RS resources in the same layer are sorted according to the priority order of the target CSI-RS resources, where the smaller an index of an SD basis vector, the greater a priority of a corresponding non-zero coefficient; the non-zero coefficients corresponding to all SD basis vectors in all target CSI-RS resources in different layers are sorted in an interleaved way, where the smaller the number of layers, the greater the priority of a corresponding non-zero coefficient; and the non-zero coefficients corresponding to all FD basis vectors in all target CSI-RS resources in different layers are sorted in an interleaved way based on a preset algorithm, where the smaller a value of the preset algorithm, the greater the priority of the non-zero coefficient.

In one implementation, the preset algorithm is: $\pi\left(f\right) = \min\left(2 \cdot n_{3,l}^{(f)}, 2 \cdot \left(N_3 - n_{3,l}^{(f)}\right) - 1\right)$, where $n_{3,l}^{(f)}$ represents an index mapped from the index $f$ of the FD basis vector to $N_3$, $N_3$ represents the number of candidate FD basis vectors, and $l$ represents the number of layers.

In mode 4, according to the priority order of the target CSI-RS resources, the sorting is performed starting from the non-zero coefficients with the smallest SD basis vector index in the first FD basis vector in the target CSI-RS resource with the highest priority. First, the non-zero coefficients with the smallest SD basis vector index in the first FD basis vector in the first layer are sorted, and then the non-zero coefficients with the subminimum SD basis vector index in the first FD basis vector in the first layer are sorted. After the non-zero coefficients of all SD basis vectors in all FD basis vectors in all target CSI-RS resources in the first layer are sorted, the non-zero coefficients of all SD basis vectors in all FD basis vectors in all target CSI-RS resources in the second layer are sorted. After the non-zero coefficients of all SD basis vectors in all FD basis vectors in all target CSI-RS resources in all layers are sorted, the non-zero coefficients of all FD basis vectors in all target CSI-RS resources are sorted in an interleaved way based on a preset algorithm. The smaller the value of the preset algorithm, the greater the priority of the non-zero coefficient corresponding to the FD basis vector.

In some embodiments, the priority of the non-zero coefficient is determined based on a following formula:

$$\mathrm{Pri}(l,i,f) = 2 \cdot L_{tot} \cdot v \cdot \pi(f) + L_{tot} \cdot l + i \qquad (6)$$

where $l$ represents the number of layers, $i = 0,1,...,2L_{tot}$-1, $L_{tot} = \sum_{n=1}^{N} L_n$ represents a total number of SD basis vectors in a polarization direction corresponding to $N$ CSI-RS resources, $n$ represents the $n^{th}$ target CSI-RS resource, $f$ represents the index of the FD basis vector, $v$ represents the rank, $\pi(f) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the FD basis vector to $N_3$, and $N_3$ represents the number of candidate FD basis vectors.

It should be understood that the smaller the value of Pri($l,i,f$), the greater the priority of the corresponding coefficient.

In the embodiments of the present disclosure, by sorting the priorities of the non-zero coefficients, when the uplink resources allocated by the network device cannot transmit all the contents of the CSI, some of the contents of the CSI are discarded while ensuring a certain system performance.

In the method for reporting CSI provided in an embodiment of the present disclosure, when the CSI is reported based on the enhanced Rel-17 type II port selection codebook, the priority of the non-zero coefficient is determined based on one of the following modes.

Mode 1: the non-zero coefficients at the same position of the same target CSI-RS resource in different layers are sorted according to a priority order of the target CSI-RS resources with a single target CSI-RS resource as a unit, where the smaller the number of layers, the greater the priority of the non-zero coefficient; the non-zero coefficients corresponding to indexes of all CSI-RS ports of the same target CSI-RS resource in the same layer are sorted, where the smaller an index of a CSI-RS port, the greater the priority of the non-zero coefficient; and the non-zero coefficients corresponding to all FD basis vectors in the same layer are sorted, where the smaller an index of a FD basis vector, the greater the priority of the non-zero coefficient.

In mode 1, according to the priority order of the target CSI-RS resources, the target CSI-RS resource with the highest priority among the target CSI-RS resources is preferentially sorted with a single target CSI-RS resource as a unit. First, the non-zero coefficients with the smallest CSI-RS port index in the first FD basis vector in the first layer are sorted, and then the non-zero coefficients with the smallest CSI-RS port index in the first FD basis vector in the second layer are sorted, and so on. After the non-zero coefficients with the smallest CSI-RS port index in the first FD basis vector in all layers are sorted, the non-zero coefficients with the subminimum CSI-RS port index in the first FD basis vector in the first layer are sorted, and then the non-zero coefficients with the subminimum CSI-RS port index in the first FD basis vector in the second layer are sorted, and so on, until the non-zero coefficients corresponding to all the CSI-RS ports in the target CSI-RS resource with the highest priority are sorted. Then, the non-zero coefficients of all FD basis vectors in the target CSI-RS resource with the highest priority are sorted in an interleaved way. The smaller the index of the FD basis vector, the greater the priority of the non-zero coefficient corresponding to the FD basis vector. After all non-zero coefficients in the target CSI-RS resource with the highest priority are sorted, all non-zero coefficients in the target CSI-RS resource with the second highest priority are sorted. The method for sorting all non-zero coefficients in the target CSI-RS resource with the second highest priority is the same as the method for sorting all non-zero coefficients in the target CSI-RS resource with the highest priority, and so on, until all non-zero coefficients corresponding to all target CSI-RS resources are sorted.

In some embodiments, the priority of the non-zero coefficient is determined based on a following formula:

$$\mathrm{Pri}\left(l,i_n,f,n\right) = v \cdot \sum_{j=1}^{n-1} K_{1,n} \cdot M + K_{1,n} \cdot v \cdot f + v \cdot i_n + l \qquad (7)$$

where $l$ represents the number of layers, $i_n$ represents an index of a CSI-RS port of the $n^{th}$ target CSI-RS resource, $f$ represents the index of the FD basis vector, $n$ represents the $n^{th}$ target CSI-RS resource, $v$ represents the rank, $M$ represents the number of FD basis vectors, and $K_{1,n}$ represents the number of CSI-RS ports selected by the terminal corresponding to the $n^{th}$ target CSI-RS resource.

Mode 2: the non-zero coefficients at the same position of the same target CSI-RS resource in different layers are sorted according to a priority order of the target CSI-RS resources, where the smaller the number of layers, the greater the priority of the non-zero coefficient; the non-zero coefficients corresponding to indexes of all CSI-RS ports of all target CSI-RS resources in the same layer are sorted, where the smaller an index of a CSI-RS port, the greater the priority of the non-zero coefficient; and the non-zero coefficients corresponding to different FD basis vectors in the same layer are sorted, where the smaller an index of a FD basis vector, the greater the priority of the non-zero coefficient.

In mode 2, according to the priority order of the target CSI-RS resources, the sorting is performed starting from the non-zero coefficients with the smallest CSI-RS port index in the first FD basis vector in the target CSI-RS resource with the highest priority, and then the non-zero coefficients with the smallest CSI-RS port index in the first FD basis vector in the second layer are sorted, and so on. After the non-zero coefficients with the smallest CSI-RS port index in the first FD basis vector in all layers are sorted, the non-zero coefficients with the subminimum CSI-RS port index in the first FD basis vector in the first layer are sorted, and then the non-zero coefficients with the subminimum CSI-RS port index in the first FD basis vector in the second layer are sorted, and so on, until the non-zero coefficients of all the CSI-RS ports in the first FD basis vector in all the target CSI-RS resources are sorted. Then, the non-zero coefficients of all CSI-RS ports in the second FD basis vector in all the target CSI-RS resources are sorted in the same manner. After the non-zero coefficients of all CSI-RS ports in all the target CSI-RS resources are sorted, the non-zero coefficients of all FD basis vectors in the target CSI-RS resources are sorted in an interleaved way. The smaller the index of the FD basis vector, the greater the priority of the non-zero coefficient.

In some embodiments, the priority of the non-zero coefficient is determined based on a following formula:

$$\mathrm{Pri}\left(l,i,f\right) = K_{1,tot} \cdot v \cdot f + v \cdot i + l \qquad (8)$$

where $l$ represents the number of layers, $i = 0,1,...,2K_{1,tot}-1$, $K_{1,tot} = \sum_{n=1}^{N} K_{1,n}$ represents a total number of CSI-RS ports selected by the terminal corresponding to $N$ CSI-RS resources, $n$ represents the $n^{th}$ target CSI-RS resource, $f$ represents the index of the FD basis vector, $v$ represents the rank, $K_{1,tot}$ represents the total number of CSI-RS ports selected by the terminal corresponding to the $N$ CSI-RS resources, and $K_{1,n}$ represents the number of CSI-RS ports selected by the terminal corresponding to the $n^{th}$ target CSI-RS resource.

Mode 3: the non-zero coefficients of all CSI-RS ports in a single target CSI-RS resource are sorted according to a priority order of the target CSI-RS resources with the single target CSI-RS resource as a unit, where the smaller an index of a CSI-RS port, the greater a priority of a corresponding non-zero coefficient; the non-zero coefficients of all FD basis vectors in the single target CSI-RS resource are sorted, where the smaller an index of a FD basis vector, the greater the priority of the non-zero coefficient; and the non-zero coefficients of all layers in the single target CSI-RS resource are sorted, where the smaller the number of layers, the greater the priority of the non-zero coefficient.

In mode 3, according to the priority order of the target CSI-RS resources, the target CSI-RS resource with the highest priority among the target CSI-RS resources is preferentially sorted with a single target CSI-RS resource as a unit. First, the non-zero coefficients with the smallest CSI-RS port index in the first FD basis vector in the first layer are sorted, and then the non-zero coefficients with the subminimum CSI-RS port index in the first FD basis vector in the first layer are sorted. After the non-zero coefficients of all CSI-RS ports in all FD basis vectors in the first layer are sorted, the non-zero coefficients of all CSI-RS ports in all FD basis vectors in the second layer are sorted. After the non-zero coefficients of all CSI-RS ports in all FD basis vectors in all layers corresponding to the target CSI-RS resource with the highest priority are sorted, the non-zero coefficients of all FD basis vectors in all layers corresponding to the target CSI-RS resource with the highest priority are sorted. The smaller the index of the FD basis vector, the greater the priority of the non-zero coefficient. After all non-zero coefficients in the target CSI-RS resource with the highest priority are sorted, all non-zero coefficients in the target CSI-RS resource with the second highest priority are sorted. The method for sorting all non-zero coefficients in the target CSI-RS resource with the second highest priority is the same as the method for sorting all non-zero coefficients in the target CSI-RS resource with the highest priority, and so on, until all non-zero coefficients corresponding to all target CSI-RS resources are sorted.

In some embodiments, the priority of the non-zero coefficient is determined based on a following formula:

$$\mathrm{Pri}\left(l, i_n, f, n\right) = l \cdot K_{1,tot} \cdot M + \sum_{j=1}^{n-1} K_{1,j} \cdot M + K_{1,n} \cdot f + i_n \qquad (9)$$

where $l$ represents the number of layers, $i_n$ represents an index of a CSI-RS port of the $n^{th}$ target CSI-RS resource, $f$ represents the index of the FD basis vector, $n$ represents the $n^{th}$ target CSI-RS resource, $v$ represents the rank, $K_{1,tot}$ represents a total number of CSI-RS ports selected by the terminal corresponding to $N$ CSI-RS resources, $M$ represents the number of FD basis vectors, $K_{1,j}$ represents the number of CSI-RS ports selected by the terminal corresponding to a $j^{th}$ CSI-RS resource, and $K_{1,n}$ represents the number of CSI-RS ports selected by the terminal corresponding to the $n^{th}$ target CSI-RS resource.

Mode 4: the non-zero coefficients corresponding to all CSI-RS ports in all target CSI-RS resources in the same layer are sorted according to a priority order of the target CSI-RS resources, where the smaller an index of a CSI-RS port, the greater a priority of a corresponding non-zero coefficient; the non-zero coefficients corresponding to all CSI-RS ports in all target CSI-RS resources in different layers are sorted, where the smaller the number of layers, the greater a priority of a corresponding non-zero coefficient; and the non-zero coefficients corresponding to all FD basis vectors in all target CSI-RS resources in different layers are sorted, where the smaller an index of a FD basis vector, the greater the priority of the non-zero coefficient.

In mode 4, according to the priority order of the target CSI-RS resources, the sorting is performed starting from the non-zero coefficients with the smallest CSI-RS port index in the first FD basis vector in the target CSI-RS resource with the highest priority. First, the non-zero coefficients with the smallest CSI-RS port index in the first FD basis vector in the first layer are sorted, and then the non-zero coefficients with the subminimum CSI-RS port index in the first FD basis vector in the first layer are sorted. After the non-zero coefficients of all CSI-RS ports in all FD basis vectors in all target CSI-RS resources in the first layer are sorted, the non-zero coefficients of all CSI-RS ports in all FD basis vectors in all target CSI-RS resources in the second layer are sorted. After the non-zero coefficients of all CSI-RS ports in all FD basis vectors in all target CSI-RS resources in all layers are sorted, the non-zero coefficients of all FD basis vectors in all target CSI-RS resources are sorted. The smaller the index of the FD basis vector, the greater the priority of the non-zero coefficient.

In some embodiments, the priority of the non-zero coefficient is determined based on a following formula:

$$\mathrm{Pri}\left(l, i, f\right) = K_{1,tot} \cdot v \cdot f + K_{1,tot} \cdot l + i \qquad (10)$$

where $l$ represents the number of layers, $i = 0, 1, \ldots, 2K_{1,tot}-1$, $K_{1,tot} = \sum_{n=1}^{N} K_{1,n}$ represents a total number of CSI-RS ports selected by the terminal corresponding to $N$ CSI-RS resources, $n$ represents the $n^{th}$ target CSI-RS resource, $f$ represents the index of the FD basis vector, $v$ represents the rank, $K_{1,tot}$ represents the total number of CSI-RS ports selected by the terminal corresponding to the $N$ CSI-RS resources, and $K_{1,n}$ represents the number of CSI-RS ports selected by the terminal corresponding to the $n^{th}$ target CSI-RS resource.

In the embodiments of the present disclosure, by sorting the priorities of the non-zero coefficients, when the uplink resources allocated by the network device cannot transmit all the contents of the CSI, some of the contents of the CSI are discarded while ensuring a certain system performance.

In the method for reporting CSI provided in an embodiment of the present disclosure, the $N$ target CSI-RS resources correspond to $N$ CSIs. That is, indication information of the $N$ target CSI-RS resources is carried in different CSIs, and each target CSI-RS resource corresponds to one CSI.

In the method for reporting CSI provided in an embodiment of the present disclosure, sending CSI corresponding to the $N$ target CSI-RS resources to the network device includes: sending $N$ CSIs corresponding to the $N$ target CSI-RS resources to the network device based on a priority order of the $N$ target CSI-RS resources.

For example, $N$ is 3. If the priority of the first target CSI-RS resource > the priority of the third target CSI-RS resource > the priority of the second target CSI-RS resource, the CSI corresponding to the first target CSI-RS resource is first sent to the network device, followed by the CSI corresponding to the third target CSI-RS resource, and finally the CSI corresponding to the second target CSI-RS resource is sent to the network device.

In the embodiments of the present disclosure, by specifying the priorities of the $N$ target CSI-RS resources, when the terminal sends CSI to the network device, it can sequentially send the CSI corresponding to the $N$ target CSI-RS resources, thereby realizing the reporting of the CSI corresponding to multiple CSI-RS resources.

In the method for reporting CSI provided in an embodiment of the present disclosure, regarding the indication information included in the CSI corresponding to each target CSI-RS resource and the grouping of the indication information in Part 2 of the CSI, reference can be made to the indication information shown in Table 1 above.

In the method for reporting CSI provided in an embodiment of the present disclosure, the priority of the non-zero coefficient is determined based on formula (1) or formula (2), which will not be described in detail in this embodiment of the present disclosure.

In the method for reporting CSI provided in an embodiment of the present disclosure, the priority of a target CSI-RS resource is determined based on an index of the target CSI-RS resource.

In one implementation, the priority of the target CSI-RS resource is determined based on the following formula:

$$\mathrm{Pri}_{\mathrm{iCSI}}\left(y,k,c,s\right) = 2\cdot N_{cells}\cdot M_s\cdot y + N_{cells}\cdot M_s\cdot k + M_s\cdot c + s + z \tag{11}$$

where y represents the index value y=0,1,2,3 corresponding to different time domain behaviors or the reporting of CSI carried on a physical uplink shared channel (PUSCH) and a physical uplink control channel (PUCCH), k represents the index value k=0,1 corresponding to whether the CSI including L1-reference signal received power (RSRP) or L1-signal-to-interference-plus-noise ratio (SINR) is reported, c represents an index of a service cell, s represents a CSI reporting configuration identifier (ID) configured by the network device, $N_{cells}$ represents the maximum number of service cells configured by the network device, $M_s$ represents the maximum number of CSI reports configured by the network device, and $z$ represents the index of the target CSI-RS resource.

In the method for reporting CSI provided in an embodiment of the present disclosure, the reference CSI-RS resource has a highest priority among the N target CSI-RS resources, and the priorities of remaining N-1 target CSI-RS resources are determined based on indexes of the N-1 target CSI-RS resources.

In one implementation, the priority of the target CSI-RS resource is determined based on the following formula:

$$\mathrm{Pri}_{\mathrm{iCSI}}\left(y,k,c,s\right) = 2\cdot N_{cells}\cdot M_s\cdot y + N_{cells}\cdot M_s\cdot k + M_s\cdot c + s + z \tag{12}$$

where y represents the index value y=0,1,2,3 corresponding to different time domain behaviors or the reporting of CSI carried on a PUSCH and a PUCCH, k represents the index value k=0,1 corresponding to whether the CSI including L1-RSRP or L1-SINR is reported, c represents an index of a service cell, s represents a CSI reporting configuration ID configured by the network device, $N_{cells}$ represents the maximum number of service cells configured by the network device, and $M_s$ represents the maximum number of CSI reports configured by the network device.

It is worth noting that when the target CSI-RS resource is the reference CSI-RS resource, $z$ is 0; and when the target CSI-RS resource is not the reference CSI-RS resource, $z$ is the index of the target CSI-RS resource.

In the embodiments of the present disclosure, by defining the priorities of different target CSI-RS resources, the CSI corresponding to the target CSI-RS resources can be reported according to the priority order, and the indication information included in the information groups in Part 2 of the CSI can also be determined according to the priority order.

The scheme in which NCSI-RS resources correspond to one CSI is described in detail below in conjunction with the following two embodiments.

1. Method for reporting CSI based on enhanced Rel-16 Type II codebook

In response to the network device configuring $N_{trp}$ = 4 CSI-RS resources for a CJT for the terminal, the number of candidate FD basis vectors $N_3$ = 13, the network device instructs the terminal by a configuration to adopt Mode 2 to calculate the precoding when multiple CSI-RS resources correspond to the CJT, and the number of FD basis vectors $M_v$ = 4. The terminal determines to select N = 2 target CSI-RS resources for the CJT according to the estimated downlink channel information. Assume that the total number of combinations of SD basis vectors corresponding to 1 to 4 CSI-RS resources is $X_1$ = 3, $X_2$ = 6, $X_3$ = 8, $X_4$ = 6, the total number of combinations is X = 4. The terminal selects one of the combinations. The first target CSI-RS resource of the combination corresponds to $L_1$ = 2 SD basis vectors, and the second target CSI-RS resource selects $L_2$ = 4 SD basis vectors. The terminal determines the transmission rank v = 2 based on the channel information estimated by the selected target CSI-RS, the maximum number of transmission layers supported by the terminal $v_{max}$ = 4, the maximum number of non-zero coefficients at each layer $K_0$ = 16, and the terminal selects $K^{NZ}$ = 32 non-zero coefficients for reporting. The SD oversampling factor $O_1$ = $O_2$ = 4, and the number of ports for each target CSI-RS resource $2N_1N_2$ = 8.

In one implementation, when the terminal sends CSI corresponding to two target CSI-RS resources to the network device, Part 1 of the CSI includes the following indication information: $\lceil \log_2 v \rceil = 2bits$ indicating the rank selected by the terminal, 4 bits indicating wideband CQI information, 2 bits indicating sub-band differential CQI information, $\lceil \log_2 2K_0 \rceil = 5bits$ indicating the number of non-zero coefficients of all layers, $\lceil \log_2^{\max(X_{N_{TRP}})} \rceil = 3bits$ indicating the number of FD basis vectors in each polarization direction corresponding to each target CSI-RS resource selected by the terminal, and a bitmap of size $N_{trp}$ = 4 bits indicating indication information of the target CSI-RS resource selected by the terminal.

Indication information included in each information group in Part 2 of the CSI includes as follows:

The first information group (G0): $\lceil \log_2(O_1O_2) \rceil + \lceil \log_2 \binom{N_1N_2}{L_1} \rceil = 7\text{bits}$ indicating the FD basis vector corresponding to the first target CSI-RS resource selected by the terminal, $\lceil \log_2(O_1O_2) \rceil + \lceil \log_2 \binom{N_1N_2}{L_1} \rceil = 4bits$ indicating the FD basis vector corresponding to the second target CSI-RS resource selected by the terminal, and $\lceil \log_2(2(L_1 + L_2)) \rceil = 4bits$ indicating the strongest coefficient at each layer.

The second information group (G1): $\lceil \log_2 \binom{N_3 - 1}{M_1 - 1} \rceil = 8bits$ indicating the FD basis vectors corresponding to the $N$ target CSI-RS resources selected by the terminal, $v \cdot 2 \sum_{n=1}^{N} L_n \cdot M_v - \lfloor \frac{K^{NZ}}{2} \rfloor = 80bits$ indicating the position of the non-zero coefficient, 4 bits indicating the quantization information of a reference amplitude, and differential amplitude quantization information and phase quantization information of $\lceil \frac{K^{NZ}}{2} \rceil - v = 14$ high-priority non-zero coefficients, where each differential amplitude is quantized by 3 bits, and each phase is quantized by 4 bits.

The third information group (G2): $\lfloor \frac{K^{NZ}}{2} \rfloor = 16bits$ indicating the position of the non-zero coefficient, and differential amplitude quantization information and phase quantization information of $\lfloor \frac{K^{NZ}}{2} \rfloor = 16$ low-priority non-zero coefficients, where each differential amplitude is quantized by 3 bits, and each phase is quantized by 4 bits.

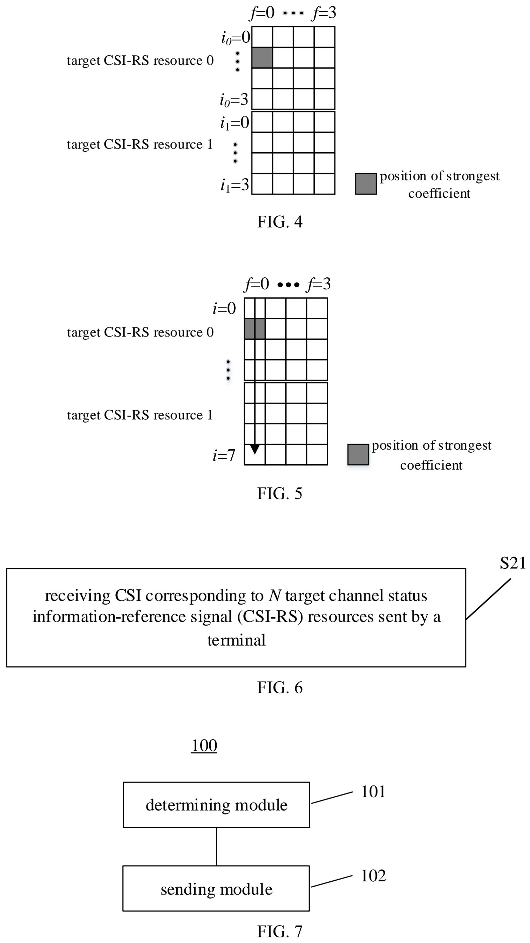

The first coefficient priority sorting method is taken as an example below to sort the priorities of the coefficients of two target CSI-RS resources. Since the index of CSI-RS resource 0 is smaller than the index of CSI-RS resource 1, the priority of CSI-RS resource 0 is greater than the priority of CSI-RS resource 1. Therefore, the non-zero coefficients in CSI-RS resource 0 are preferentially sorted. As shown in FIG. 4, the non-zero coefficients of the SD basis vectors in the upper left corner of the first layer of CSI-RS resource 0 are sorted first, and then the non-zero coefficients of the SD basis vectors in the upper left corner of the second layer of CSI-RS resource 0 are sorted; then the non-zero coefficients of the second SD basis vector in the first column of the first layer of CSI-RS resource 0 are sorted, and then the non-zero coefficients of the second SD basis vector in the first column of the second layer of CSI-RS resource 0 are sorted. In this order, after the non-zero coefficients of all the SD basis vectors of CSI-RS resource 0 are sorted, the non-zero coefficients of the FD basis vectors of CSI-RS resource 0 are sorted in an interleaved way using a preset algorithm, where the smaller the value of the preset algorithm, the greater the corresponding priority. After all coefficients of CSI-RS resource 0 are finally sorted, all coefficients of CSI-RS resource 1 are sorted. The process of sorting the priorities of the coefficients of CSI-RS resource 1 is the same as that of CSI-RS resource 0. It should be understood that the corresponding non-zero coefficient of CSI-RS resource 0 is higher than the non-zero coefficient of CSI-RS resource 1.

The second coefficient priority sorting method is taken as an example below to sort the priorities of the coefficients of two target CSI-RS resources. Since the index of CSI-RS resource 0 is smaller than the index of CSI-RS resource 1, the priority of CSI-RS resource 0 is greater than the priority of CSI-RS resource 1. Therefore, the sorting starts with the first SD basis vector of CSI-RS resource 0. As shown in FIG. 5, the non-zero coefficients of the SD basis vectors in the upper left corner of the first layer in CSI-RS resource 0 are first sorted, and then the non-zero coefficients of the SD basis vectors in the upper left corner of the second layer of CSI-RS resource 0 are sorted; then the non-zero coefficients of the second SD basis vector in the first column of the first layer of CSI-RS resource 0 are sorted, and then the non-zero coefficients of the second SD basis vector in the first column of the second layer of CSI-RS resource 0 are sorted. According to the order of the black arrow in FIG. 5, after the non-zero coefficients of all SD basis vectors in the first column of CSI-RS resource 0 and the first column of CSI-RS resource 1 are sorted, the non-zero coefficients corresponding to all SD basis vectors in the second column of CSI-RS resource 0 and the second column of CSI-RS resource 1 are sorted, until the non-zero coefficients of all SD basis vectors of CSI-RS resource 0 and CSI-RS resource 1 are sorted. Finally, the non-zero coefficients of the FD basis vectors of CSI-RS resource 0 and CSI-RS resource 1 are sorted in an interleaved way using a preset algorithm, where the smaller the value of the preset algorithm, the greater the corresponding priority.

2. Method for reporting CSI based on enhanced Rel-17 Type II port selection codebook

In response to the network device configuring $N_{\text{trp}} = 4$ CSI-RS resources for the terminal, the number of candidate FD basis vectors $N_3 = 13$, the network device instructs the terminal by a configuration to adopt Mode 2 to calculate the precoding when multiple CSI-RS resources correspond to the CJT, and the number of FD basis vectors $M = 1$. The terminal determines to select $N = 2$ target CSI-RS resources for the CJT according to the estimated downlink channel information. Assume that the total number of combinations of CSI-RS ports selected by the terminal corresponding to 1 to 4 CSI-RS resources is $X_1 = 3$, $X_2 = 6$, $X_3 = 8$, $X_4 = 6$, the total number of combinations is $X = 4$. The terminal selects one of the combinations. The CSI-RS ports corresponding to the first target CSI-RS resource and the second target CSI-RS resource of the combination are all selected. The terminal determines the transmission rank $v = 2$ based on the channel information estimated by the selected target CSI-RS, the maximum number of transmission layers supported by the terminal $v_{max} = 4$, the maximum number of non-zero coefficients at each layer $K_0 = 16$, and the terminal selects $K^{NZ} = 32$ non-zero coefficients for reporting. The number of ports for each target CSI-RS resource $2N_1N_2 = 8$, $\alpha = 1$.

In one implementation, when the terminal sends CSI corresponding to two target CSI-RS resources to the network device, Part 1 of the CSI includes the following indication information: $\left\lceil \log_2 v \right\rceil = 2bits$ indicating the rank selected by the terminal, 4 bits indicating wideband CQI information, 2 bits indicating sub-band differential CQI information, $\left\lceil \log_2 2K_0 \right\rceil = 5bits$ indicating the number of non-zero coefficients of all layers, $\left\lceil \log_2^{\max\left(X_{N_{TRP}}\right)} \right\rceil = 3bits$ indicating the number of FD basis vectors in each polarization direction corresponding to each target CSI-RS resource selected by the terminal, and a bitmap of size $N_{\text{trp}} = 4$ bits indicating indication information of the target CSI-RS resource selected by the terminal.

Indication information included in each information group in Part 2 of the CSI includes as follows:

The first information group (G0): $\left\lceil \log_2 \left( \alpha \cdot 2N_1N_2 \cdot M \right) \right\rceil = 3bits$ indicating the strongest coefficient at each layer.

The second information group (G1): $2\sum_{n=1}^{N} L_n \cdot v \cdot M - \left\lfloor \dfrac{K^{NZ}}{2} \right\rfloor = 16bits$ indicating the position of the non-zero coefficient, and 4 bits indicating the quantization information of a reference amplitude, and differential amplitude quantization information and phase quantization information of $\left\lceil \dfrac{K^{NZ}}{2} \right\rceil - v = 14$ high-priority non-zero coefficients, where each differential amplitude is quantized by 3 bits, and each phase is quantized by 4 bits.

The third information group (G2): $\left\lfloor \dfrac{K^{NZ}}{2} \right\rfloor = 16bits$ indicating the position of the non-zero coefficient, and differential amplitude quantization information and phase quantization information of $\left\lfloor \dfrac{K^{NZ}}{2} \right\rfloor = 16$ low-priority non-zero coefficients, where each differential amplitude is quantized by 3 bits, and each phase is quantized by 4 bits.

Regarding the method for sorting the priorities of the non-zero coefficients, reference may be made to the sorting method described in the above embodiments, which will not be described in detail here.

In the embodiments of the present disclosure, the method for reporting CSI corresponding to multiple CSI-RS resources in a single CSI reporting, the method for grouping Part 2 of the CSI, and the method for sorting priorities of non-zero coefficients are proposed, so that the information length of Part 1 or Part 2 can be determined to reduce the detection complexity of the network device. According to the priority sorting of non-zero coefficients, the discarding of the CSI can be achieved while ensuring a certain performance.

FIG. 6 is a flow chart of a method for reporting CSI according to an illustrative embodiment. As shown in FIG. 6, the method for reporting CSI is performed by a network device, and includes the following step.

At step S21, CSI corresponding to $N$ target CSI-RS resources sent by a terminal is received.

Each CSI-RS resource corresponds to one TRP, and $N_{trp}$ CSI-RS resources correspond to $N_{trp}$ TRPs. That is, the network device indicates the CSI-RS resources corresponding to the $N_{trp}$ TRPs.

In some embodiments, the $N$ target CSI-RS resources are CSI-RS resources among $N_{trp}$ CSI-RS resources configured by the network device for the terminal.

In one implementation, the terminal measures $N_{trp}$ CSI-RS resources, and selects $N$ target CSI-RS resources from the $N_{trp}$ CSI-RS resources.

In another implementation, the terminal directly uses $N_{trp}$ CSI-RS resources configured by the network device, that is, $N= N_{trp}$. At this time, the terminal does not need to measure and select $N_{trp}$ CSI-RS resources.

It should be understood that $N_{trp}$ and $N$ are positive integers, and $1 \leq N \leq N_{trp}$.

In some embodiments, the CSI may also be referred to as a CSI report.

In the embodiments of the present disclosure, when the network device configures $N_{trp}$ CSI-RS resources for the terminal, the terminal can select $N$ target CSI-RS resources from the $N_{trp}$ CSI-RS resources, and send CSI corresponding to the $N$ target CSI-RS resources to the network device, so as to realize the reporting of the CSI corresponding to multiple CSI-RS resources, so that the network device can perform resource scheduling according to the CSI corresponding to the multiple CSI-RS resources.

In the method for reporting CSI provided in an embodiment of the present disclosure, $N$ target CSI-RS resources correspond to one CSI. That is, indication information of the $N$ target CSI-RS resources is carried in the same CSI.

In the method for reporting CSI provided in an embodiment of the present disclosure, the CSI may include first information (Part 1), and the size of an indication field corresponding to the first information may be a fixed value. For example, the size of the indication field corresponding to the first information may be a preset size, or a default size specified by a protocol.

In one implementation, the first information includes at least one of: rank indication information; wideband and/or sub-band channel quality indication information; non-zero coefficient number indication information of all layers; indication information of the number of SD basis vectors or the number of ports in each polarization direction corresponding to the $N$ target CSI-RS resources; indication information of the $N$ target CSI-RS resources; or indication information of a reference CSI-RS resource.

In some embodiments, the first information may include wideband and/or sub-band channel quality indication information.

A wideband may include multiple sub-bands. To reduce overheads, the sub-band CQI information is indicated in a differential manner.

In one implementation, if the wideband CQI information is indicated by 4 bits, the sub-band CQI information may be indicated by 2 bits.

In some embodiments, the first information may include non-zero coefficient number indication information of all layers.

For example, if the maximum number of non-zero coefficients in each layer is 16 and there are two layers, the non-zero coefficient number indication information of all layers may be indicated by 5 bits.

In some embodiments, when the reporting of the CSI is based on the enhanced Rel-16 Type II codebook, the first information may include indication information of the number of SD basis vectors in each polarization direction corresponding to the $N$ target CSI-RS resources; and when the reporting of the CSI is based on the enhanced Rel-17 Type II port selection codebook, the first information may include indication information of the number of ports in each polarization direction corresponding to the $N$ target CSI-RS resources.

If the total number of combinations of the number of SD basis vectors or the number of ports corresponding to $N_{trp}$ CSI-RS resources configured by the network device is $X_1, X_1, ..., X_{Ntrp}$, the terminal indicates the combination selected by the terminal by bits.

In some embodiments, the first information may include indication information of the $N$ target CSI-RS resources.

In one implementation, the indication information of the $N$ target CSI-RS resources is indicated in a bitmap manner.

For example, if the network device configures 4 CSI-RS resources for the terminal, and the terminal selects the first and second CSI-RS resources as target CSI-RS resources, then a 4-bit bitmap can be used to indicate the target CSI-RS resources selected by the terminal and non-target CSI-RS resources not selected by the terminal.

In some embodiments, the first information may include indication information of a reference CSI-RS resource.

The reference CSI-RS resource indicates a CSI-RS resource corresponding to a strongest coefficient, or a CSI-RS resource indicated by the terminal.

In one implementation, the reference CSI-RS resource may also be a first CSI-RS resource predefined between the terminal and the network device, but the indication information of the reference CSI-RS resource at this time does not need to be reported via the CSI.

In the embodiments of the present disclosure, by specifying the indication information in Part 1 of the CSI, the information length of Part 1 can be determined, thereby reducing the detection complexity of the network device.

In the method for reporting CSI provided in an embodiment of the present disclosure, the CSI may further include second information (Part 2), and the size of Part 2 of the CSI is determined based on the information in Part 1.

In one implementation, the second information includes at least one of: indication information of an SD basis vector or a selected port; indication information of the strongest coefficient at each layer; FD basis vector indication information; relative offset indication information of target CSI-RS resources relative to the reference CSI-RS resource; starting point indication information of at least one candidate FD basis vector window; indication information of non-zero coefficients; differential amplitude quantization information and phase quantization information of non-zero coefficients; or reporting information of indication information of reference amplitudes.

In some embodiments, when the reporting of the CSI is based on the enhanced Rel-16 Type II codebook, the second information may include indication information of an SD basis vector; and when the reporting of the CSI is based on the enhanced Rel-17 Type II port selection codebook, the second information may include indication information of a selected port.

The indication information of the SD basis vector or the indication information of the selected port indicates the SD basis vector or the selected port corresponding to the target CSI-RS resource selected by the terminal.

In some embodiments, the second information may include indication information of the strongest coefficient at each layer.

The indication information of the strongest coefficient indicates the position of the strongest coefficient in each layer of non-zero coefficients.

In some embodiments, the second information may include FD basis vector indication information.

The FD basis vector indication information indicates a FD basis vector corresponding to the target CSI-RS resource selected by the terminal.

In some embodiments, the second information may include relative offset indication information of target CSI-RS resources relative to the reference CSI-RS resource.

In some embodiments, the second information may include starting point indication information of at least one candidate FD basis vector window.

For example, the network device indicates $N_3$ candidate FD basis vectors, and the terminal can select a FD basis vector of a window from the $N_3$ candidate FD basis vectors. At this time, the terminal needs to report the starting position of the window.

In some embodiments, the second information may include indication information of non-zero coefficients.

The indication information of non-zero coefficients indicates the indication information of the non-zero coefficients reported by the terminal.

In some embodiments, the second information may include differential amplitude quantization information and phase quantization information of non-zero coefficients.

In some embodiments, the second information may include reporting information of indication information of reference amplitudes.

In the embodiments of the present disclosure, when multiple CSI-RS resources correspond to the same CSI, by specifying the indication information in Part 2 of the CSI, the information length of Part 2 can be determined, thereby reducing the detection complexity of the network device.

In the method for reporting CSI provided in an embodiment of the present disclosure, the second information includes multiple information groups, and different information groups in the multiple information groups correspond to different priorities.

One or more information groups with lower priorities in the second information are discarded in response to uplink resources allocated by the network device being unable to transmit all information included in the first information and the second information.

For example, the second information includes three information groups: a first information group, a second information group and a third information group. The priorities of the three information groups are: priority of first information group > priority of second information group > priority of third information group. When the uplink resources allocated by the network device cannot transmit all information included in the first information and the second information, the third information group is preferentially discarded. If the uplink resources are still unable to transmit the information included in the first information and in the first information group and the second information group in the second information, the second information group is discarded, and so on.

In the embodiments of the present disclosure, when the uplink resources allocated by the network device cannot transmit all the contents of the CSI, some of the contents of the CSI are discarded while ensuring a certain system performance.

A method for grouping indication information in Part 2 of the CSI will be described below when the CSI is reported based on the enhanced Rel-16 Type II codebook.

Grouping method 1:

In the method for reporting CSI provided in an embodiment of the present disclosure, the second information at least includes a first information group, and the first information group includes at least one of: indication information of an SD basis vector, or indication information of the strongest coefficient at each layer.

In the method for reporting CSI provided in an embodiment of the present disclosure, the second information at least further includes a second information group, and the second information group includes at least one of: FD basis vector indication information of one or $N$ target CSI-RS resources; relative offset indication information of $N-1$ target CSI-RS resources relative to the reference CSI-RS resource; starting point indication information of at least one candidate FD basis vector window; position indication information of $v \cdot 2 \sum_{n=1}^{N} L_n \cdot M_v - \left\lfloor \dfrac{K^{NZ}}{2} \right\rfloor$ bits of non-zero coefficients of high-priority target CSI-RS resources; indication information of reference amplitudes of one or $2N-1$ target CSI-RS resources; or differential amplitude quantization information and phase quantization information of $\max\left(0, \left\lceil \dfrac{K^{NZ}}{2} \right\rceil - \upsilon \right)$ high-priority non-zero coefficients, where $N$ represents the target CSI-RS resources, $L_n$ represents the number of SD basis vectors in a polarization direction corresponding to an $n$th target CSI-RS resource, $M_v$ represents the number of FD basis vectors, $K^{NZ}$ represents the number of non-zero coefficients of all layers reported by the terminal, $\upsilon$ represents a rank, and $n$ represents the $n$th target CSI-RS resource.

In the method for reporting CSI provided in an embodiment of the present disclosure, the second information at least further includes a third information group, and the third information group includes at least one of: indication information of $\left\lfloor \dfrac{K^{NZ}}{2} \right\rfloor$ bits of low-priority non-zero coefficients, or differential amplitude quantization information and phase quantization information of $\min\left(K^{NZ} - v, \left\lceil \dfrac{K^{NZ}}{2} \right\rceil \right)$ low-priority non-zero coefficients, where $N$ represents the target CSI-RS resources, $K^{NZ}$ represents the number of non-zero coefficients reported by the terminal, and $\upsilon$ represents the rank.

Grouping method 2:

In the method for reporting CSI provided in an embodiment of the present disclosure, the second information at least includes a first information group, and the first information group includes at least one of: indication information of an SD basis vector, or indication information of the strongest coefficient at each layer.

In the method for reporting CSI provided in an embodiment of the present disclosure, the second information at least further includes a second information group, and the second information group includes at least one of: FD basis vector indication information of $n_1$ target CSI-RS resources; relative offset indication information of $n_1$-1 target CSI-RS resources relative to the reference CSI-RS resource; starting point indication information of at least one candidate FD basis vector window; position indication information of non-zero coefficients of first $l_1$ layers, or position indication information of non-zero coefficients of $n_1$ high-priority target CSI-RS resources; indication information of reference amplitudes of first $l_1$ layers, or indication information of reference amplitudes of $n_1$ target CSI-RS resources; or differential amplitude quantization information and phase quantization information of non-zero coefficients of first $l_1$ layers, or differential amplitude quantization information and phase quantization information of high-priority non-zero coefficients corresponding to $n_1$ target CSI-RS resources, where $n_1 = \left\lfloor \dfrac{N}{2} \right\rfloor$ or $\left\lceil \dfrac{N}{2} \right\rceil$, $N$ represents the target CSI-RS resources,

$$l_1 = \left\lfloor \frac{v}{2} \right\rfloor \text{ or } \left\lceil \frac{v}{2} \right\rceil$$, $K^{NZ}$ represents the number of non-zero coefficients of all layers reported by the terminal, and $\upsilon$ represents a rank.

In the method for reporting CSI provided in an embodiment of the present disclosure, the second information at least further includes a third information group, and the third information group includes at least one of: indication information of non-zero coefficients of $v$-$l_1$ layers, or indication information of non-zero coefficients of $N$-$n_1$ target CSI-RS resources; or differential amplitude quantization information and phase quantization information of non-zero coefficients of $v$-$l_1$ layers, or differential amplitude quantization information and phase quantization information of low-priority non-zero coefficients corresponding to $N$-$n_1$ target CSI-RS resources, where $$n_1 = \left\lfloor \frac{N}{2} \right\rfloor \text{ or } \left\lceil \frac{N}{2} \right\rceil$$, $N$ represents the target CSI-RS resources, $$l_1 = \left\lfloor \frac{v}{2} \right\rfloor \text{ or } \left\lceil \frac{v}{2} \right\rceil$$, and $\upsilon$ represents the rank.

In the embodiments of the present disclosure, two grouping methods are provided for the indication information in Part 2 of the CSI when the CSI is reported based on the enhanced Rel-16 Type II codebook. Certainly, the actual reporting of the CSI is not limited to the two grouping methods provided in the embodiments of the present disclosure, as long as it meets the actual needs. Therefore, the information length of Part 1 or Part 2 can be determined to reduce the detection complexity of the network device.

A method for grouping indication information in Part 2 of the CSI will be described below when the CSI is reported based on the enhanced Rel-17 Type II port selection codebook.

Grouping method 1:

In the method for reporting CSI provided in an embodiment of the present disclosure, the second information at least includes a first information group, and the first information group includes at least one of: port selection indication information, indication information of the strongest coefficient at each layer, or FD basis vector selection indication information.

In the method for reporting CSI provided in an embodiment of the present disclosure, the second information at least further includes a second information group, and the second information group includes at least one of: port selection indication information; relative offset indication information of $N$-1 target CSI-RS resources relative to the reference CSI-RS resource; position indication information of $$2\sum_{n=1}^{N} L_n \cdot v \cdot M - \left\lfloor \frac{K^{NZ}}{2} \right\rfloor$$ bits of high-priority non-zero coefficients; indication information of reference amplitudes of one or 2$N$-1 target CSI-RS resources; or differential amplitude quantization information and phase quantization information of $$\max\left(0, \left\lceil \frac{K^{NZ}}{2} \right\rceil - \upsilon\right)$$ high-priority non-zero coefficients, where $N$ represents the target CSI-RS resources, $L_n$ represents the number of CSI-RS ports in a polarization direction corresponding to an $n$th target CSI-RS resource, $M$ represents the number of FD basis vectors, $K^{NZ}$ represents the number of non-zero coefficients of all layers reported by the terminal, and $\upsilon$ represents a rank.

In the method for reporting CSI provided in an embodiment of the present disclosure, the second information at least further includes a third information group, and the third information group includes at least one of: position indication information of $$\left\lfloor \frac{K^{NZ}}{2} \right\rfloor$$ bits of low-priority non-zero coefficients, or differential amplitude quantization information and phase quantization information of $$\min\left(K^{NZ} - v, \left\lceil \frac{K^{NZ}}{2} \right\rceil\right)$$ low-priority non-zero coefficients, where $N$ represents the target CSI-RS resources, $K^{NZ}$ represents the number of non-zero coefficients of all layers reported by the terminal, and $\upsilon$ represents the rank.

Grouping method 2:

In the method for reporting CSI provided in an embodiment of the present disclosure, the second information at least includes a first information group, and the first information group includes at least one of: port selection indication information, indication information of the strongest coefficient at each layer, or FD basis vector selection indication information.

In the method for reporting CSI provided in an embodiment of the present disclosure, the second information at least further includes a second information group, and the second information group includes at least one of: port selection indication information; relative offset indication information of $n_1$-1 target CSI-RS resources relative to the reference CSI-RS resource; position indication information of non-zero coefficients of first $l_1$ layers, or position indication information of non-zero coefficients of $n_1$ target CSI-RS resources; indication information of reference amplitudes of first $l_1$ layers, or indication information of reference amplitudes of $n_1$ target CSI-RS resources; differential amplitude quantization information and phase quantization information of non-zero coefficients of first $l_1$ layers, or differential amplitude quantization information and phase quantization information of high-priority non-zero coefficients corresponding to $n_1$

target CSI-RS resources, where $n_1 = \left\lfloor \dfrac{N}{2} \right\rfloor$ or $\left\lceil \dfrac{N}{2} \right\rceil$, $N$ represents the target CSI-RS resources, $l_1 = \left\lfloor \dfrac{v}{2} \right\rfloor$ or

$\left\lceil \dfrac{v}{2} \right\rceil$, $K^{NZ}$ represents the number of non-zero coefficients of all layers reported by the terminal, and $v$ represents a rank.

In the method for reporting CSI provided in an embodiment of the present disclosure, the second information at least further includes a third information group, and the third information group includes at least one of: position indication information of non-zero coefficients of $v$-$l_1$ layers, or position indication information of non-zero coefficients of $N$-$n_1$ target CSI-RS resources; or differential amplitude quantization information and phase quantization information of non-zero coefficients of $v$-$l_1$ layers, or differential amplitude quantization information and phase quantization information of low-priority non-zero coefficients corresponding to $N$-$n_1$ target CSI-RS resources, where $n_1 = \left\lfloor \dfrac{N}{2} \right\rfloor$ or $\left\lceil \dfrac{N}{2} \right\rceil$, $N$

represents the target CSI-RS resources, $l_1 = \left\lfloor \dfrac{v}{2} \right\rfloor$ or $\left\lceil \dfrac{v}{2} \right\rceil$, $K^{NZ}$ represents the number of non-zero coefficients of all layers reported by the terminal, and $v$ represents the rank.

In the embodiments of the present disclosure, two grouping methods are provided for the indication information in Part 2 of the CSI when the CSI is reported based on the enhanced Rel-17 Type II port selection codebook. Certainly, the actual reporting of the CSI is not limited to the two grouping methods provided in the embodiments of the present disclosure, as long as it meets the actual needs. Therefore, the information length of Part 1 or Part 2 can be determined to reduce the detection complexity of the network device.

In the above embodiments, different groups in Part 2 of the CSI may involve high-priority and low-priority non-zero coefficients. A method for determining the priorities of the non-zero coefficients will be described below.

In the method for reporting CSI provided in an embodiment of the present disclosure, when the CSI is reported based on the enhanced Rel-16 Type II codebook, the priority of the non-zero coefficient is determined based on one of the following modes.

Mode 1: the non-zero coefficients at the same position of the same target CSI-RS resource in different layers are sorted according to a priority order of the target CSI-RS resources with a single target CSI-RS resource as a unit, where the smaller the number of layers, the greater the priority of the non-zero coefficient; the non-zero coefficients corresponding to all SD basis vectors of the same target CSI-RS resource in the same layer are sorted, where the smaller an index of an SD basis vector, the greater the priority of the non-zero coefficient; and the non-zero coefficients corresponding to all FD basis vectors in the same layer are sorted in an interleaved way based on a preset algorithm, where the smaller a value of the preset algorithm, the greater the priority of the non-zero coefficient.

In one implementation, the preset algorithm is: $\pi(f) = \min\left(2 \cdot n_{3,l}^{(f)}, 2 \cdot \left(N_3 - n_{3,l}^{(f)}\right) - 1\right)$, where $n_{3,l}^{(f)}$

represents an index mapped from the index $f$ of the FD basis vector to $N_3$, $N_3$ represents the number of candidate FD basis vectors, and $l$ represents the number of layers.

In mode 1, according to the priority order of the target CSI-RS resources, the target CSI-RS resource with the highest priority among the target CSI-RS resources is preferentially sorted with a single target CSI-RS resource as a unit. First, the non-zero coefficients with the smallest SD basis vector index in the first FD basis vector in the first layer are sorted, and then the non-zero coefficients with the smallest SD basis vector index in the first FD basis vector in the second layer are sorted, and so on. After the non-zero coefficients with the smallest SD basis vector index in the first FD basis vector in all layers are sorted, the non-zero coefficients with the subminimum SD basis vector index in the first FD basis vector in the first layer are sorted, and then the non-zero coefficients with the subminimum SD basis vector index in the first FD basis vector in the second layer are sorted, and so on, until the non-zero coefficients corresponding to all the SD basis vectors in the target CSI-RS resource with the highest priority are sorted. Then, the non-zero coefficients of all FD basis vectors in the target CSI-RS resource with the highest priority are sorted in an interleaved way based on a preset algorithm. The smaller the value of the preset algorithm, the greater the priority of the non-zero coefficient corresponding to the FD basis vector. After all non-zero coefficients in the target CSI-RS resource with the highest priority are sorted, all non-zero coefficients in the target CSI-RS resource with the second highest priority are sorted. The method for sorting all non-zero coefficients in the target CSI-RS resource with the second highest priority is the same as the method for sorting all non-zero coefficients in the target CSI-RS resource with the highest priority, and so on, until all non-zero coefficients corresponding to all target CSI-RS resources are sorted.

In some embodiments, the priority of the non-zero coefficient is determined based on a following formula:

$$\mathrm{Pri}\left(l,i_n,f,n\right) = 2 \cdot \sum_{j=1}^{n-1} L_j \cdot v \cdot M_v + 2 \cdot L_n \cdot v \cdot \pi\left(f\right) + v \cdot i_n + l$$

where $l$ represents the number of layers, $i_n$ represents an index of an SD basis vector of the $n^{th}$ target CSI-RS resource, $f$ represents the index of the FD basis vector, $n$ represents the $n^{th}$ target CSI-RS resource, $L_j$ represents the number of SD basis vectors in a polarization direction corresponding to a $j^{th}$ CSI-RS resource, $v$ represents the rank, $M_v$ represents the number of FD basis vectors, $L_n$ represents the number of SD basis vectors in a polarization direction corresponding to the $n^{th}$ target CSI-RS resource, $\pi\left(f\right) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the FD basis vector to $N_3$, and $N_3$ represents the number of candidate FD basis vectors.

Mode 2: the non-zero coefficients at the same position of the same target CSI-RS resource in different layers are sorted according to a priority order of the target CSI-RS resources, where the smaller the number of layers, the greater the priority of the non-zero coefficient; the non-zero coefficients corresponding to all SD basis vectors of all target CSI-RS resources in the same layer are sorted, where the smaller an index of an SD basis vector, the greater the priority of the non-zero coefficient; and the non-zero coefficients corresponding to different FD basis vectors in the same layer are sorted in an interleaved way based on a preset algorithm, where the smaller a value of the preset algorithm, the greater the priority of the non-zero coefficient.

In one implementation, the preset algorithm is: $\pi\left(f\right) = \min\left(2 \cdot n_{3,l}^{(f)}, 2 \cdot \left(N_3 - n_{3,l}^{(f)}\right) - 1\right)$, where $n_{3,l}^{(f)}$ represents an index mapped from the index $f$ of the FD basis vector to $N_3$, $N_3$ represents the number of candidate FD basis vectors, and $l$ represents the number of layers.

In mode 2, according to the priority order of the target CSI-RS resources, the sorting is performed starting from the non-zero coefficients with the smallest SD basis vector index in the first FD basis vector in the target CSI-RS resource with the highest priority, and then the non-zero coefficients with the smallest SD basis vector index in the first FD basis vector in the second layer are sorted, and so on. After the non-zero coefficients with the smallest SD basis vector index in the first FD basis vector in all layers are sorted, the non-zero coefficients with the subminimum SD basis vector index in the first FD basis vector in the first layer are sorted, and then the non-zero coefficients with the subminimum SD basis vector index in the first FD basis vector in the second layer are sorted, and so on, until the non-zero coefficients of all the SD basis vectors in the first FD basis vector in all the target CSI-RS resources are sorted. Then, the non-zero coefficients of all FD basis vectors in the second FD basis vector in all the target CSI-RS resources are sorted in the same manner. After the non-zero coefficients of all SD basis vectors in all the target CSI-RS resources are sorted, the non-zero coefficients of all FD basis vectors in the target CSI-RS resources are sorted in an interleaved way based on a preset algorithm. The smaller a value of the preset algorithm, the greater the priority of the non-zero coefficient corresponding to the FD basis vector.

In some embodiments, the priority of the non-zero coefficient is determined based on a following formula:

$$\mathrm{Pri}\left(l,i,f\right) = 2 \cdot L_{tot} \cdot v \cdot \pi\left(f\right) + v \cdot i + l$$

where $l$ represents the number of layers, $i = 0,1,...,2L_{tot}-1$, $L_{tot} = \sum_{n=1}^{N} L_n$ represents a total number of SD basis vectors in a polarization direction corresponding to $N$ CSI-RS resources, $n$ represents the $n^{th}$ target CSI-RS resource, $f$ represents the index of the FD basis vector, $v$ represents the rank, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the FD basis vector to $N_3$, and $N_3$ represents the number of candidate FD basis vectors.

Mode 3: the non-zero coefficients of all SD basis vectors in a single target CSI-RS resource are sorted according to a priority order of the target CSI-RS resources with the single target CSI-RS resource as a unit, where the smaller an index of an SD basis vector, the greater a priority of a corresponding non-zero coefficient; the non-zero coefficients corresponding to all FD basis vectors in the single target CSI-RS resource are sorted based on a preset algorithm, where the smaller a value of the preset algorithm, the greater the priority of the non-zero coefficient; and the non-zero coefficients of all layers in the same target CSI-RS resource are sorted, where the smaller the number of layers, the greater the priority of the non-zero coefficient.

In one implementation, the preset algorithm is: $\pi\left(f\right)=\min\left(2\cdot n_{3,l}^{(f)},2\cdot\left(N_3-n_{3,l}^{(f)}\right)-1\right)$, where $n_{3,l}^{(f)}$ represents an index mapped from the index $f$ of the FD basis vector to $N_3$, $N_3$ represents the number of candidate FD basis vectors, and $l$ represents the number of layers.

In mode 3, according to the priority order of the target CSI-RS resources, the target CSI-RS resource with the highest priority among the target CSI-RS resources is preferentially sorted with a single target CSI-RS resource as a unit. First, the non-zero coefficients with the smallest SD basis vector index in the first FD basis vector in the first layer are sorted, and then the non-zero coefficients with the subminimum SD basis vector index in the first FD basis vector in the first layer are sorted. After the non-zero coefficients of all SD basis vectors in all FD basis vectors in the first layer are sorted, the non-zero coefficients of all SD basis vectors in all FD basis vectors in the second layer are sorted. After the non-zero coefficients of all SD basis vectors in all FD basis vectors in all layers corresponding to the target CSI-RS resource with the highest priority are sorted, the non-zero coefficients of all FD basis vectors in all layers corresponding to the target CSI-RS resource with the highest priority are sorted in an interleaved way based on a preset algorithm. The smaller the value of the preset algorithm, the greater the priority of the non-zero coefficient corresponding to the FD basis vector. After all non-zero coefficients in the target CSI-RS resource with the highest priority are sorted, all non-zero coefficients in the target CSI-RS resource with the second highest priority are sorted. The method for sorting all non-zero coefficients in the target CSI-RS resource with the second highest priority is the same as the method for sorting all non-zero coefficients in the target CSI-RS resource with the highest priority, and so on, until all non-zero coefficients corresponding to all target CSI-RS resources are sorted.

In some embodiments, the priority of the non-zero coefficient is determined based on a following formula:

$$\mathrm{Pri}\left(l,i_n,f,n\right)=2\cdot L_{tot}\cdot M_v\cdot l+2\cdot\sum_{j=1}^{n-1}L_j\cdot M_v+2\cdot L_n\cdot\pi\left(f\right)+i_n$$

where $l$ represents the number of layers, $i_n$ represents an index of an SD basis vector of the $n^{th}$ target CSI-RS resource, $f$ represents the index of the FD basis vector, $L_{tot}=\sum_{n=1}^{N}L_n$ represents a total number of SD basis vectors in a polarization direction corresponding to $N$ CSI-RS resources, $n$ represents the $n^{th}$ target CSI-RS resource, $L_j$ represents the number of SD basis vectors in a polarization direction corresponding to a $j^{th}$ CSI-RS resource, $v$ represents the rank, $M_v$ represents the number of FD basis vectors, $L_n$ represents the number of SD basis vectors in a polarization direction corresponding to the $n^{th}$ target CSI-RS resource, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the FD basis vector to $N_3$, and $N_3$ represents the number of candidate FD basis vectors.

Mode 4: the non-zero coefficients corresponding to all SD basis vectors in all target CSI-RS resources in the same layer are sorted according to the priority order of the target CSI-RS resources, where the smaller an index of an SD basis vector, the greater a priority of a corresponding non-zero coefficient; the non-zero coefficients corresponding to all SD basis vectors in all target CSI-RS resources in different layers are sorted in an interleaved way, where the smaller the number of layers, the greater the priority of a corresponding non-zero coefficient; and the non-zero coefficients corresponding to all FD basis vectors in all target CSI-RS resources in different layers are sorted in an interleaved way based on a preset algorithm, where the smaller a value of the preset algorithm, the greater the priority of the non-zero coefficient.

In one implementation, the preset algorithm is: $\pi\left(f\right)=\min\left(2\cdot n_{3,l}^{(f)},2\cdot\left(N_3-n_{3,l}^{(f)}\right)-1\right)$, where $n_{3,l}^{(f)}$

represents an index mapped from the index *f* of the FD basis vector to $N_3$, $N_3$ represents the number of candidate FD basis vectors, and *l* represents the number of layers.

In mode 4, according to the priority order of the target CSI-RS resources, the sorting is performed starting from the non-zero coefficients with the smallest SD basis vector index in the first FD basis vector in the target CSI-RS resource with the highest priority. First, the non-zero coefficients with the smallest SD basis vector index in the first FD basis vector in the first layer are sorted, and then the non-zero coefficients with the subminimum SD basis vector index in the first FD basis vector in the first layer are sorted. After the non-zero coefficients of all SD basis vectors in all FD basis vectors in all target CSI-RS resources in the first layer are sorted, the non-zero coefficients of all SD basis vectors in all FD basis vectors in all target CSI-RS resources in the second layer are sorted. After the non-zero coefficients of all SD basis vectors in all FD basis vectors in all target CSI-RS resources in all layers are sorted, the non-zero coefficients of all FD basis vectors in all target CSI-RS resources are sorted in an interleaved way based on a preset algorithm. The smaller the value of the preset algorithm, the greater the priority of the non-zero coefficient corresponding to the FD basis vector.

In some embodiments, the priority of the non-zero coefficient is determined based on a following formula:

$$\mathrm{Pri}\left(l,i,f\right)=2\cdot L_{tot}\cdot v\cdot \pi\left(f\right)+L_{tot}\cdot l+i$$

where *l* represents the number of layers, $i=0,1,...,2L_{tot}$-1, $L_{tot}=\sum_{n=1}^{N}L_n$ represents a total number of SD basis vectors in a polarization direction corresponding to *N* CSI-RS resources, *n* represents the $n^{th}$ target CSI-RS resource, *f* represents the index of the FD basis vector, *v* represents the rank, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index *f* of the FD basis vector to $N_3$, and $N_3$ represents the number of candidate FD basis vectors.

In the embodiments of the present disclosure, by sorting the priorities of the non-zero coefficients, when the uplink resources allocated by the network device cannot transmit all the contents of the CSI, some of the contents of the CSI are discarded while ensuring a certain system performance.

In the method for reporting CSI provided in an embodiment of the present disclosure, when the CSI is reported based on the enhanced Rel-17 type II port selection codebook, the priority of the non-zero coefficient is determined based on one of the following modes.

Mode 1: the non-zero coefficients at the same position of the same target CSI-RS resource in different layers are sorted according to a priority order of the target CSI-RS resources with a single target CSI-RS resource as a unit, where the smaller the number of layers, the greater the priority of the non-zero coefficient; the non-zero coefficients corresponding to indexes of all CSI-RS ports of the same target CSI-RS resource in the same layer are sorted, where the smaller an index of a CSI-RS port, the greater the priority of the non-zero coefficient; and the non-zero coefficients corresponding to all FD basis vectors in the same layer are sorted, where the smaller an index of a FD basis vector, the greater the priority of the non-zero coefficient.

In mode 1, according to the priority order of the target CSI-RS resources, the target CSI-RS resource with the highest priority among the target CSI-RS resources is preferentially sorted with a single target CSI-RS resource as a unit. First, the non-zero coefficients with the smallest CSI-RS port index in the first FD basis vector in the first layer are sorted, and then the non-zero coefficients with the smallest CSI-RS port index in the first FD basis vector in the second layer are sorted, and so on. After the non-zero coefficients with the smallest CSI-RS port index in the first FD basis vector in all layers are sorted, the non-zero coefficients with the subminimum CSI-RS port index in the first FD basis vector in the first layer are sorted, and then the non-zero coefficients with the subminimum CSI-RS port index in the first FD basis vector in the second layer are sorted, and so on, until the non-zero coefficients corresponding to all the CSI-RS ports in the target CSI-RS resource with the highest priority are sorted. Then, the non-zero coefficients of all FD basis vectors in the target CSI-RS resource with the highest priority are sorted in an interleaved way. The smaller the index of the FD basis vector, the greater the priority of the non-zero coefficient corresponding to the FD basis vector. After all non-zero coefficients in the target CSI-RS resource with the highest priority are sorted, all non-zero coefficients in the target CSI-RS resource with the second highest priority are sorted. The method for sorting all non-zero coefficients in the target CSI-RS resource with the second highest priority is the same as the method for sorting all non-zero coefficients in the target CSI-RS resource with the highest priority, and so on, until all non-zero coefficients corresponding to all target CSI-RS resources are sorted.

In some embodiments, the priority of the non-zero coefficient is determined based on a following formula:

$$\mathrm{Pri}\left(l, i_n, f, n\right) = v \cdot \sum_{j=1}^{n-1} K_{1,n} \cdot M + K_{1,n} \cdot v \cdot f + v \cdot i_n + l$$

where $l$ represents the number of layers, $i_n$ represents an index of a CSI-RS port of the $n^{\text{th}}$ target CSI-RS resource, $f$ represents the index of the FD basis vector, $n$ represents the $n^{\text{th}}$ target CSI-RS resource, $v$ represents the rank, $M$ represents the number of FD basis vectors, and $K_{1,n}$ represents the number of CSI-RS ports selected by the terminal corresponding to the $n^{\text{th}}$ target CSI-RS resource.

Mode 2: the non-zero coefficients at the same position of the same target CSI-RS resource in different layers are sorted according to a priority order of the target CSI-RS resources, where the smaller the number of layers, the greater the priority of the non-zero coefficient; the non-zero coefficients corresponding to indexes of all CSI-RS ports of all target CSI-RS resources in the same layer are sorted, where the smaller an index of a CSI-RS port, the greater the priority of the non-zero coefficient; and the non-zero coefficients corresponding to different FD basis vectors in the same layer are sorted, where the smaller an index of a FD basis vector, the greater the priority of the non-zero coefficient.

In mode 2, according to the priority order of the target CSI-RS resources, the sorting is performed starting from the non-zero coefficients with the smallest CSI-RS port index in the first FD basis vector in the target CSI-RS resource with the highest priority, and then the non-zero coefficients with the smallest CSI-RS port index in the first FD basis vector in the second layer are sorted, and so on. After the non-zero coefficients with the smallest CSI-RS port index in the first FD basis vector in all layers are sorted, the non-zero coefficients with the subminimum CSI-RS port index in the first FD basis vector in the first layer are sorted, and then the non-zero coefficients with the subminimum CSI-RS port index in the first FD basis vector in the second layer are sorted, and so on, until the non-zero coefficients of all the CSI-RS ports in the first FD basis vector in all the target CSI-RS resources are sorted. Then, the non-zero coefficients of all CSI-RS ports in the second FD basis vector in all the target CSI-RS resources are sorted in the same manner. After the non-zero coefficients of all CSI-RS ports in all the target CSI-RS resources are sorted, the non-zero coefficients of all FD basis vectors in the target CSI-RS resources are sorted in an interleaved way. The smaller the index of the FD basis vector, the greater the priority of the non-zero coefficient.

In some embodiments, the priority of the non-zero coefficient is determined based on a following formula:

$$\mathrm{Pri}\left(l, i, f\right) = K_{1,tot} \cdot v \cdot f + v \cdot i + l$$

where $l$ represents the number of layers, $i = 0, 1, ..., 2K_{1,tot} - 1$, $K_{1,tot} = \sum_{n=1}^{N} K_{1,n}$, $L_{tot} = \sum_{n=1}^{N} L_n$ represents a total number of CSI-RS ports selected by the terminal corresponding to $N$ CSI-RS resources, $n$ represents the $n^{\text{th}}$ target CSI-RS resource, $f$ represents the index of the FD basis vector, $v$ represents the rank, $K_{1,tot}$ represents the total number of CSI-RS ports selected by the terminal corresponding to the $N$ CSI-RS resources, and $K_{1,n}$ represents the number of CSI-RS ports selected by the terminal corresponding to the $n^{\text{th}}$ target CSI-RS resource.

Mode 3: the non-zero coefficients of all CSI-RS ports in a single target CSI-RS resource are sorted according to a priority order of the target CSI-RS resources with the single target CSI-RS resource as a unit, where the smaller an index of a CSI-RS port, the greater a priority of a corresponding non-zero coefficient; the non-zero coefficients of all FD basis vectors in the single target CSI-RS resource are sorted, where the smaller an index of a FD basis vector, the greater the priority of the non-zero coefficient; and the non-zero coefficients of all layers in the single target CSI-RS resource are sorted, where the smaller the number of layers, the greater the priority of the non-zero coefficient.

In mode 3, according to the priority order of the target CSI-RS resources, the target CSI-RS resource with the highest priority among the target CSI-RS resources is preferentially sorted with a single target CSI-RS resource as a unit. First, the non-zero coefficients with the smallest CSI-RS port index in the first FD basis vector in the first layer are sorted, and then the non-zero coefficients with the subminimum CSI-RS port index in the first FD basis vector in the first layer are sorted. After the non-zero coefficients of all CSI-RS ports in all FD basis vectors in the first layer are sorted, the non-zero coefficients of all CSI-RS ports in all FD basis vectors in the second layer are sorted. After the non-zero coefficients of all CSI-RS ports in all FD basis vectors in all layers corresponding to the target CSI-RS resource with the highest priority are sorted, the non-zero coefficients of all FD basis vectors in all layers corresponding to the target CSI-RS resource with the highest priority are sorted. The smaller the index of the FD basis vector, the greater the priority of the non-zero coefficient. After all non-zero coefficients in the target CSI-RS resource with the highest priority are sorted, all non-zero coefficients in the target CSI-RS resource with the second highest priority are sorted. The method for sorting all non-zero coefficients in the target CSI-RS resource with the second highest priority is the same as the method for sorting all non-zero coefficients in the target CSI-RS resource with the highest priority, and so on, until all non-zero coefficients corresponding to all target CSI-RS resources are sorted.

In some embodiments, the priority of the non-zero coefficient is determined based on a following formula:

$$\mathrm{Pri}\left(l,i_n,f,n\right)=l\cdot K_{1,tot}\cdot M+\sum_{j=1}^{n-1}K_{1,j}\cdot M+K_{1,n}\cdot f+i_n$$

where $l$ represents the number of layers, $i_n$ represents an index of a CSI-RS port of the $n^{\text{th}}$ target CSI-RS resource, $f$ represents the index of the FD basis vector, $n$ represents the $n^{\text{th}}$ target CSI-RS resource, $v$ represents the rank, $K_{1,tot}$ represents a total number of CSI-RS ports selected by the terminal corresponding to $N$ CSI-RS resources, $M$ represents the number of FD basis vectors, $K_{1,j}$ represents the number of CSI-RS ports selected by the terminal corresponding to a $j^{\text{th}}$ CSI-RS resource, and $K_{1,n}$ represents the number of CSI-RS ports selected by the terminal corresponding to the $n^{\text{th}}$ target CSI-RS resource.

Mode 4: the non-zero coefficients corresponding to all CSI-RS ports in all target CSI-RS resources in the same layer are sorted according to a priority order of the target CSI-RS resources, where the smaller an index of a CSI-RS port, the greater a priority of a corresponding non-zero coefficient; the non-zero coefficients corresponding to all CSI-RS ports in all target CSI-RS resources in different layers are sorted, where the smaller the number of layers, the greater a priority of a corresponding non-zero coefficient; and the non-zero coefficients corresponding to all FD basis vectors in all target CSI-RS resources in different layers are sorted, where the smaller an index of a FD basis vector, the greater the priority of the non-zero coefficient.

In mode 4, according to the priority order of the target CSI-RS resources, the sorting is performed starting from the non-zero coefficients with the smallest CSI-RS port index in the first FD basis vector in the target CSI-RS resource with the highest priority. First, the non-zero coefficients with the smallest CSI-RS port index in the first FD basis vector in the first layer are sorted, and then the non-zero coefficients with the subminimum CSI-RS port index in the first FD basis vector in the first layer are sorted. After the non-zero coefficients of all CSI-RS ports in all FD basis vectors in all target CSI-RS resources in the first layer are sorted, the non-zero coefficients of all CSI-RS ports in all FD basis vectors in all target CSI-RS resources in the second layer are sorted. After the non-zero coefficients of all CSI-RS ports in all FD basis vectors in all target CSI-RS resources in all layers are sorted, the non-zero coefficients of all FD basis vectors in all target CSI-RS resources are sorted. The smaller the index of the FD basis vector, the greater the priority of the non-zero coefficient.

In some embodiments, the priority of the non-zero coefficient is determined based on a following formula:

$$\mathrm{Pri}\left(l,i,f\right)=K_{1,tot}\cdot v\cdot f+K_{1,tot}\cdot l+i$$

where $l$ represents the number of layers, $i=0,1,...,2K_{1,tot}-1$, $K_{1,tot}=\sum_{n=1}^{N}K_{1,n}$ represents a total number of CSI-RS ports selected by the terminal corresponding to N CSI-RS resources, $n$ represents the $n^{\text{th}}$ target CSI-RS resource, $f$ represents the index of the FD basis vector, $v$ represents the rank, $K_{1,tot}$ represents the total number of CSI-RS ports selected by the terminal corresponding to the $N$ CSI-RS resources, and $K_{1,n}$ represents the number of CSI-RS ports selected by the terminal corresponding to the $n^{\text{th}}$ target CSI-RS resource.

In the embodiments of the present disclosure, by sorting the priorities of the non-zero coefficients, when the uplink resources allocated by the network device cannot transmit all the contents of the CSI, some of the contents of the CSI are discarded while ensuring a certain system performance.

In the method for reporting CSI provided in an embodiment of the present disclosure, the $N$ target CSI-RS resources correspond to $N$ CSIs. That is, indication information of the $N$ target CSI-RS resources is carried in different CSIs, and each target CSI-RS resource corresponds to one CSI.

In the method for reporting CSI provided in an embodiment of the present disclosure, sending CSI corresponding to the $N$ target CSI-RS resources to the network device includes: sending $N$ CSIs corresponding to the $N$ target CSI-RS resources to the network device based on a priority order of the $N$ target CSI-RS resources.

For example, $N$ is 3. If the priority of the first target CSI-RS resource > the priority of the third target CSI-RS resource > the priority of the second target CSI-RS resource, the CSI corresponding to the first target CSI-RS resource is first sent to the network device, followed by the CSI corresponding to the third target CSI-RS resource, and finally the CSI corresponding to the second target CSI-RS resource is sent to the network device.

In the embodiments of the present disclosure, by specifying the priorities of the $N$ target CSI-RS resources, when the terminal sends CSI to the network device, it can sequentially send the CSI corresponding to the $N$ target CSI-RS resources, thereby realizing the reporting of the CSI corresponding to multiple CSI-RS resources.

In the method for reporting CSI provided in an embodiment of the present disclosure, regarding the indication information included in the CSI corresponding to each target CSI-RS resource and the grouping of the indication information in Part 2 of the CSI, reference can be made to the indication information shown in Table 1 above.

In the method for reporting CSI provided in an embodiment of the present disclosure, the priority of the non-zero coefficient is determined based on formula (1) or formula (2), which will not be described in detail in this embodiment of the present disclosure.

In the method for reporting CSI provided in an embodiment of the present disclosure, the priority of a target CSI-RS resource is determined based on an index of the target CSI-RS resource.

In one implementation, the priority of the target CSI-RS resource is determined based on the following formula:

$$\mathrm{Pri}_{iCSI}\left(y,k,c,s\right) = 2 \cdot N_{cells} \cdot M_s \cdot y + N_{cells} \cdot M_s \cdot k + M_s \cdot c + s + z$$

where y represents the index value y=0,1,2,3 corresponding to different time domain behaviors or the reporting of CSI carried on a PUSCH and a PUCCH, k represents the index value k=0,1 corresponding to whether the CSI including L1-RSRP or L1-SINR is reported, c represents an index of a service cell, s represents a CSI reporting configuration ID configured by the network device, $N_{cells}$ represents the maximum number of service cells configured by the network device, $M_s$ represents the maximum number of CSI reports configured by the network device, and z represents the index of the target CSI-RS resource.

In the method for reporting CSI provided in an embodiment of the present disclosure, the reference CSI-RS resource has a highest priority among the N target CSI-RS resources, and the priorities of remaining N-1 target CSI-RS resources are determined based on indexes of the N-1 target CSI-RS resources.

In one implementation, the priority of the target CSI-RS resource is determined based on the following formula:

$$\mathrm{Pri}_{iCSI}\left(y,k,c,s\right) = 2 \cdot N_{cells} \cdot M_s \cdot y + N_{cells} \cdot M_s \cdot k + M_s \cdot c + s + z$$

where y represents the index value y=0,1,2,3 corresponding to different time domain behaviors or the reporting of CSI carried on a PUSCH and a PUCCH, k represents the index value k=0,1 corresponding to whether the CSI including L1-RSRP or L1-SINR is reported, c represents an index of a service cell, s represents a CSI reporting configuration ID configured by the network device, $N_{cells}$ represents the maximum number of service cells configured by the network device, and $M_s$ represents the maximum number of CSI reports configured by the network device.

It is worth noting that when the target CSI-RS resource is the reference CSI-RS resource, z is 0; and when the target CSI-RS resource is not the reference CSI-RS resource, z is the index of the target CSI-RS resource.

In the embodiments of the present disclosure, by defining the priorities of different target CSI-RS resources, the CSI corresponding to the target CSI-RS resources can be reported according to the priority order, and the indication information included in the information groups in Part 2 of the CSI can also be determined according to the priority order.

It should be noted that those skilled in the art will appreciate that the various implementations/examples in above embodiments of the present disclosure may be used in conjunction with the foregoing embodiments or may be used independently. The principles of the various implementations/examples are similar, whether used alone or in conjunction with the foregoing embodiments. In an implementation of the present disclosure, some embodiments are described as embodiments that are used together. Certainly, it will be understood by those skilled in the art that such illustrations are not intended to limit the embodiments of the present disclosure.

Based on the same concept, embodiments of the present disclosure also provide an apparatus for reporting channel status information (CSI).

It may be understood that the apparatus for reporting channel status information (CSI) provided in the embodiments of the present disclosure includes corresponding hardware structures and/or software modules for performing various functions in order to implement the above-mentioned functions. Embodiments of the present disclosure may be implemented in a form of hardware or a combination of hardware and computer software in combination with units and algorithm steps of each example disclosed in the embodiments of the present disclosure. Whether a function is performed by hardware or by hardware driven by computer software depends on specific applications and design constraints of the technical solution. Those skilled in the art may use different methods to implement the described functions for each specific application, but such an implementation should not be regarded as extending beyond the scope of the technical solutions of the embodiments of the present disclosure.

FIG. 7 is a block diagram illustrating an apparatus for reporting CSI according to an illustrative embodiment. Referring to FIG. 7, the apparatus includes a determining module 101 and a sending module 102. The apparatus 100 is applied to a terminal.

The determining module 101 is configured to determine N target CSI-RS resources from $N_{trp}$ CSI-RS resources in response to configuring, by a network device, the $N_{trp}$ CSI-RS resources for the terminal, where $N_{trp}$ and N are positive integers, and $1 \le N \le N_{trp}$. The sending module 102 is configured to send CSI corresponding to the N target CSI-RS resources to the network device.

In an implementation, the $N$ target CSI-RS resources correspond to one CSI, and the CSI includes first information; and the first information includes at least one of: rank indication information; wideband and/or sub-band channel quality indication information; non-zero coefficient number indication information of all layers; indication information of the number of spatial domain (SD) basis vectors or the number of ports in each polarization direction corresponding to the $N$ target CSI-RS resources; indication information of the $N$ target CSI-RS resources; or indication information of a reference CSI-RS resource, in which the reference CSI-RS resource indicates a CSI-RS resource corresponding to a strongest coefficient, or a CSI-RS resource indicated by the terminal, or a first CSI-RS resource predefined between the terminal and the network device.

In an implementation, the CSI further includes second information, the second information includes multiple information groups, and different information groups in the multiple information groups correspond to different priorities; and one or more information groups with lower priorities in the second information are discarded in response to uplink resources allocated by the network device being unable to transmit all information included in the first information and the second information.

In an implementation, the second information at least includes a first information group, and the first information group includes at least one of: indication information of an SD basis vector; or indication information of the strongest coefficient at each layer.

In an implementation, the second information at least further includes a second information group, and the second information group includes at least one of: frequency domain (FD) basis vector indication information of one or $N$ or $n_1$ target CSI-RS resources; relative offset indication information of $N$-1 or $n_1$ - 1 target CSI-RS resources relative to the reference CSI-RS resource; starting point indication information of at least one candidate FD basis vector window; position

indication information of $v \cdot 2 \sum_{n=1}^{N} L_n \cdot M_v - \left\lfloor \dfrac{K^{NZ}}{2} \right\rfloor$ bits of high-priority non-zero coefficients, or position indication information of non-zero coefficients of first $l_1$ layers, or position indication information of non-zero coefficients of $n_1$ target CSI-RS resources; indication information of one or 2N-1 reference amplitudes, or indication information of reference amplitudes of first $l_1$ layers, or indication information of reference amplitudes of $n_1$ target CSI-RS resources; or differential amplitude quantization information and phase quantization information of $\max\left(0, \left\lceil \dfrac{K^{NZ}}{2} \right\rceil - v\right)$ high-priority non-zero coefficients, or differential amplitude quantization information and phase quantization information of non-zero coefficients of first $l_1$ layers, or differential amplitude quantization information and phase quantization information of non-zero coefficients corresponding to $n_1$ target CSI-RS resources, where $N$ represents the target CSI-RS resources,

$n_1 = \left\lfloor \dfrac{N}{2} \right\rfloor$ or $\left\lceil \dfrac{N}{2} \right\rceil$, $l_1 = \left\lfloor \dfrac{v}{2} \right\rfloor$ or $\left\lceil \dfrac{v}{2} \right\rceil$, $K^{NZ}$ represents the number of non-zero coefficients of all layers reported

by the terminal, $v$ represents a rank, $M_v$ represents the number of FD basis vectors, $L_n$ represents the number of SD basis vectors in a polarization direction corresponding to an $n^{th}$ target CSI-RS resource, and $n$ represents the $n^{th}$ target CSI-RS resource.

In an implementation, the second information at least further includes a third information group, and the third information group includes at least one of: indication information of $\left\lfloor \dfrac{K^{NZ}}{2} \right\rfloor$ bits of low-priority non-zero coefficients, or indication information of non-zero coefficients of $v$ - $l_1$ layers, or indication information of non-zero coefficients of $N$ - $n_1$ target CSI-RS resources; or differential amplitude quantization information and phase quantization information of

$\min\left(K^{NZ} - v, \left\lceil \dfrac{K^{NZ}}{2} \right\rceil\right)$ low-priority non-zero coefficients, or differential amplitude quantization information and phase quantization information of non-zero coefficients of $v$ - $l_1$ layers, or differential amplitude quantization information and phase quantization information of non-zero coefficients corresponding to $N$ - $n_1$ target CSI-RS resources, where $N$

represents the target CSI-RS resources, $n_1 = \left\lfloor \dfrac{N}{2} \right\rfloor$ or $\left\lceil \dfrac{N}{2} \right\rceil$, $l_1 = \left\lfloor \dfrac{v}{2} \right\rfloor$ or $\left\lceil \dfrac{v}{2} \right\rceil$, $K^{NZ}$ represents the number of non-zero coefficients of all layers reported by the terminal, and $v$ represents the rank.

In an implementation, the second information at least includes a fourth information group, and the fourth information group includes at least one of: port selection indication information; indication information of the strongest coefficient at each layer; or FD basis vector selection indication information.

In an implementation, the second information at least further includes a fifth information group, and the fifth information group includes at least one of: port selection indication information; relative offset indication information of $N$-1 or $n_1$ - 1 target CSI-RS resources relative to the reference CSI-RS resource; position indication information of

$$2\sum_{n=1}^{N} L_n \cdot v \cdot M - \left\lfloor \frac{K^{NZ}}{2} \right\rfloor$$

bits of high-priority non-zero coefficients, or position indication information of non-zero coefficients of first $l_1$ layers, or position indication information of non-zero coefficients of $n_1$ target CSI-RS resources; indication information of one or $2N$-1 reference amplitudes, or indication information of reference amplitudes of first $l_1$ layers, or indication information of reference amplitudes of $n_1$ target CSI-RS resources; or differential amplitude quantization information and phase quantization information of

$$\max\left(0, \left\lceil \frac{K^{NZ}}{2} \right\rceil - v\right)$$

high-priority non-zero coefficients, or differential amplitude quantization information and phase quantization information of non-zero coefficients of first $l_1$ layers, or differential amplitude quantization information and phase quantization information of non-zero coefficients corresponding to $n_1$ target CSI-RS resources, where $N$ represents the target CSI-RS resources, $n_1 = \left\lfloor \frac{N}{2} \right\rfloor$ or $\left\lceil \frac{N}{2} \right\rceil$, $l_1 = \left\lfloor \frac{v}{2} \right\rfloor$ or $\left\lceil \frac{v}{2} \right\rceil$, $K^{NZ}$ represents the number of non-zero coefficients of all layers reported by the terminal, $v$ represents a rank, $M$ represents the number of FD basis vectors, $L_n$ represents the number of CSI-RS ports in a polarization direction corresponding to an $n^{th}$ target CSI-RS resource, and $n$ represents the $n^{th}$ target CSI-RS resource.

In an implementation, the second information at least further includes a sixth information group, and the sixth information group includes at least one of: position indication information of $\left\lfloor \frac{K^{NZ}}{2} \right\rfloor$ bits of low-priority non-zero coefficients, or position indication information of non-zero coefficients of $v$ - $l_1$ layers, or position indication information of non-zero coefficients of $N$-$n_1$ target CSI-RS resources; or differential amplitude quantization information and phase quantization information of

$$\min\left(K^{NZ} - v, \left\lceil \frac{K^{NZ}}{2} \right\rceil\right)$$

low-priority non-zero coefficients, or differential amplitude quantization information and phase quantization information of non-zero coefficients of $v$ - $l_1$ layers, or differential amplitude quantization information and phase quantization information of non-zero coefficients corresponding to $N$ - $n_1$ target CSI-RS resources, where $N$ represents the target CSI-RS resources, $n_1 = \left\lfloor \frac{N}{2} \right\rfloor$ or $\left\lceil \frac{N}{2} \right\rceil$, $l_1 = \left\lfloor \frac{v}{2} \right\rfloor$ or $\left\lceil \frac{v}{2} \right\rceil$, $K^{NZ}$ represents the number of non-zero coefficients of all layers reported by the terminal, and $v$ represents the rank.

In an implementation, a priority of the non-zero coefficient is determined based on one of following modes: sorting the non-zero coefficients at the same position of the same target CSI-RS resource in different layers according to a priority order of the target CSI-RS resources with a single target CSI-RS resource as a unit, where the smaller the number of layers, the greater the priority of the non-zero coefficient; sorting the non-zero coefficients corresponding to all SD basis vectors of the same target CSI-RS resource in the same layer, where the smaller an index of an SD basis vector, the greater the priority of the non-zero coefficient; and sorting the non-zero coefficients corresponding to all FD basis vectors in the same layer in an interleaved way based on a preset algorithm, where the smaller a value of the preset algorithm, the greater the priority of the non-zero coefficient; or sorting the non-zero coefficients at the same position of the same target CSI-RS resource in different layers according to a priority order of the target CSI-RS resources, where the smaller the number of layers, the greater the priority of the non-zero coefficient; sorting the non-zero coefficients corresponding to all SD basis vectors of all target CSI-RS resources in the same layer, where the smaller an index of an SD basis vector, the greater the priority of the non-zero coefficient; and sorting the non-zero coefficients corresponding to different FD basis vectors in the same layer in an interleaved way based on a preset algorithm, where the smaller a value of the preset algorithm, the greater the priority of the non-zero coefficient; or sorting the non-zero coefficients of all SD basis vectors in a single target CSI-RS resource according to a priority order of the target CSI-RS resources with the single target CSI-RS resource as a unit, where the smaller an index of an SD basis vector, the greater a priority of a corresponding non-zero coefficient; sorting the non-zero coefficients corresponding to all FD basis vectors in the single target CSI-RS resource based on a preset algorithm, where the smaller a value of the preset algorithm, the greater the priority of the non-zero coefficient; and sorting the non-zero coefficients of all layers in the same target CSI-RS resource, where the smaller the number of layers, the greater the priority of the non-zero coefficient; or sorting the non-zero coefficients corresponding to all SD basis vectors in all target CSI-RS resources in the same layer according to a priority order of the target CSI-RS resources, where the smaller an index of an SD basis vector, the greater a priority of a corresponding non-zero coefficient; sorting the non-zero coefficients corresponding to all SD basis vectors in all target CSI-RS resources in different layers in an interleaved way, where the smaller the number of layers, the greater a priority of a corresponding non-zero coefficient; and sorting the non-zero coefficients corresponding to all FD basis vectors in all target CSI-RS resources in different layers in an interleaved way based on a preset algorithm, where the smaller a value of the preset algorithm, the greater the priority of the non-zero coefficient.

In an implementation, in response to the priority of the non-zero coefficient being determined by sorting the non-zero coefficients at the same position of the same target CSI-RS resource in different layers according to the priority order of the target CSI-RS resources with the single target CSI-RS resource as the unit, where the smaller the number of layers, the greater the priority of the non-zero coefficient; sorting the non-zero coefficients corresponding to all SD basis vectors of the same target CSI-RS resource in the same layer, where the smaller the index of the SD basis vector, the greater the priority of the non-zero coefficient; and sorting the non-zero coefficients corresponding to all FD basis vectors in the same layer in the interleaved way based on the preset algorithm, where the smaller the value of the preset algorithm, the greater the priority of the non-zero coefficient, the priority of the non-zero coefficient is determined based on a following formula:

$$\mathrm{Pri}\left(l,i_n,f,n\right)=2\cdot\sum\nolimits_{j=1}^{n-1}L_j\cdot v\cdot M_v+2\cdot L_n\cdot v\cdot\pi\left(f\right)+v\cdot i_n+l$$

where $l$ represents the number of layers, $i_n$ represents an index of an SD basis vector of the $n$th target CSI-RS resource, $f$ represents the index of the FD basis vector, $n$ represents the $n$th target CSI-RS resource, $L_j$ represents the number of SD basis vectors in a polarization direction corresponding to a $j$th CSI-RS resource, $v$ represents the rank, $M_v$ represents the number of FD basis vectors, $L_n$ represents the number of SD basis vectors in a polarization direction corresponding to the $n$th target CSI-RS resource, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the FD basis vector to $N_3$, and $N_3$ represents the number of candidate FD basis vectors.

In an implementation, in response to the priority of the non-zero coefficient being determined by sorting the non-zero coefficients at the same position of the same target CSI-RS resource in different layers according to the priority order of the target CSI-RS resources, where the smaller the number of layers, the greater the priority of the non-zero coefficient; sorting the non-zero coefficients corresponding to all SD basis vectors of all target CSI-RS resources in the same layer, where the smaller the index of the SD basis vector, the greater the priority of the non-zero coefficient; and sorting the non-zero coefficients corresponding to different FD basis vectors in the same layer in the interleaved way based on the preset algorithm, where the smaller the value of the preset algorithm, the greater the priority of the non-zero coefficient, the priority of the non-zero coefficient is determined based on a following formula:

$$\mathrm{Pri}\left(l,i,f\right)=2\cdot L_{tot}\cdot v\cdot\pi\left(f\right)+v\cdot i+l$$

where $l$ represents the number of layers, $i=0,1,...,2L_{tot}-1$, $L_{tot}=\sum\nolimits_{n=1}^{N}L_n$ represents a total number of SD basis vectors in a polarization direction corresponding to $N$ CSI-RS resources, $n$ represents the $n$th target CSI-RS resource, $f$ represents the index of the FD basis vector, $v$ represents the rank, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the FD basis vector to $N_3$, and $N_3$ represents the number of candidate FD basis vectors.

In an implementation, in response to the priority of the non-zero coefficient being determined by sorting the non-zero coefficients of all SD basis vectors in the single target CSI-RS resource according to the priority order of the target CSI-RS resources with the single target CSI-RS resource as the unit, where the smaller the index of the SD basis vector, the greater the priority of the corresponding non-zero coefficient; sorting the non-zero coefficients corresponding to all FD basis vectors in the single target CSI-RS resource based on the preset algorithm, where the smaller the value of the preset algorithm, the greater the priority of the non-zero coefficient; and sorting the non-zero coefficients of all layers in the same target CSI-RS resource, where the smaller the number of layers, the greater the priority of the non-zero coefficient, the priority of the non-zero coefficient is determined based on a following formula:

$$\mathrm{Pri}\left(l,i_{n},f,n\right)=2\cdot L_{tot}\cdot M_{v}\cdot l+2\cdot\sum_{j=1}^{n-1}L_{j}\cdot M_{v}+2\cdot L_{n}\cdot\pi\left(f\right)+i_{n}$$

where $l$ represents the number of layers, $i_{n}$ represents an index of an SD basis vector of the $n^{th}$ target CSI-RS resource, $f$ represents the index of the FD basis vector, $L_{tot}=\sum_{n=1}^{N}L_{n}$ represents a total number of SD basis vectors in a polarization direction corresponding to $N$ CSI-RS resources, $n$ represents the $n^{th}$ target CSI-RS resource, $L_{j}$ represents the number of SD basis vectors in a polarization direction corresponding to a $j^{th}$ CSI-RS resource, $v$ represents the rank, $M_{v}$ represents the number of FD basis vectors, $L_{n}$ represents the number of SD basis vectors in a polarization direction corresponding to the $n^{th}$ target CSI-RS resource, $\pi\left(f\right)=\min\left(2\cdot n_{3,l}^{(f)},2\cdot\left(N_{3}-n_{3,l}^{(f)}\right)-1\right)$, $n_{3,l}^{(f)}$ represents an index mapped from the index $f$ of the FD basis vector to $N_{3}$, and $N_{3}$ represents the number of candidate FD basis vectors.

In an implementation, in response to the priority of the non-zero coefficient being determined by sorting the non-zero coefficients corresponding to all SD basis vectors in all target CSI-RS resources in the same layer according to the priority order of the target CSI-RS resources, where the smaller the index of the SD basis vector, the greater the priority of the corresponding non-zero coefficient; sorting the non-zero coefficients corresponding to all SD basis vectors in all target CSI-RS resources in different layers in the interleaved way, where the smaller the number of layers, the greater the priority of the corresponding non-zero coefficient; and sorting the non-zero coefficients corresponding to all FD basis vectors in all target CSI-RS resources in different layers in the interleaved way based on the preset algorithm, where the smaller the value of the preset algorithm, the greater the priority of the non-zero coefficient, the priority of the non-zero coefficient is determined based on a following formula:

$$\mathrm{Pri}\left(l,i,f\right)=2\cdot L_{tot}\cdot v\cdot\pi\left(f\right)+L_{tot}\cdot l+i$$

where $l$ represents the number of layers, $i = 0,1,...,\ 2L_{tot}$ - 1, $L_{tot}=\sum_{n=1}^{N}L_{n}$ represents a total number of SD basis vectors in a polarization direction corresponding to $N$ CSI-RS resources, $n$ represents the $n^{th}$ target CSI-RS resource, $f$ represents the index of the FD basis vector, $v$ represents the rank, $\pi\left(f\right)=\min\left(2\cdot n_{3,l}^{(f)},2\cdot\left(N_{3}-n_{3,l}^{(f)}\right)-1\right)$, $n_{3,l}^{(f)}$ represents an index mapped from the index $f$ of the FD basis vector to $N_{3}$, and $N_{3}$ represents the number of candidate FD basis vectors.

In an implementation, a priority of the non-zero coefficient is determined based on one of following modes: sorting the non-zero coefficients at the same position of the same target CSI-RS resource in different layers according to a priority order of the target CSI-RS resources with a single target CSI-RS resource as a unit, where the smaller the number of layers, the greater the priority of the non-zero coefficient; sorting the non-zero coefficients corresponding to indexes of all CSI-RS ports of the same target CSI-RS resource in the same layer, where the smaller an index of a CSI-RS port, the greater the priority of the non-zero coefficient; and sorting the non-zero coefficients corresponding to all FD basis vectors in the same layer, where the smaller an index of a FD basis vector, the greater the priority of the non-zero coefficient; or sorting the non-zero coefficients at the same position of the same target CSI-RS resource in different layers according to a priority order of the target CSI-RS resources, where the smaller the number of layers, the greater the priority of the non-zero coefficient; sorting the non-zero coefficients corresponding to indexes of all CSI-RS ports of all target CSI-RS resources in the same layer, where the smaller an index of a CSI-RS port, the greater the priority of the non-zero coefficient; and sorting the non-zero coefficients corresponding to different FD basis vectors in the same layer, where the smaller an index of a FD basis vector, the greater the priority of the non-zero coefficient; or sorting the non-zero coefficients of all CSI-RS ports in a single target CSI-RS resource according to a priority order of the target CSI-RS resources with the single target CSI-RS resource as a unit, where the smaller an index of a CSI-RS port, the greater a priority of a corresponding non-zero coefficient; sorting the non-zero coefficients of all FD basis vectors in the single target CSI-RS resource, where the smaller an index of a FD basis vector, the greater the priority of the non-zero coefficient; and sorting the non-zero coefficients of all layers in the single target CSI-RS resource, where the smaller the number of layers, the greater the priority of the non-zero coefficient; or sorting the non-zero coefficients corresponding to all CSI-RS ports in all target CSI-RS resources in the same layer according to a priority order of the target CSI-RS resources, where the smaller an index of a CSI-RS port, the greater a priority of a corresponding non-zero coefficient; sorting the non-zero coefficients corresponding to all CSI-RS ports in all target CSI-RS resources in different layers, where the smaller the number of layers, the greater a priority of a corresponding non-zero coefficient; and sorting the non-zero coefficients corresponding to all FD basis vectors in all target CSI-RS resources in different layers, where the smaller an index of a FD basis vector, the greater the priority of the non-zero coefficient.

In an implementation, in response to the priority of the non-zero coefficient being determined by sorting the non-zero coefficients at the same position of the same target CSI-RS resource in different layers according to a priority order of the target CSI-RS resources with a single target CSI-RS resource as a unit, where the smaller the number of layers, the greater the priority of the non-zero coefficient; sorting the non-zero coefficients corresponding to indexes of all CSI-RS ports of the same target CSI-RS resource in the same layer, where the smaller an index of a CSI-RS port, the greater the priority of the non-zero coefficient; and sorting the non-zero coefficients corresponding to all FD basis vectors in the same layer, where the smaller an index of a FD basis vector, the greater the priority of the non-zero coefficient, the priority of the non-zero coefficient is determined based on a following formula:

$$\mathrm{Pri}\left(l,i_{n},f,n\right)=v\cdot\sum_{j=1}^{n-1}K_{1,n}\cdot M+K_{1,n}\cdot v\cdot f+v\cdot i_{n}+l$$

where $l$ represents the number of layers, $i_n$ represents an index of a CSI-RS port of the $n$th target CSI-RS resource, $f$ represents the index of the FD basis vector, $n$ represents the $n$th target CSI-RS resource, $v$ represents the rank, $M$ represents the number of FD basis vectors, and $K_{1,n}$ represents the number of CSI-RS ports selected by the terminal corresponding to the $n$th target CSI-RS resource.

In an implementation, in response to the priority of the non-zero coefficient being determined by sorting the non-zero coefficients at the same position of the same target CSI-RS resource in different layers according to the priority order of the target CSI-RS resources, where the smaller the number of layers, the greater the priority of the non-zero coefficient; sorting the non-zero coefficients corresponding to indexes of all CSI-RS ports of all target CSI-RS resources in the same layer, where the smaller the index of the CSI-RS port, the greater the priority of the non-zero coefficient; and sorting the non-zero coefficients corresponding to different FD basis vectors in the same layer, where the smaller the index of the FD basis vector, the greater the priority of the non-zero coefficient, the priority of the non-zero coefficient is determined based on a following formula:

$$\mathrm{Pri}\left(l,i,f\right)=K_{1,tot}\cdot v\cdot f+v\cdot i+l$$

where $l$ represents the number of layers, $i=0,1,...,2K_{1,tot}-1$, $K_{1,tot}=\sum_{n=1}^{N}K_{1,n}$ represents a total number of CSI-RS ports selected by the terminal corresponding to $N$ CSI-RS resources, $n$ represents the $n$th target CSI-RS resource, $f$ represents the index of the FD basis vector, $v$ represents the rank, $K_{1,tot}$ represents the total number of CSI-RS ports selected by the terminal corresponding to the $N$ CSI-RS resources, and $K_{1,n}$ represents the number of CSI-RS ports selected by the terminal corresponding to the $n$th target CSI-RS resource.

In an implementation, in response to the priority of the non-zero coefficient being determined by sorting the non-zero coefficients of all CSI-RS ports in the single target CSI-RS resource according to the priority order of the target CSI-RS resources with the single target CSI-RS resource as the unit, where the smaller the index of the CSI-RS port, the greater the priority of the corresponding non-zero coefficient; sorting the non-zero coefficients of all FD basis vectors in the single target CSI-RS resource, where the smaller the index of the FD basis vector, the greater the priority of the non-zero coefficient; and sorting the non-zero coefficients of all layers in the single target CSI-RS resource, where the smaller the number of layers, the greater the priority of the non-zero coefficient, the priority of the non-zero coefficient is determined based on a following formula:

$$\mathrm{Pri}\left(l,i_{n},f,n\right)=l\cdot K_{1,tot}\cdot M+\sum_{j=1}^{n-1}K_{1,j}\cdot M+K_{1,n}\cdot f+i_{n}$$

where $l$ represents the number of layers, $i_n$ represents an index of a CSI-RS port of the $n$th target CSI-RS resource, $f$

represents the index of the FD basis vector, $n$ represents the $n^{th}$ target CSI-RS resource, $v$ represents the rank, $K_{1,tot}$ represents a total number of CSI-RS ports selected by the terminal corresponding to $N$ CSI-RS resources, $M$ represents the number of FD basis vectors, $K_{1,j}$ represents the number of CSI-RS ports selected by the terminal corresponding to a $j^{th}$ CSI-RS resource, and $K_{1,n}$ represents the number of CSI-RS ports selected by the terminal corresponding to the $n^{th}$ target CSI-RS resource.

In an implementation, in response to the priority of the non-zero coefficient being determined by sorting the non-zero coefficients corresponding to all CSI-RS ports in all target CSI-RS resources in the same layer according to the priority order of the target CSI-RS resources, where the smaller the index of the CSI-RS port, the greater the priority of the corresponding non-zero coefficient; sorting the non-zero coefficients corresponding to all CSI-RS ports in all target CSI-RS resources in different layers, where the smaller the number of layers, the greater the priority of the corresponding non-zero coefficient; and sorting the non-zero coefficients corresponding to all FD basis vectors in all target CSI-RS resources in different layers, where the smaller the index of the FD basis vector, the greater the priority of the non-zero coefficient, the priority of the non-zero coefficient is determined based on a following formula:

$$\mathrm{Pri}\left(l,i,f\right) = K_{1,tot} \cdot v \cdot f + K_{1,tot} \cdot l + i$$

where $l$ represents the number of layers, $i = 0,1..., 2K_{1,tot} - 1$, $K_{1,tot} = \sum_{n=1}^{N} K_{1,n}$ represents a total number of CSI-RS ports selected by the terminal corresponding to $N$ CSI-RS resources, $n$ represents the $n^{th}$ target CSI-RS resource, $f$ represents the index of the FD basis vector, $v$ represents the rank, $K_{1,tot}$ represents the total number of CSI-RS ports selected by the terminal corresponding to the $N$ CSI-RS resources, and $K_{1,n}$ represents the number of CSI-RS ports selected by the terminal corresponding to the $n^{th}$ target CSI-RS resource.

In an implementation, the $N$ target CSI-RS resources correspond to $N$ CSIs, and the $N$ target CSI-RS resources have priorities; and the sending module 102 is configured to send $N$ CSIs corresponding to the $N$ target CSI-RS resources to the network device based on a priority order of the $N$ target CSI-RS resources.

In an implementation, the priorities of the $N$ target CSI-RS resources are determined based on the indexes of the $N$ target CSI-RS resources.

In an implementation, the reference CSI-RS resource has a highest priority among the $N$ target CSI-RS resources, and the priorities of remaining $N$-1 target CSI-RS resources are determined based on indexes of the $N$-1 target CSI-RS resources.

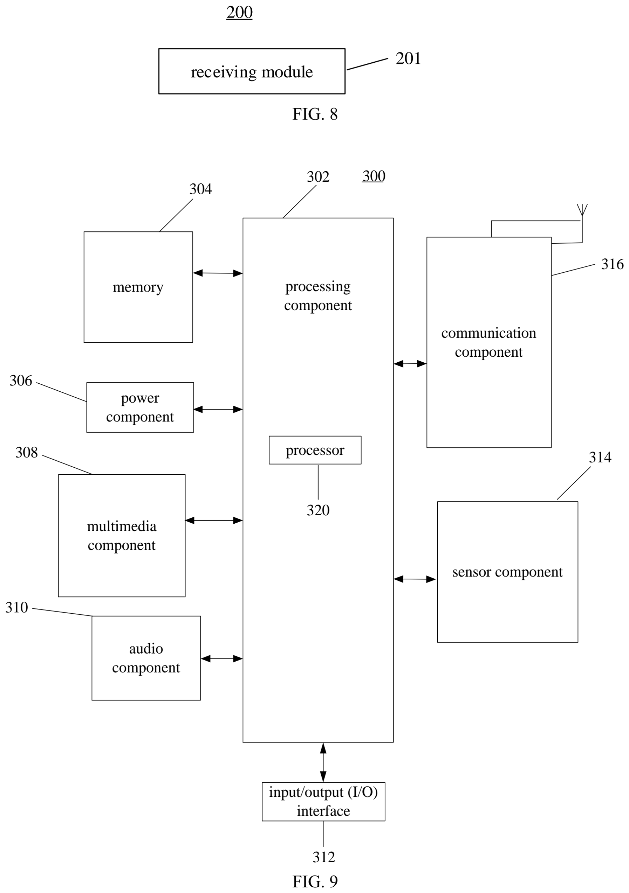

FIG. 8 is a block diagram illustrating an apparatus for reporting CSI according to an illustrative embodiment. Referring to FIG. 8, the apparatus includes a receiving module 201. The device 200 is applied to a network device.

The receiving module 201 is configured to receive CSI corresponding to $N$ target CSI-RS resources sent by a terminal in response to configuring, by the network device, the $N_{trp}$ CSI-RS resources for the terminal, where $N_{trp}$ and $N$ are positive integers, and $1 \le N \le N_{trp}$.

In an implementation, the $N$ target CSI-RS resources correspond to one CSI, and the CSI includes first information; and the first information includes at least one of: rank indication information; wideband and/or sub-band channel quality indication information; non-zero coefficient number indication information of all layers; indication information of the number of spatial domain (SD) basis vectors or the number of ports in each polarization direction corresponding to the $N$ target CSI-RS resources; indication information of the $N$ target CSI-RS resources; or indication information of a reference CSI-RS resource, in which the reference CSI-RS resource indicates a CSI-RS resource corresponding to a strongest coefficient, or a CSI-RS resource indicated by the terminal, or a first CSI-RS resource predefined between the terminal and the network device.

In an implementation, the CSI further includes second information, the second information includes multiple information groups, and different information groups in the multiple information groups correspond to different priorities; and one or more information groups with lower priorities in the second information are discarded in response to uplink resources allocated by the network device being unable to transmit all information included in the first information and the second information.

In an implementation, the second information at least includes a first information group, and the first information group includes at least one of: indication information of an SD basis vector; or indication information of the strongest coefficient at each layer.

In an implementation, the second information at least further includes a second information group, and the second information group includes at least one of: frequency domain (FD) basis vector indication information of one or $N$ or $n_1$ target CSI-RS resources; relative offset indication information of $N$-1 or $n_1$ - 1 target CSI-RS resources relative to the reference CSI-RS resource; starting point indication information of at least one candidate FD basis vector window; position

indication information of $v \cdot 2 \sum_{n=1}^{N} L_n \cdot M_v - \left\lfloor \dfrac{K^{NZ}}{2} \right\rfloor$ bits of high-priority non-zero coefficients, or position indication information of non-zero coefficients of first $l_1$ layers, or position indication information of non-zero coefficients of $n_1$ target CSI-RS resources; indication information of one or 2$N$-1 reference amplitudes, or indication information of reference amplitudes of first $l_1$ layers, or indication information of reference amplitudes of $n_1$ target CSI-RS resources; or differential amplitude quantization information and phase quantization information of $\max\left(0, \left\lceil \dfrac{K^{NZ}}{2} \right\rceil - \upsilon\right)$ high-priority non-zero coefficients, or differential amplitude quantization information and phase quantization information of non-zero coefficients of first $l_1$ layers, or differential amplitude quantization information and phase quantization information of non-zero coefficients corresponding to $n_1$ target CSI-RS resources, where $N$ represents the target CSI-RS resources, $n_1 = \left\lfloor \dfrac{N}{2} \right\rfloor$ or $\left\lceil \dfrac{N}{2} \right\rceil$, $l_1 = \left\lfloor \dfrac{v}{2} \right\rfloor$ or $\left\lceil \dfrac{v}{2} \right\rceil$, $K^{NZ}$ represents the number of non-zero coefficients of all layers reported by the terminal, $\upsilon$ represents a rank, $M_v$ represents the number of FD basis vectors, $L_n$ represents the number of SD basis vectors in a polarization direction corresponding to an $n^{th}$ target CSI-RS resource, and $n$ represents the $n^{th}$ target CSI-RS resource.

In an implementation, the second information at least further includes a third information group, and the third information group includes at least one of: indication information of $\left\lfloor \dfrac{K^{NZ}}{2} \right\rfloor$ bits of low-priority non-zero coefficients, or indication information of non-zero coefficients of $v$ - $l_1$ layers, or indication information of non-zero coefficients of $N$ - $n_1$ target CSI-RS resources; or differential amplitude quantization information and phase quantization information of $\min\left(K^{NZ} - v, \left\lceil \dfrac{K^{NZ}}{2} \right\rceil\right)$ low-priority non-zero coefficients, or differential amplitude quantization information and phase quantization information of non-zero coefficients of $v$ - $l_1$ layers, or differential amplitude quantization information and phase quantization information of non-zero coefficients corresponding to $N$ - $n_1$ target CSI-RS resources, where $N$ represents the target CSI-RS resources, $n_1 = \left\lfloor \dfrac{N}{2} \right\rfloor$ or $\left\lceil \dfrac{N}{2} \right\rceil$, $l_1 = \left\lfloor \dfrac{v}{2} \right\rfloor$ or $\left\lceil \dfrac{v}{2} \right\rceil$, $K^{NZ}$ represents the number of non-zero coefficients of all layers reported by the terminal, and $\upsilon$ represents the rank.

In an implementation, the second information at least includes a first information group, and the first information group includes at least one of: port selection indication information; indication information of the strongest coefficient at each layer; or FD basis vector selection indication information.

In an implementation, the second information at least further includes a second information group, and the second information group includes at least one of: port selection indication information; relative offset indication information of $N$-1 or $n_1$ - 1 target CSI-RS resources relative to the reference CSI-RS resource; position indication information of $2 \sum_{n=1}^{N} L_n \cdot v \cdot M - \left\lfloor \dfrac{K^{NZ}}{2} \right\rfloor$ bits of high-priority non-zero coefficients, or position indication information of non-zero coefficients of first $l_1$ layers, or position indication information of non-zero coefficients of $n_1$ target CSI-RS resources; indication information of one or 2N-1 reference amplitudes, or indication information of reference amplitudes of first $l_1$ layers, or indication information of reference amplitudes of $n_1$ target CSI-RS resources; or differential amplitude quantization information and phase quantization information of $\max\left(0, \left\lceil \dfrac{K^{NZ}}{2} \right\rceil - \upsilon\right)$ high-priority non-zero coefficients, or differential amplitude quantization information and phase quantization information of non-zero coefficients of first $l_1$ layers, or differential amplitude quantization information and phase quantization information of non-zero coefficients corresponding to $n_1$ target CSI-RS resources, where $N$ represents the target CSI-RS resources, $n_1 = \left\lfloor \dfrac{N}{2} \right\rfloor$ or $\left\lceil \dfrac{N}{2} \right\rceil$,

$$l_1 = \left\lfloor \frac{v}{2} \right\rfloor \text{ or } \left\lceil \frac{v}{2} \right\rceil$$, $K^{NZ}$ represents the number of non-zero coefficients of all layers reported by the terminal, $\upsilon$ represents a rank, $M$ represents the number of FD basis vectors, $L_n$ represents the number of CSI-RS ports in a polarization direction corresponding to an $n$th target CSI-RS resource, and $n$ represents the $n$th target CSI-RS resource.

In an implementation, the second information at least further includes a third information group, and the third information group includes at least one of: position indication information of $\left\lfloor \dfrac{K^{NZ}}{2} \right\rfloor$ bits of low-priority non-zero coefficients, or position indication information of non-zero coefficients of $v - l_1$ layers, or position indication information of non-zero coefficients of $N - n_1$ target CSI-RS resources; or differential amplitude quantization information and phase quantization information of $\min\left( K^{NZ} - v, \left\lceil \dfrac{K^{NZ}}{2} \right\rceil \right)$ low-priority non-zero coefficients, or differential amplitude quantization information and phase quantization information of non-zero coefficients of $v - l_1$ layers, or differential amplitude quantization information and phase quantization information of non-zero coefficients corresponding to $N - n_1$ target CSI-RS resources, where $N$ represents the target CSI-RS resources, $n_1 = \left\lfloor \dfrac{N}{2} \right\rfloor$ or $\left\lceil \dfrac{N}{2} \right\rceil$, $l_1 = \left\lfloor \dfrac{v}{2} \right\rfloor$ or $\left\lceil \dfrac{v}{2} \right\rceil$, $K^{NZ}$ represents the number of non-zero coefficients of all layers reported by the terminal, and $\upsilon$ represents the rank.

In an implementation, a priority of the non-zero coefficient is determined based on one of following modes: sorting the non-zero coefficients at the same position of the same target CSI-RS resource in different layers according to a priority order of the target CSI-RS resources with a single target CSI-RS resource as a unit, where the smaller the number of layers, the greater the priority of the non-zero coefficient; sorting the non-zero coefficients corresponding to all SD basis vectors of the same target CSI-RS resource in the same layer, where the smaller an index of an SD basis vector, the greater the priority of the non-zero coefficient; and sorting the non-zero coefficients corresponding to all FD basis vectors in the same layer in an interleaved way based on a preset algorithm, where the smaller a value of the preset algorithm, the greater the priority of the non-zero coefficient; or sorting the non-zero coefficients at the same position of the same target CSI-RS resource in different layers according to a priority order of the target CSI-RS resources, where the smaller the number of layers, the greater the priority of the non-zero coefficient; sorting the non-zero coefficients corresponding to all SD basis vectors of all target CSI-RS resources in the same layer, where the smaller an index of an SD basis vector, the greater the priority of the non-zero coefficient; and sorting the non-zero coefficients corresponding to different FD basis vectors in the same layer in an interleaved way based on a preset algorithm, where the smaller a value of the preset algorithm, the greater the priority of the non-zero coefficient; or sorting the non-zero coefficients of all SD basis vectors in a single target CSI-RS resource according to a priority order of the target CSI-RS resources with the single target CSI-RS resource as a unit, where the smaller an index of an SD basis vector, the greater a priority of a corresponding non-zero coefficient; sorting the non-zero coefficients corresponding to all FD basis vectors in the single target CSI-RS resource based on a preset algorithm, where the smaller a value of the preset algorithm, the greater the priority of the non-zero coefficient; and sorting the non-zero coefficients of all layers in the same target CSI-RS resource, where the smaller the number of layers, the greater the priority of the non-zero coefficient; or sorting the non-zero coefficients corresponding to all SD basis vectors in all target CSI-RS resources in the same layer according to a priority order of the target CSI-RS resources, where the smaller an index of an SD basis vector, the greater a priority of a corresponding non-zero coefficient; sorting the non-zero coefficients corresponding to all SD basis vectors in all target CSI-RS resources in different layers in an interleaved way, where the smaller the number of layers, the greater a priority of a corresponding non-zero coefficient; and sorting the non-zero coefficients corresponding to all FD basis vectors in all target CSI-RS resources in different layers in an interleaved way based on a preset algorithm, where the smaller a value of the preset algorithm, the greater the priority of the non-zero coefficient.

In an implementation, in response to the priority of the non-zero coefficient being determined by sorting the non-zero coefficients at the same position of the same target CSI-RS resource in different layers according to the priority order of the target CSI-RS resources with the single target CSI-RS resource as the unit, where the smaller the number of layers, the greater the priority of the non-zero coefficient; sorting the non-zero coefficients corresponding to all SD basis vectors of the same target CSI-RS resource in the same layer, where the smaller the index of the SD basis vector, the greater the priority of the non-zero coefficient; and sorting the non-zero coefficients corresponding to all FD basis vectors in the same layer in the interleaved way based on the preset algorithm, where the smaller the value of the preset algorithm, the greater the priority of the non-zero coefficient, the priority of the non-zero coefficient is determined based on a following formula:

$$\mathrm{Pri}\left(l,i_n,f,n\right)=2\cdot\sum_{j=1}^{n-1}L_j\cdot v\cdot M_v+2\cdot L_n\cdot v\cdot \pi\left(f\right)+v\cdot i_n+l$$

where $l$ represents the number of layers, $i_n$ represents an index of an SD basis vector of the $n^{\text{th}}$ target CSI-RS resource, $f$ represents the index of the FD basis vector, $n$ represents the $n^{\text{th}}$ target CSI-RS resource, $L_j$ represents the number of SD basis vectors in a polarization direction corresponding to a $j^{\text{th}}$ CSI-RS resource, $v$ represents the rank, $M_v$ represents the number of FD basis vectors, $L_n$ represents the number of SD basis vectors in a polarization direction corresponding to the $n^{\text{th}}$ target CSI-RS resource,

$$\pi\left(f\right)=\min\left(2\cdot n_{3,l}^{(f)},2\cdot\left(N_3-n_{3,l}^{(f)}\right)-1\right),\quad n_{3,l}^{(f)}$$ represents an index mapped from the index $f$ of the FD basis vector to $N_3$, and $N_3$ represents the number of candidate FD basis vectors.

In an implementation, in response to the priority of the non-zero coefficient being determined by sorting the non-zero coefficients at the same position of the same target CSI-RS resource in different layers according to the priority order of the target CSI-RS resources, where the smaller the number of layers, the greater the priority of the non-zero coefficient; sorting the non-zero coefficients corresponding to all SD basis vectors of all target CSI-RS resources in the same layer, where the smaller the index of the SD basis vector, the greater the priority of the non-zero coefficient; and sorting the non-zero coefficients corresponding to different FD basis vectors in the same layer in the interleaved way based on the preset algorithm, where the smaller the value of the preset algorithm, the greater the priority of the non-zero coefficient, the priority of the non-zero coefficient is determined based on a following formula:

$$\mathrm{Pri}\left(l,i,f\right)=2\cdot L_{tot}\cdot v\cdot \pi\left(f\right)+v\cdot i+l$$

where $l$ represents the number of layers, $i=0,1,...,2L_{tot}-1$, $L_{tot}=\sum_{n=1}^{N}L_n$ represents a total number of SD basis vectors in a polarization direction corresponding to $N$ CSI-RS resources, $n$ represents the $n^{\text{th}}$ target CSI-RS resource, $f$ represents the index of the FD basis vector, $v$ represents the rank, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the FD basis vector to $N_3$, and $N_3$ represents the number of candidate FD basis vectors.

In an implementation, in response to the priority of the non-zero coefficient being determined by sorting the non-zero coefficients of all SD basis vectors in the single target CSI-RS resource according to the priority order of the target CSI-RS resources with the single target CSI-RS resource as the unit, where the smaller the index of the SD basis vector, the greater the priority of the corresponding non-zero coefficient; sorting the non-zero coefficients corresponding to all FD basis vectors in the single target CSI-RS resource based on the preset algorithm, where the smaller the value of the preset algorithm, the greater the priority of the non-zero coefficient; and sorting the non-zero coefficients of all layers in the same target CSI-RS resource, where the smaller the number of layers, the greater the priority of the non-zero coefficient, the priority of the non-zero coefficient is determined based on a following formula:

$$\mathrm{Pri}\left(l,i_n,f,n\right)=2\cdot L_{tot}\cdot M_v\cdot l+2\cdot\sum_{j=1}^{n-1}L_j\cdot M_v+2\cdot L_n\cdot \pi\left(f\right)+i_n$$

where $l$ represents the number of layers, $i_n$ represents an index of an SD basis vector of the $n^{\text{th}}$ target CSI-RS resource, $f$ represents the index of the FD basis vector, $L_{tot}=\sum_{n=1}^{N}L_n$ represents a total number of SD basis vectors in a polarization direction corresponding to $N$ CSI-RS resources, $n$ represents the $n^{\text{th}}$ target CSI-RS resource, $L_j$ represents the number of SD basis vectors in a polarization direction corresponding to a $j^{\text{th}}$ CSI-RS resource, $v$ represents the rank, $M_v$ represents the number of FD basis vectors, $L_n$ represents the number of SD basis vectors in a polarization direction corresponding to the $n^{\text{th}}$ target CSI-RS resource, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an

index mapped from the index $f$ of the FD basis vector to $N_3$, and $N_3$ represents the number of candidate FD basis vectors.

In an implementation, in response to the priority of the non-zero coefficient being determined by sorting the non-zero coefficients corresponding to all SD basis vectors in all target CSI-RS resources in the same layer according to the priority order of the target CSI-RS resources, where the smaller the index of the SD basis vector, the greater the priority of the corresponding non-zero coefficient; sorting the non-zero coefficients corresponding to all SD basis vectors in all target CSI-RS resources in different layers in the interleaved way, where the smaller the number of layers, the greater the priority of the corresponding non-zero coefficient; and sorting the non-zero coefficients corresponding to all FD basis vectors in all target CSI-RS resources in different layers in the interleaved way based on the preset algorithm, where the smaller the value of the preset algorithm, the greater the priority of the non-zero coefficient, the priority of the non-zero coefficient is determined based on a following formula:

$$\mathrm{Pri}\left(l,i,f\right) = 2 \cdot L_{tot} \cdot v \cdot \pi\left(f\right) + L_{tot} \cdot l + i$$

where $l$ represents the number of layers, $i = 0,1,...,\ 2L_{tot} - 1$, $L_{tot} = \sum_{n=1}^{N} L_n$ represents a total number of SD basis vectors in a polarization direction corresponding to $N$ CSI-RS resources, $n$ represents the $n^{th}$ target CSI-RS resource, $f$ represents the index of the FD basis vector, $v$ represents the rank, $\pi\left(f\right) = \min\left(2 \cdot n_{3,l}^{(f)}, 2 \cdot \left(N_3 - n_{3,l}^{(f)}\right) - 1\right)$, $n_{3,l}^{(f)}$ represents an index mapped from the index $f$ of the FD basis vector to $N_3$, and $N_3$ represents the number of candidate FD basis vectors.

In an implementation, a priority of the non-zero coefficient is determined based on one of following modes: sorting the non-zero coefficients at the same position of the same target CSI-RS resource in different layers according to a priority order of the target CSI-RS resources with a single target CSI-RS resource as a unit, where the smaller the number of layers, the greater the priority of the non-zero coefficient; sorting the non-zero coefficients corresponding to indexes of all CSI-RS ports of the same target CSI-RS resource in the same layer, where the smaller an index of a CSI-RS port, the greater the priority of the non-zero coefficient; and sorting the non-zero coefficients corresponding to all FD basis vectors in the same layer, where the smaller an index of a FD basis vector, the greater the priority of the non-zero coefficient; or sorting the non-zero coefficients at the same position of the same target CSI-RS resource in different layers according to a priority order of the target CSI-RS resources, where the smaller the number of layers, the greater the priority of the non-zero coefficient; sorting the non-zero coefficients corresponding to indexes of all CSI-RS ports of all target CSI-RS resources in the same layer, where the smaller an index of a CSI-RS port, the greater the priority of the non-zero coefficient; and sorting the non-zero coefficients corresponding to different FD basis vectors in the same layer, where the smaller an index of a FD basis vector, the greater the priority of the non-zero coefficient; or sorting the non-zero coefficients of all CSI-RS ports in a single target CSI-RS resource according to a priority order of the target CSI-RS resources with the single target CSI-RS resource as a unit, where the smaller an index of a CSI-RS port, the greater a priority of a corresponding non-zero coefficient; sorting the non-zero coefficients of all FD basis vectors in the single target CSI-RS resource, where the smaller an index of a FD basis vector, the greater the priority of the non-zero coefficient; and sorting the non-zero coefficients of all layers in the single target CSI-RS resource, where the smaller the number of layers, the greater the priority of the non-zero coefficient; or sorting the non-zero coefficients corresponding to all CSI-RS ports in all target CSI-RS resources in the same layer according to a priority order of the target CSI-RS resources, where the smaller an index of a CSI-RS port, the greater a priority of a corresponding non-zero coefficient; sorting the non-zero coefficients corresponding to all CSI-RS ports in all target CSI-RS resources in different layers, where the smaller the number of layers, the greater a priority of a corresponding non-zero coefficient; and sorting the non-zero coefficients corresponding to all FD basis vectors in all target CSI-RS resources in different layers, where the smaller an index of a FD basis vector, the greater the priority of the non-zero coefficient.

In an implementation, in response to the priority of the non-zero coefficient being determined by sorting the non-zero coefficients at the same position of the same target CSI-RS resource in different layers according to a priority order of the target CSI-RS resources with a single target CSI-RS resource as a unit, where the smaller the number of layers, the greater the priority of the non-zero coefficient; sorting the non-zero coefficients corresponding to indexes of all CSI-RS ports of the same target CSI-RS resource in the same layer, where the smaller an index of a CSI-RS port, the greater the priority of the non-zero coefficient; and sorting the non-zero coefficients corresponding to all FD basis vectors in the same layer, where the smaller an index of a FD basis vector, the greater the priority of the non-zero coefficient, the priority of the non-zero coefficient is determined based on a following formula:

$$\mathrm{Pri}\left(l, i_n, f, n\right) = v \cdot \sum_{j=1}^{n-1} K_{1,n} \cdot M + K_{1,n} \cdot v \cdot f + v \cdot i_n + l$$

where $l$ represents the number of layers, $i_n$ represents an index of a CSI-RS port of the $n^{\text{th}}$ target CSI-RS resource, $f$ represents the index of the FD basis vector, $n$ represents the $n^{\text{th}}$ target CSI-RS resource, $v$ represents the rank, $M$ represents the number of FD basis vectors, and $K_{1,n}$ represents the number of CSI-RS ports selected by the terminal corresponding to the $n^{\text{th}}$ target CSI-RS resource.

In an implementation, in response to the priority of the non-zero coefficient being determined by sorting the non-zero coefficients at the same position of the same target CSI-RS resource in different layers according to the priority order of the target CSI-RS resources, where the smaller the number of layers, the greater the priority of the non-zero coefficient; sorting the non-zero coefficients corresponding to indexes of all CSI-RS ports of all target CSI-RS resources in the same layer, where the smaller the index of the CSI-RS port, the greater the priority of the non-zero coefficient; and sorting the non-zero coefficients corresponding to different FD basis vectors in the same layer, where the smaller the index of the FD basis vector, the greater the priority of the non-zero coefficient, the priority of the non-zero coefficient is determined based on a following formula:

$$\mathrm{Pri}\left(l, i, f\right) = K_{1,tot} \cdot v \cdot f + v \cdot i + l$$

where $l$ represents the number of layers, $i = 0, 1, ..., 2K_{1,tot} - 1$, $K_{1,tot} = \sum_{n=1}^{N} K_{1,n}$ represents a total number of CSI-RS ports selected by the terminal corresponding to $N$ CSI-RS resources, $n$ represents the $n^{\text{th}}$ target CSI-RS resource, $f$ represents the index of the FD basis vector, $v$ represents the rank, $K_{1,tot}$ represents the total number of CSI-RS ports selected by the terminal corresponding to the $N$ CSI-RS resources, and $K_{1,n}$ represents the number of CSI-RS ports selected by the terminal corresponding to the $n^{\text{th}}$ target CSI-RS resource.

In an implementation, in response to the priority of the non-zero coefficient being determined by sorting the non-zero coefficients of all CSI-RS ports in the single target CSI-RS resource according to the priority order of the target CSI-RS resources with the single target CSI-RS resource as the unit, where the smaller the index of the CSI-RS port, the greater the priority of the corresponding non-zero coefficient; sorting the non-zero coefficients of all FD basis vectors in the single target CSI-RS resource, where the smaller the index of the FD basis vector, the greater the priority of the non-zero coefficient; and sorting the non-zero coefficients of all layers in the single target CSI-RS resource, where the smaller the number of layers, the greater the priority of the non-zero coefficient, the priority of the non-zero coefficient is determined based on a following formula:

$$\mathrm{Pri}\left(l, i_n, f, n\right) = l \cdot K_{1,tot} \cdot M + \sum_{j=1}^{n-1} K_{1,j} \cdot M + K_{1,n} \cdot f + i_n$$

where $l$ represents the number of layers, $i_n$ represents an index of a CSI-RS port of the $n^{\text{th}}$ target CSI-RS resource, $f$ represents the index of the FD basis vector, $n$ represents the $n^{\text{th}}$ target CSI-RS resource, $v$ represents the rank, $K_{1,tot}$ represents a total number of CSI-RS ports selected by the terminal corresponding to $N$ CSI-RS resources, $M$ represents the number of FD basis vectors, $K_{1,j}$ represents the number of CSI-RS ports selected by the terminal corresponding to a $j^{\text{th}}$ CSI-RS resource, and $K_{1,n}$ represents the number of CSI-RS ports selected by the terminal corresponding to the $n^{\text{th}}$ target CSI-RS resource.

In an implementation, in response to the priority of the non-zero coefficient being determined by sorting the non-zero coefficients corresponding to all CSI-RS ports in all target CSI-RS resources in the same layer according to the priority order of the target CSI-RS resources, where the smaller the index of the CSI-RS port, the greater the priority of the corresponding non-zero coefficient; sorting the non-zero coefficients corresponding to all CSI-RS ports in all target CSI-RS resources in different layers, where the smaller the number of layers, the greater the priority of the corresponding non-zero coefficient; and sorting the non-zero coefficients corresponding to all FD basis vectors in all target CSI-RS resources in different layers, where the smaller the index of the FD basis vector, the greater the priority of the non-zero coefficient, the priority of the non-zero coefficient is determined based on a following formula:

$$\mathrm{Pri}\left(l, i, f\right) = K_{1,tot} \cdot v \cdot f + K_{1,tot} \cdot l + i$$

where $l$ represents the number of layers, $i = 0,1,\ldots, 2K_{1,tot} - 1$, $K_{1,tot} = \sum_{n=1}^{N} K_{1,n}$ represents a total number of CSI-RS ports selected by the terminal corresponding to $N$ CSI-RS resources, $n$ represents the $n^{th}$ target CSI-RS resource, $f$ represents the index of the FD basis vector, $v$ represents the rank, $K_{1,tot}$ represents the total number of CSI-RS ports selected by the terminal corresponding to the $N$ CSI-RS resources, and $K_{1,n}$ represents the number of CSI-RS ports selected by the terminal corresponding to the $n^{th}$ target CSI-RS resource.

In an implementation, the $N$ target CSI-RS resources correspond to $N$ CSIs, and the $N$ target CSI-RS resources have priorities; and the receiving module 201 is configured to receive $N$ CSIs corresponding to the $N$ target CSI-RS resources sent by the terminal to the network device based on a priority order of the $N$ target CSI-RS resources.

In an implementation, the priorities of the $N$ target CSI-RS resources are determined based on the indexes of the $N$ target CSI-RS resources.

In an implementation, the reference CSI-RS resource has a highest priority among the $N$ target CSI-RS resources, and the priorities of remaining $N$-1 target CSI-RS resources are determined based on indexes of the $N$-1 target CSI-RS resources.

With respect to the apparatus in the above embodiments, the specific manners for performing operations for individual modules therein have been described in detail in the embodiments regarding the method, which will not be elaborated herein.

FIG. 9 is a block diagram illustrating a device for reporting channel status information (CSI) according to an illustrative embodiment. For example, the device 300 may be a mobile phone, a computer, a digital broadcast terminal, a messaging device, a game console, a tablet device, a medical device, a fitness device, a personal digital assistant, or the like.

Referring to FIG. 9, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, phone calls, data communications, camera operations, and recording operations. The processing component 302 may include one or more processors 320 to execute instructions to perform all or some of the steps in the above-described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, videos, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as keyboards, click wheels, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wireless, between the device 300 and other devices. The device 300 may access a wireless network based on a communication standard, such as Wi-Fi, 2G, or 3G, or a combination thereof. In an illustrative embodiment, the communication component 316 receives a broadcast signal or broadcast associated information from an external broadcast management system via a broadcast channel. In an illustrative embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned methods.

In an illustrative embodiment, there is also provided a non-transitory computer-readable storage medium including instructions, such as included in the memory 304, executable by the processor 320 in the device 300, for completing the above-mentioned methods. For example, the non-transitory computer-readable storage medium may be a ROM, a random access memory (RAM), a CD-ROM, a magnetic tape, a floppy disc, an optical data storage device, and the like.

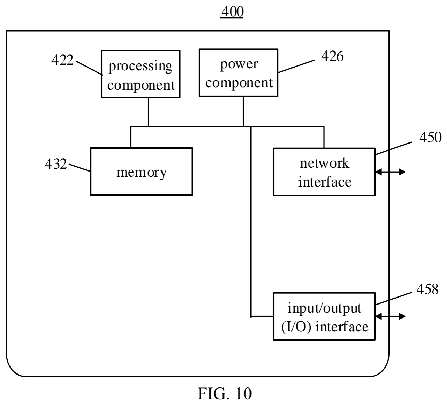

FIG. 10 is a block diagram illustrating a device for reporting channel status information (CSI) according to an illustrative embodiment. For example, the device 400 may be provided as a network device. Referring to FIG. 10, the device 400 includes a processing component 422 and a memory resource represented by a memory 432. The processing component 422 may further include one or more processors. The memory 432 is configured to store instructions executable by the processing component 422, such as an application program. The application program stored in the memory 432 may include one or more modules each corresponding to a set of instructions. In addition, the processing component 422 is configured to execute the instructions to perform the above-mentioned methods.

The device 400 further includes a power component 426 configured to perform a power management on the device 400, a wired or wireless network interface 450 configured to connect the device 400 to the network, and an input/output (I/O) interface 458. The device 400 may operate an operating system stored in the memory 432, such as Windows Server™, Mac OS X™, Unix™, Linux™, Free BSD™, or the like.

In an illustrative embodiment, there is also provided a non-transitory computer readable storage medium including instructions, such as included in the memory 432, executable by the processing component 422 in the device 400, for completing the above-mentioned methods. For example, the non-transitory computer-readable storage medium may be a ROM, a random access memory (RAM), a CD-ROM, a magnetic tape, a floppy disc, an optical data storage device, and the like.

It is further understood that "a plurality" in this disclosure refers to two or more, and other quantifiers are similar thereto. "And/or", which describes an associated relationship of associated objects, means that there may be three relationships, for example, A and/or B, which may mean that A exists alone, A and B exist at the same time, and B exists alone. A character "/" generally indicates that contextual objects are in an "or" relationship. "A/an" and "the" in singular forms are intended to include plural forms, unless clearly indicated in the context otherwise.

It is further understood that the meaning of terms such as "in response to", "if", and the like involved in the present disclosure will depend on the context and the actual use scenario. As used herein, the term "in response to" may be construed to mean "when" or "upon" or "if" or "in a case where" depending on the context.

It is further understood that terms such as "first", and "second" are used to describe various information, these information should not be limited by these terms. These terms are only used for distinguishing information of the same type from each other and do not denote a particular order or degree of importance. As a matter of fact, the terms such as "first", and "second" may be used interchangeably. For example, first information may also be referred to as second information, and similarly, the second information may also be referred to as the first information, without departing from the scope of embodiments of the present disclosure.

It is further understood that although operations are described in a specific order in the accompanying drawings in the embodiments of the present disclosure, it should not be understood that these operations are required to be performed in the specific order shown or in a serial order, or that all of the operations shown are required to be performed to obtain desired results. In certain circumstances, multitasking and parallel processing may be advantageous.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

**Claims**

1. A method for reporting channel status information (CSI), performed by a terminal and comprising:

   determining $N$ target channel status information-reference signal (CSI-RS) resources from $N_{trp}$ CSI-RS resources in response to configuring, by a network device, the $N_{trp}$ CSI-RS resources for the terminal, where $N_{trp}$ and $N$ are positive integers, and $1 \leq N \leq N_{trp}$; and
   sending CSI corresponding to the $N$ target CSI-RS resources to the network device.

2. The method according to claim 1, wherein the $N$ target CSI-RS resources correspond to one CSI, and the CSI comprises first information;
   the first information comprises at least one of:

   rank indication information;
   wideband and/or sub-band channel quality indication information;
   non-zero coefficient number indication information of all layers;
   indication information of a number of spatial domain (SD) basis vectors or a number of ports in each polarization direction corresponding to the $N$ target CSI-RS resources;
   indication information of the $N$ target CSI-RS resources; or
   indication information of a reference CSI-RS resource,
   wherein the reference CSI-RS resource indicates a CSI-RS resource corresponding to a strongest coefficient, or a CSI-RS resource indicated by the terminal, or a first CSI-RS resource predefined between the terminal and the network device.

3. The method according to claim 2, wherein the CSI further comprises second information, the second information comprises multiple information groups, and different information groups in the multiple information groups correspond to different priorities;
   one or more information groups with lower priorities in the second information are discarded in response to uplink resources allocated by the network device being unable to transmit all information comprised in the first information and the second information.

4. The method according to claim 3, wherein the second information at least comprises a first information group, and the first information group comprises at least one of:

   indication information of an SD basis vector; or
   indication information of the strongest coefficient at each layer.

5. The method according to claim 4, wherein the second information at least further comprises a second information group, and the second information group comprises at least one of:

   frequency domain (FD) basis vector indication information of one or $N$ or $n_1$ target CSI-RS resources;
   relative offset indication information of $N$-1 or $n_1$ - 1 target CSI-RS resources relative to the reference CSI-RS resource;
   starting point indication information of at least one candidate FD basis vector window;

   position indication information of $v \cdot 2 \sum_{n=1}^{N} L_n \cdot M_v - \left\lfloor \dfrac{K^{NZ}}{2} \right\rfloor$ bits of high-priority non-zero coefficients, or position indication information of non-zero coefficients of first $l_1$ layers, or position indication information of non-zero coefficients of $n_1$ target CSI-RS resources;

indication information of one or 2N-1 reference amplitudes, or indication information of reference amplitudes of first $l_1$ layers, or indication information of reference amplitudes of $n_1$ target CSI-RS resources; or

differential amplitude quantization information and phase quantization information of $\max\left(0, \left\lceil \dfrac{K^{NZ}}{2} \right\rceil - \upsilon\right)$

high-priority non-zero coefficients, or differential amplitude quantization information and phase quantization information of non-zero coefficients of first $l_1$ layers, or differential amplitude quantization information and phase quantization information of non-zero coefficients corresponding to $n_1$ target CSI-RS resources,

where $N$ represents the target CSI-RS resources, $n_1 = \left\lfloor \dfrac{N}{2} \right\rfloor$ or $\left\lceil \dfrac{N}{2} \right\rceil$, $l_1 = \left\lfloor \dfrac{v}{2} \right\rfloor$ or $\left\lceil \dfrac{v}{2} \right\rceil$, $K^{NZ}$

represents a number of non-zero coefficients of all layers reported by the terminal, $\upsilon$ represents a rank, $M_v$ represents a number of FD basis vectors, $L_n$ represents a number of SD basis vectors in a polarization direction corresponding to an $n^{th}$ target CSI-RS resource, and $n$ represents the $n^{th}$ target CSI-RS resource.

6. The method according to claim 5, wherein the second information at least further comprises a third information group, and the third information group comprises at least one of:

indication information of $\left\lfloor \dfrac{K^{NZ}}{2} \right\rfloor$ bits of low-priority non-zero coefficients, or indication information of non-zero coefficients of $v$ - $l_1$ layers, or indication information of non-zero coefficients of $N$ - $n_1$ target CSI-RS resources; or differential amplitude quantization information and phase quantization information of

$\min\left( K^{NZ} - v, \left\lceil \dfrac{K^{NZ}}{2} \right\rceil \right)$ low-priority non-zero coefficients, or differential amplitude quantization information and phase quantization information of non-zero coefficients of $v$ - $l_1$ layers, or differential amplitude quantization information and phase quantization information of non-zero coefficients corresponding to $N$ - $n_1$ target CSI-RS resources,

where $N$ represents the target CSI-RS resources, $n_1 = \left\lfloor \dfrac{N}{2} \right\rfloor$ or $\left\lceil \dfrac{N}{2} \right\rceil$, $l_1 = \left\lfloor \dfrac{v}{2} \right\rfloor$ or $\left\lceil \dfrac{v}{2} \right\rceil$, $K^{NZ}$

represents the number of non-zero coefficients of all layers reported by the terminal, and $\upsilon$ represents the rank.

7. The method according to claim 3, wherein the second information at least comprises a fourth information group, and the fourth information group comprises at least one of:

port selection indication information;
indication information of the strongest coefficient at each layer; or
FD basis vector selection indication information.

8. The method according to claim 7, wherein the second information at least further comprises a fifth information group, and the fifth information group comprises at least one of:

port selection indication information;
relative offset indication information of $N$-1 or $n_1$ - 1 target CSI-RS resources relative to the reference CSI-RS resource;

position indication information of $2\sum_{n=1}^{N} L_n \cdot v \cdot M - \left\lfloor \dfrac{K^{NZ}}{2} \right\rfloor$ bits of high-priority non-zero coefficients, or position indication information of non-zero coefficients of first $l_1$ layers, or position indication information of non-zero coefficients of $n_1$ target CSI-RS resources;
indication information of one or 2N-1 reference amplitudes, or indication information of reference amplitudes of

first $l_1$ layers, or indication information of reference amplitudes of $n_1$ target CSI-RS resources; or

differential amplitude quantization information and phase quantization information of $\max\left(0, \left\lceil \dfrac{K^{NZ}}{2} \right\rceil - \upsilon\right)$

high-priority non-zero coefficients, or differential amplitude quantization information and phase quantization information of non-zero coefficients of first $l_1$ layers, or differential amplitude quantization information and phase quantization information of non-zero coefficients corresponding to $n_1$ target CSI-RS resources,

where $N$ represents the target CSI-RS resources, $n_1 = \left\lfloor \dfrac{N}{2} \right\rfloor$ or $\left\lceil \dfrac{N}{2} \right\rceil$, $l_1 = \left\lfloor \dfrac{v}{2} \right\rfloor$ or $\left\lceil \dfrac{v}{2} \right\rceil$, $K^{NZ}$

represents a number of non-zero coefficients of all layers reported by the terminal, $\upsilon$ represents a rank, $M$ represents a number of FD basis vectors, $L_n$ represents a number of CSI-RS ports in a polarization direction corresponding to an $n^{\text{th}}$ target CSI-RS resource, and $n$ represents the $n^{\text{th}}$ target CSI-RS resource.

9. The method according to claim 8, wherein the second information at least further comprises a sixth information group, and the sixth information group comprises at least one of:

position indication information of $\left\lfloor \dfrac{K^{NZ}}{2} \right\rfloor$ bits of low-priority non-zero coefficients, or position indication information of non-zero coefficients of $v$ - $l_1$ layers, or position indication information of non-zero coefficients of $N$ - $n_1$ target CSI-RS resources; or
differential amplitude quantization information and phase quantization information of

$\min\left( K^{NZ} - v, \left\lceil \dfrac{K^{NZ}}{2} \right\rceil \right)$ low-priority non-zero coefficients, or differential amplitude quantization information and phase quantization information of non-zero coefficients of $v$ - $l_1$ layers, or differential amplitude quantization information and phase quantization information of non-zero coefficients corresponding to $N$ - $n_1$ target CSI-RS resources,

where $N$ represents the target CSI-RS resources, $n_1 = \left\lfloor \dfrac{N}{2} \right\rfloor$ or $\left\lceil \dfrac{N}{2} \right\rceil$, $l_1 = \left\lfloor \dfrac{v}{2} \right\rfloor$ or $\left\lceil \dfrac{v}{2} \right\rceil$, $K^{NZ}$

represents the number of non-zero coefficients of all layers reported by the terminal, and $\upsilon$ represents the rank.

10. The method according to claim 6, wherein a priority of the non-zero coefficient is determined based on one of following modes:

sorting the non-zero coefficients at the same position of the same target CSI-RS resource in different layers according to a priority order of the target CSI-RS resources with a single target CSI-RS resource as a unit, where the smaller a number of layers, the greater the priority of the non-zero coefficient; sorting the non-zero coefficients corresponding to all SD basis vectors of the same target CSI-RS resource in the same layer, where the smaller an index of an SD basis vector, the greater the priority of the non-zero coefficient; and sorting the non-zero coefficients corresponding to all FD basis vectors in the same layer in an interleaved way based on a preset algorithm, where the smaller a value of the preset algorithm, the greater the priority of the non-zero coefficient; or sorting the non-zero coefficients at the same position of the same target CSI-RS resource in different layers according to a priority order of the target CSI-RS resources, where the smaller a number of layers, the greater the priority of the non-zero coefficient; sorting the non-zero coefficients corresponding to all SD basis vectors of all target CSI-RS resources in the same layer, where the smaller an index of an SD basis vector, the greater the priority of the non-zero coefficient; and sorting the non-zero coefficients corresponding to different FD basis vectors in the same layer in an interleaved way based on a preset algorithm, where the smaller a value of the preset algorithm, the greater the priority of the non-zero coefficient; or sorting the non-zero coefficients of all SD basis vectors in a single target CSI-RS resource according to a priority order of the target CSI-RS resources with the single target CSI-RS resource as a unit, where the smaller an index of an SD basis vector, the greater a priority of a corresponding non-zero coefficient; sorting the non-zero coefficients corresponding to all FD basis vectors in the single target CSI-RS resource based on a preset algorithm, where the smaller a value of the preset algorithm, the greater the priority of the non-zero coefficient; and sorting the non-zero coefficients of all layers in the same target CSI-RS resource, where the smaller a number of layers, the greater the priority of the non-zero coefficient; or

sorting the non-zero coefficients corresponding to all SD basis vectors in all target CSI-RS resources in the same layer according to a priority order of the target CSI-RS resources, where the smaller an index of an SD basis vector, the greater a priority of a corresponding non-zero coefficient; sorting the non-zero coefficients corresponding to all SD basis vectors in all target CSI-RS resources in different layers in an interleaved way, where the smaller a number of layers, the greater a priority of a corresponding non-zero coefficient; and sorting the non-zero coefficients corresponding to all FD basis vectors in all target CSI-RS resources in different layers in an interleaved way based on a preset algorithm, where the smaller a value of the preset algorithm, the greater the priority of the non-zero coefficient.

11. The method according to claim 10, wherein, in response to the priority of the non-zero coefficient being determined by sorting the non-zero coefficients at the same position of the same target CSI-RS resource in different layers according to the priority order of the target CSI-RS resources with the single target CSI-RS resource as the unit, where the smaller the number of layers, the greater the priority of the non-zero coefficient; sorting the non-zero coefficients corresponding to all SD basis vectors of the same target CSI-RS resource in the same layer, where the smaller the index of the SD basis vector, the greater the priority of the non-zero coefficient; and sorting the non-zero coefficients corresponding to all FD basis vectors in the same layer in the interleaved way based on the preset algorithm, where the smaller the value of the preset algorithm, the greater the priority of the non-zero coefficient, the priority of the non-zero coefficient is determined based on a following formula:

$$\mathrm{Pri}\left(l,i_n,f,n\right)=2\cdot\sum_{j=1}^{n-1}L_j\cdot v\cdot M_v+2\cdot L_n\cdot v\cdot\pi\left(f\right)+v\cdot i_n+l$$

where $l$ represents the number of layers, $i_n$ represents an index of an SD basis vector of the $n$th target CSI-RS resource, $f$ represents the index of the FD basis vector, $n$ represents the $n$th target CSI-RS resource, $L_j$ represents a number of SD basis vectors in a polarization direction corresponding to a $j$th CSI-RS resource, $v$ represents the rank, $M_v$ represents a number of FD basis vectors, $L_n$ represents a number of SD basis vectors in a polarization direction corresponding to the $n$th target CSI-RS resource, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the FD basis vector to $N_3$, and $N_3$ represents a number of candidate FD basis vectors.

12. The method according to claim 10, wherein, in response to the priority of the non-zero coefficient being determined by sorting the non-zero coefficients at the same position of the same target CSI-RS resource in different layers according to the priority order of the target CSI-RS resources, where the smaller the number of layers, the greater the priority of the non-zero coefficient; sorting the non-zero coefficients corresponding to all SD basis vectors of all target CSI-RS resources in the same layer, where the smaller the index of the SD basis vector, the greater the priority of the non-zero coefficient; and sorting the non-zero coefficients corresponding to different FD basis vectors in the same layer in the interleaved way based on the preset algorithm, where the smaller the value of the preset algorithm, the greater the priority of the non-zero coefficient, the priority of the non-zero coefficient is determined based on a following formula:

$$\mathrm{Pri}\left(l,i,f\right)=2\cdot L_{tot}\cdot v\cdot\pi\left(f\right)+v\cdot i+l$$

where $l$ represents the number of layers, $i=0,1,...,2L_{tot}-1$, $L_{tot}=\sum_{n=1}^{N}L_n$ represents a total number of SD basis vectors in a polarization direction corresponding to $N$ CSI-RS resources, $n$ represents the $n$th target CSI-RS resource, $f$ represents the index of the FD basis vector, $v$ represents the rank, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the FD basis vector to $N_3$, and $N_3$ represents a number of candidate FD basis vectors.

13. The method according to claim 10, wherein, in response to the priority of the non-zero coefficient being determined by sorting the non-zero coefficients of all SD basis vectors in the single target CSI-RS resource according to the priority order of the target CSI-RS resources with the single target CSI-RS resource as the unit, where the smaller the index of the SD basis vector, the greater the priority of the corresponding non-zero coefficient; sorting the non-zero coefficients corresponding to all FD basis vectors in the single target CSI-RS resource based on the preset algorithm, where the smaller the value of the preset algorithm, the greater the priority of the non-zero coefficient; and sorting the non-zero coefficients of all layers in the same target CSI-RS resource, where the smaller the number of layers, the greater the priority of the non-zero coefficient, the priority of the non-zero coefficient is determined based on a following formula:

$$\mathrm{Pri}\left(l,i_n,f,n\right)=2\cdot L_{tot}\cdot M_v\cdot l+2\cdot\sum_{j=1}^{n-1}L_j\cdot M_v+2\cdot L_n\cdot\pi\left(f\right)+i_n$$

where $l$ represents the number of layers, $i_n$ represents an index of an SD basis vector of the $n^{\text{th}}$ target CSI-RS resource, $f$ represents the index of the FD basis vector, $L_{tot}=\sum_{n=1}^{N}L_n$ represents a total number of SD basis vectors in a polarization direction corresponding to N CSI-RS resources, $n$ represents the $n^{\text{th}}$ target CSI-RS resource, $L_j$ represents a number of SD basis vectors in a polarization direction corresponding to a $j^{\text{th}}$ CSI-RS resource, $v$ represents the rank, $M_v$ represents a number of FD basis vectors, $L_n$ represents a number of SD basis vectors in a polarization direction corresponding to the $n^{\text{th}}$ target CSI-RS resource, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the FD basis vector to $N_3$, and $N_3$ represents a number of candidate FD basis vectors.

14. The method according to claim 10, wherein, in response to the priority of the non-zero coefficient being determined by sorting the non-zero coefficients corresponding to all SD basis vectors in all target CSI-RS resources in the same layer according to the priority order of the target CSI-RS resources, where the smaller the index of the SD basis vector, the greater the priority of the corresponding non-zero coefficient; sorting the non-zero coefficients corresponding to all SD basis vectors in all target CSI-RS resources in different layers in the interleaved way, where the smaller the number of layers, the greater the priority of the corresponding non-zero coefficient; and sorting the non-zero coefficients corresponding to all FD basis vectors in all target CSI-RS resources in different layers in the interleaved way based on the preset algorithm, where the smaller the value of the preset algorithm, the greater the priority of the non-zero coefficient, the priority of the non-zero coefficient is determined based on a following formula:

$$\mathrm{Pri}\left(l,i,f\right)=2\cdot L_{tot}\cdot v\cdot\pi\left(f\right)+L_{tot}\cdot l+i$$

where $l$ represents the number of layers, $i=0,1,...,2L_{tot}-1$, $L_{tot}=\sum_{n=1}^{N}L_n$ represents a total number of SD basis vectors in a polarization direction corresponding to $N$ CSI-RS resources, $n$ represents the $n^{\text{th}}$ target CSI-RS resource, $f$ represents the index of the FD basis vector, $v$ represents the rank, $\pi\left(f\right)=\min\left(2\cdot n_{3,l}^{(f)},2\cdot\left(N_3-n_{3,l}^{(f)}\right)-1\right)$, $n_{3,l}^{(f)}$ represents an index mapped from the index $f$ of the FD basis vector to $N_3$, and $N_3$ represents a number of candidate FD basis vectors.

15. The method according to claim 9, wherein a priority of the non-zero coefficient is determined based on one of following modes:

sorting the non-zero coefficients at the same position of the same target CSI-RS resource in different layers according to a priority order of the target CSI-RS resources with a single target CSI-RS resource as a unit, where the smaller a number of layers, the greater the priority of the non-zero coefficient; sorting the non-zero coefficients corresponding to indexes of all CSI-RS ports of the same target CSI-RS resource in the same layer, where the smaller an index of a CSI-RS port, the greater the priority of the non-zero coefficient; and sorting the non-zero coefficients corresponding to all FD basis vectors in the same layer, where the smaller an index of a FD basis vector, the greater the priority of the non-zero coefficient; or
sorting the non-zero coefficients at the same position of the same target CSI-RS resource in different layers according to a priority order of the target CSI-RS resources, where the smaller a number of layers, the greater the priority of the non-zero coefficient; sorting the non-zero coefficients corresponding to indexes of all CSI-RS ports of all target CSI-RS resources in the same layer, where the smaller an index of a CSI-RS port, the greater the priority of the non-zero coefficient; and sorting the non-zero coefficients corresponding to different FD basis vectors in the same layer, where the smaller an index of a FD basis vector, the greater the priority of the non-zero coefficient; or

sorting the non-zero coefficients of all CSI-RS ports in a single target CSI-RS resource according to a priority order of the target CSI-RS resources with the single target CSI-RS resource as a unit, where the smaller an index of a CSI-RS port, the greater a priority of a corresponding non-zero coefficient; sorting the non-zero coefficients of all FD basis vectors in the single target CSI-RS resource, where the smaller an index of a FD basis vector, the greater the priority of the non-zero coefficient; and sorting the non-zero coefficients of all layers in the single target CSI-RS resource, where the smaller a number of layers, the greater the priority of the non-zero coefficient; or

sorting the non-zero coefficients corresponding to all CSI-RS ports in all target CSI-RS resources in the same layer according to a priority order of the target CSI-RS resources, where the smaller an index of a CSI-RS port, the greater a priority of a corresponding non-zero coefficient; sorting the non-zero coefficients corresponding to all CSI-RS ports in all target CSI-RS resources in different layers, where the smaller a number of layers, the greater a priority of a corresponding non-zero coefficient; and sorting the non-zero coefficients corresponding to all FD basis vectors in all target CSI-RS resources in different layers, where the smaller an index of a FD basis vector, the greater the priority of the non-zero coefficient.

16. The method according to claim 15, wherein, in response to the priority of the non-zero coefficient being determined by sorting the non-zero coefficients at the same position of the same target CSI-RS resource in different layers according to a priority order of the target CSI-RS resources with a single target CSI-RS resource as a unit, where the smaller a number of layers, the greater the priority of the non-zero coefficient; sorting the non-zero coefficients corresponding to indexes of all CSI-RS ports of the same target CSI-RS resource in the same layer, where the smaller an index of a CSI-RS port, the greater the priority of the non-zero coefficient; and sorting the non-zero coefficients corresponding to all FD basis vectors in the same layer, where the smaller an index of a FD basis vector, the greater the priority of the non-zero coefficient, the priority of the non-zero coefficient is determined based on a following formula:

$$\mathrm{Pri}\left(l, i_n, f, n\right) = v \cdot \sum_{j=1}^{n-1} K_{1,n} \cdot M + K_{1,n} \cdot v \cdot f + v \cdot i_n + l$$

where $l$ represents the number of layers, $i_n$ represents an index of a CSI-RS port of the $n$th target CSI-RS resource, $f$ represents the index of the FD basis vector, $n$ represents the $n$th target CSI-RS resource, $v$ represents the rank, $M$ represents a number of FD basis vectors, and $K_{1,n}$ represents a number of CSI-RS ports selected by the terminal corresponding to the $n$th target CSI-RS resource.

17. The method according to claim 15, wherein, in response to the priority of the non-zero coefficient being determined by sorting the non-zero coefficients at the same position of the same target CSI-RS resource in different layers according to the priority order of the target CSI-RS resources, where the smaller the number of layers, the greater the priority of the non-zero coefficient; sorting the non-zero coefficients corresponding to indexes of all CSI-RS ports of all target CSI-RS resources in the same layer, where the smaller the index of the CSI-RS port, the greater the priority of the non-zero coefficient; and sorting the non-zero coefficients corresponding to different FD basis vectors in the same layer, where the smaller the index of the FD basis vector, the greater the priority of the non-zero coefficient, the priority of the non-zero coefficient is determined based on a following formula:

$$\mathrm{Pri}\left(l, i, f\right) = K_{1,tot} \cdot v \cdot f + v \cdot i + l$$

where $l$ represents the number of layers, $i = 0, 1, ..., 2K_{1,tot} - 1$, $K_{1,tot} = \sum_{n=1}^{N} K_{1,n}$ represents a total number of CSI-RS ports selected by the terminal corresponding to $N$ CSI-RS resources, $n$ represents the $n$th target CSI-RS resource, $f$ represents the index of the FD basis vector, $v$ represents the rank, $K_{1,tot}$ represents the total number of CSI-RS ports selected by the terminal corresponding to the $N$ CSI-RS resources, and $K_{1,n}$ represents a number of CSI-RS ports selected by the terminal corresponding to the $n$th target CSI-RS resource.

18. The method according to claim 15, wherein, in response to the priority of the non-zero coefficient being determined by sorting the non-zero coefficients of all CSI-RS ports in the single target CSI-RS resource according to the priority order of the target CSI-RS resources with the single target CSI-RS resource as the unit, where the smaller the index of the CSI-RS port, the greater the priority of the corresponding non-zero coefficient; sorting the non-zero coefficients of all FD basis vectors in the single target CSI-RS resource, where the smaller the index of the FD basis vector, the greater the priority of the non-zero coefficient; and sorting the non-zero coefficients of all layers in the single target CSI-RS resource, where the smaller the number of layers, the greater the priority of the non-zero coefficient, the priority of the non-zero coefficient is determined based on a following formula:

$$\mathrm{Pri}\left(l, i_n, f, n\right) = l \cdot K_{1,tot} \cdot M + \sum\nolimits_{j=1}^{n-1} K_{1,j} \cdot M + K_{1,n} \cdot f + i_n$$

where $l$ represents the number of layers, $i_n$ represents an index of a CSI-RS port of the $n^{th}$ target CSI-RS resource, $f$ represents the index of the FD basis vector, $n$ represents the $n^{th}$ target CSI-RS resource, $v$ represents the rank, $K_{1,tot}$ represents a total number of CSI-RS ports selected by the terminal corresponding to $N$ CSI-RS resources, $M$ represents a number of FD basis vectors, $K_{1,j}$ represents a number of CSI-RS ports selected by the terminal corresponding to a $j^{th}$ CSI-RS resource, and $K_{1,n}$ represents a number of CSI-RS ports selected by the terminal corresponding to the $n^{th}$ target CSI-RS resource.

19. The method according to claim 15, wherein, in response to the priority of the non-zero coefficient being determined by sorting the non-zero coefficients corresponding to all CSI-RS ports in all target CSI-RS resources in the same layer according to the priority order of the target CSI-RS resources, where the smaller the index of the CSI-RS port, the greater the priority of the corresponding non-zero coefficient; sorting the non-zero coefficients corresponding to all CSI-RS ports in all target CSI-RS resources in different layers, where the smaller the number of layers, the greater the priority of the corresponding non-zero coefficient; and sorting the non-zero coefficients corresponding to all FD basis vectors in all target CSI-RS resources in different layers, where the smaller the index of the FD basis vector, the greater the priority of the non-zero coefficient, the priority of the non-zero coefficient is determined based on a following formula:

$$\mathrm{Pri}\left(l, i, f\right) = K_{1,tot} \cdot v \cdot f + K_{1,tot} \cdot l + i$$

where $l$ represents the number of layers, $i = 0, 1, ..., 2K_{1,tot} - 1$, $K_{1,tot} = \sum\nolimits_{n=1}^{N} K_{1,n}$ represents a total number of CSI-RS ports selected by the terminal corresponding to $N$ CSI-RS resources, $n$ represents the $n^{th}$ target CSI-RS resource, $f$ represents the index of the FD basis vector, $v$ represents the rank, $K_{1,tot}$ represents the total number of CSI-RS ports selected by the terminal corresponding to the $N$ CSI-RS resources, and $K_{1,n}$ represents a number of CSI-RS ports selected by the terminal corresponding to the $n^{th}$ target CSI-RS resource.

20. The method according to claim 1, wherein the $N$ target CSI-RS resources correspond to $N$ CSIs, and the $N$ target CSI-RS resources have priorities; and
sending CSI corresponding to the $N$ target CSI-RS resources to the network device comprises:
sending $N$ CSIs corresponding to the $N$ target CSI-RS resources to the network device based on a priority order of the $N$ target CSI-RS resources.

21. The method according to any one of claims 10 to 20, wherein the priorities of the $N$ target CSI-RS resources are determined based on the indexes of the $N$ target CSI-RS resources.

22. The method according to any one of claims 10 to 20, wherein the reference CSI-RS resource has a highest priority among the $N$ target CSI-RS resources, and the priorities of remaining $N-1$ target CSI-RS resources are determined based on indexes of the $N$-1 target CSI-RS resources.

23. A method for reporting channel status information (CSI), performed by a network device and comprising:

receiving CSI corresponding to $N$ target channel status information-reference signal (CSI-RS) resources sent by a terminal,
wherein the $N$ target CSI-RS resources are CSI-RS resources among $N_{trp}$ CSI-RS resources configured by the network device for the terminal, where $N_{trp}$ and $N$ are positive integers, and $1 \leq N \leq N_{trp}$.

24. The method according to claim 23, wherein the $N$ target CSI-RS resources correspond to one CSI, and the CSI comprises first information;

the first information comprises at least one of:

rank indication information;

wideband and/or sub-band channel quality indication information;

non-zero coefficient number indication information of all layers;

indication information of a number of spatial domain (SD) basis vectors or a number of ports in each polarization direction corresponding to the $N$ target CSI-RS resources;

indication information of the $N$ target CSI-RS resources; or

indication information of a reference CSI-RS resource,

wherein the reference CSI-RS resource indicates a CSI-RS resource corresponding to a strongest coefficient, or a CSI-RS resource indicated by the terminal, or a first CSI-RS resource predefined between the terminal and the network device.

25. The method according to claim 24, wherein the CSI further comprises second information, the second information comprises multiple information groups, and different information groups in the multiple information groups correspond to different priorities;

one or more information groups with lower priorities in the second information are discarded in response to uplink resources allocated by the network device being unable to transmit all information comprised in the first information and the second information.

26. The method according to claim 25, wherein the second information at least comprises a first information group, and the first information group comprises at least one of:

indication information of an SD basis vector; or

indication information of the strongest coefficient at each layer.

27. The method according to claim 26, wherein the second information at least further comprises a second information group, and the second information group comprises at least one of:

frequency domain (FD) basis vector indication information of one or $N$ or $n_1$ target CSI-RS resources;

relative offset indication information of $N$-1 or $n_1$ - 1 target CSI-RS resources relative to the reference CSI-RS resource;

starting point indication information of at least one candidate FD basis vector window;

position indication information of $v \cdot 2 \sum_{n=1}^{N} L_n \cdot M_v - \left\lfloor \dfrac{K^{NZ}}{2} \right\rfloor$ bits of high-priority non-zero coefficients, or position indication information of non-zero coefficients of first $l_1$ layers, or position indication information of non-zero coefficients of $n_1$ target CSI-RS resources;

indication information of one or 2N-1 reference amplitudes, or indication information of reference amplitudes of first $l_1$ layers, or indication information of reference amplitudes of $n_1$ target CSI-RS resources; or

differential amplitude quantization information and phase quantization information of $\max\left( 0, \left\lceil \dfrac{K^{NZ}}{2} \right\rceil - v \right)$

high-priority non-zero coefficients, or differential amplitude quantization information and phase quantization information of non-zero coefficients of first $l_1$ layers, or differential amplitude quantization information and phase quantization information of non-zero coefficients corresponding to $n_1$ target CSI-RS resources,

where $N$ represents the target CSI-RS resources, $n_1 = \left\lfloor \dfrac{N}{2} \right\rfloor$ or $\left\lceil \dfrac{N}{2} \right\rceil$, $l_1 = \left\lfloor \dfrac{v}{2} \right\rfloor$ or $\left\lceil \dfrac{v}{2} \right\rceil$, $K^{NZ}$

represents a number of non-zero coefficients of all layers reported by the terminal, $v$ represents a rank, $M_v$ represents a number of FD basis vectors, $L_n$ represents a number of SD basis vectors in a polarization direction corresponding to an $n$th target CSI-RS resource, and $n$ represents the $n$th target CSI-RS resource.

28. The method according to claim 27, wherein the second information at least further comprises a third information group, and the third information group comprises at least one of:

indication information of $\left\lfloor \dfrac{K^{NZ}}{2} \right\rfloor$ bits of low-priority non-zero coefficients, or indication information of non-zero coefficients of $v$-$l_1$ layers, or indication information of non-zero coefficients of $N$-$n_1$ target CSI-RS resources; or differential amplitude quantization information and phase quantization information of

$\min\left( K^{NZ} - v, \left\lceil \dfrac{K^{NZ}}{2} \right\rceil \right)$ low-priority non-zero coefficients, or differential amplitude quantization information and phase quantization information of non-zero coefficients of $v$-$l_1$ layers, or differential amplitude quantization information and phase quantization information of non-zero coefficients corresponding to $N$-$n_1$ target CSI-RS resources,

where $N$ represents the target CSI-RS resources, $n_1 = \left\lfloor \dfrac{N}{2} \right\rfloor$ or $\left\lceil \dfrac{N}{2} \right\rceil$, $l_1 = \left\lfloor \dfrac{v}{2} \right\rfloor$ or $\left\lceil \dfrac{v}{2} \right\rceil$, $K^{NZ}$ represents the number of non-zero coefficients of all layers reported by the terminal, and $\upsilon$ represents the rank.

29. The method according to claim 25, wherein the second information at least comprises a fourth information group, and the fourth information group comprises at least one of:

port selection indication information;
indication information of the strongest coefficient at each layer; or
FD basis vector selection indication information.

30. The method according to claim 29, wherein the second information at least further comprises a fifth information group, and the fifth information group comprises at least one of:

port selection indication information;
relative offset indication information of $N$-1 or $n_1$-1 target CSI-RS resources relative to the reference CSI-RS resource;

position indication information of $2\sum_{n=1}^{N} L_n \cdot v \cdot M - \left\lfloor \dfrac{K^{NZ}}{2} \right\rfloor$ bits of high-priority non-zero coefficients, or position indication information of non-zero coefficients of first $l_1$ layers, or position indication information of non-zero coefficients of $n_1$ target CSI-RS resources;
indication information of one or $2N$-1 reference amplitudes, or indication information of reference amplitudes of first $l_1$ layers, or indication information of reference amplitudes of $n_1$ target CSI-RS resources; or

differential amplitude quantization information and phase quantization information of $\max\left( 0, \left\lceil \dfrac{K^{NZ}}{2} \right\rceil - \upsilon \right)$

high-priority non-zero coefficients, or differential amplitude quantization information and phase quantization information of non-zero coefficients of first $l_1$ layers, or differential amplitude quantization information and phase quantization information of non-zero coefficients corresponding to $n_1$ target CSI-RS resources,

where $N$ represents the target CSI-RS resources, $n_1 = \left\lfloor \dfrac{N}{2} \right\rfloor$ or $\left\lceil \dfrac{N}{2} \right\rceil$, $l_1 = \left\lfloor \dfrac{v}{2} \right\rfloor$ or $\left\lceil \dfrac{v}{2} \right\rceil$, $K^{NZ}$ represents a number of non-zero coefficients of all layers reported by the terminal, $\upsilon$ represents a rank, $M$ represents a number of FD basis vectors, $L_n$ represents a number of CSI-RS ports in a polarization direction corresponding to an $n^{th}$ target CSI-RS resource, and $n$ represents the $n^{th}$ target CSI-RS resource.

31. The method according to claim 30, wherein the second information at least further comprises a sixth information group, and the sixth information group comprises at least one of:

position indication information of $\left\lfloor \dfrac{K^{NZ}}{2} \right\rfloor$ bits of low-priority non-zero coefficients, or position indication information of non-zero coefficients of $v\text{-}l_1$ layers, or position indication information of non-zero coefficients of $N\text{-}n_1$ target CSI-RS resources; or

differential amplitude quantization information and phase quantization information of

$$\min\left( K^{NZ} - v, \left\lceil \frac{K^{NZ}}{2} \right\rceil \right)$$ low-priority non-zero coefficients, or differential amplitude quantization information and phase quantization information of non-zero coefficients of $v\text{-}l_1$ layers, or differential amplitude quantization information and phase quantization information of non-zero coefficients corresponding to $N\text{-}n_1$ target CSI-RS resources,

where $N$ represents the target CSI-RS resources, $n_1 = \left\lfloor \dfrac{N}{2} \right\rfloor$ or $\left\lceil \dfrac{N}{2} \right\rceil$, $l_1 = \left\lfloor \dfrac{v}{2} \right\rfloor$ or $\left\lceil \dfrac{v}{2} \right\rceil$, $K^{NZ}$

represents the number of non-zero coefficients of all layers reported by the terminal, and $v$ represents the rank.

32. The method according to claim 28, wherein a priority of the non-zero coefficient is determined based on one of following modes:

sorting the non-zero coefficients at the same position of the same target CSI-RS resource in different layers according to a priority order of the target CSI-RS resources with a single target CSI-RS resource as a unit, where the smaller a number of layers, the greater the priority of the non-zero coefficient; sorting the non-zero coefficients corresponding to all SD basis vectors of the same target CSI-RS resource in the same layer, where the smaller an index of an SD basis vector, the greater the priority of the non-zero coefficient; and sorting the non-zero coefficients corresponding to all FD basis vectors in the same layer in an interleaved way based on a preset algorithm, where the smaller a value of the preset algorithm, the greater the priority of the non-zero coefficient; or sorting the non-zero coefficients at the same position of the same target CSI-RS resource in different layers according to a priority order of the target CSI-RS resources, where the smaller a number of layers, the greater the priority of the non-zero coefficient; sorting the non-zero coefficients corresponding to all SD basis vectors of all target CSI-RS resources in the same layer, where the smaller an index of an SD basis vector, the greater the priority of the non-zero coefficient; and sorting the non-zero coefficients corresponding to different FD basis vectors in the same layer in an interleaved way based on a preset algorithm, where the smaller a value of the preset algorithm, the greater the priority of the non-zero coefficient; or sorting the non-zero coefficients of all SD basis vectors in a single target CSI-RS resource according to a priority order of the target CSI-RS resources with the single target CSI-RS resource as a unit, where the smaller an index of an SD basis vector, the greater a priority of a corresponding non-zero coefficient; sorting the non-zero coefficients corresponding to all FD basis vectors in the single target CSI-RS resource based on a preset algorithm, where the smaller a value of the preset algorithm, the greater the priority of the non-zero coefficient; and sorting the non-zero coefficients of all layers in the same target CSI-RS resource, where the smaller a number of layers, the greater the priority of the non-zero coefficient; or sorting the non-zero coefficients corresponding to all SD basis vectors in all target CSI-RS resources in the same layer according to a priority order of the target CSI-RS resources, where the smaller an index of an SD basis vector, the greater a priority of a corresponding non-zero coefficient; sorting the non-zero coefficients corresponding to all SD basis vectors in all target CSI-RS resources in different layers in an interleaved way, where the smaller a number of layers, the greater a priority of a corresponding non-zero coefficient; and sorting the non-zero coefficients corresponding to all FD basis vectors in all target CSI-RS resources in different layers in an interleaved way based on a preset algorithm, where the smaller a value of the preset algorithm, the greater the priority of the non-zero coefficient.

33. The method according to claim 32, wherein, in response to the priority of the non-zero coefficient being determined by sorting the non-zero coefficients at the same position of the same target CSI-RS resource in different layers according to the priority order of the target CSI-RS resources with the single target CSI-RS resource as the unit, where the smaller the number of layers, the greater the priority of the non-zero coefficient; sorting the non-zero coefficients corresponding to all SD basis vectors of the same target CSI-RS resource in the same layer, where the smaller the index of the SD basis vector, the greater the priority of the non-zero coefficient; and sorting the non-zero coefficients corresponding to all FD basis vectors in the same layer in the interleaved way based on the preset algorithm, where the smaller the value of the preset algorithm, the greater the priority of the non-zero coefficient, the priority of the non-zero coefficient is determined based on a following formula:

$$\mathrm{Pri}\left(l,i_{n},f,n\right) = 2\cdot\sum_{j=1}^{n-1}L_{j}\cdot v\cdot M_{v} + 2\cdot L_{n}\cdot v\cdot\pi\left(f\right) + v\cdot i_{n} + l$$

where $l$ represents the number of layers, $i_{n}$ represents an index of an SD basis vector of the $n^{th}$ target CSI-RS resource, $f$ represents the index of the FD basis vector, $n$ represents the $n^{th}$ target CSI-RS resource, $L_{j}$ represents a number of SD basis vectors in a polarization direction corresponding to a $j^{th}$ CSI-RS resource, $v$ represents the rank, $M_{v}$ represents a number of FD basis vectors, $L_{n}$ represents a number of SD basis vectors in a polarization direction corresponding to the $n^{th}$ target CSI-RS resource, $\pi\left(f\right) = \min\left(2\cdot n_{3,l}^{(f)}, 2\cdot\left(N_{3} - n_{3,l}^{(f)}\right) - 1\right)$, $n_{3,l}^{(f)}$ represents an index mapped from the index $f$ of the FD basis vector to $N_{3}$, and $N_{3}$ represents a number of candidate FD basis vectors.

34. The method according to claim 32, wherein, in response to the priority of the non-zero coefficient being determined by sorting the non-zero coefficients at the same position of the same target CSI-RS resource in different layers according to the priority order of the target CSI-RS resources, where the smaller the number of layers, the greater the priority of the non-zero coefficient; sorting the non-zero coefficients corresponding to all SD basis vectors of all target CSI-RS resources in the same layer, where the smaller the index of the SD basis vector, the greater the priority of the non-zero coefficient; and sorting the non-zero coefficients corresponding to different FD basis vectors in the same layer in the interleaved way based on the preset algorithm, where the smaller the value of the preset algorithm, the greater the priority of the non-zero coefficient, the priority of the non-zero coefficient is determined based on a following formula:

$$\mathrm{Pri}\left(l,i,f\right) = 2\cdot L_{tot}\cdot v\cdot\pi\left(f\right) + v\cdot i + l$$

where $l$ represents the number of layers, $i = 0,1,...,2L_{tot}-1$, $L_{tot} = \sum_{n=1}^{N}L_{n}$ represents a total number of SD basis vectors in a polarization direction corresponding to $N$ CSI-RS resources, $n$ represents the $n^{th}$ target CSI-RS resource, $f$ represents the index of the FD basis vector, $v$ represents the rank, $\pi\left(f\right) = \min\left(2\cdot n_{3,l}^{(f)}, 2\cdot\left(N_{3} - n_{3,l}^{(f)}\right) - 1\right)$, $n_{3,l}^{(f)}$ represents an index mapped from the index $f$ of the FD basis vector to $N_{3}$, and $N_{3}$ represents a number of candidate FD basis vectors.

35. The method according to claim 32, wherein, in response to the priority of the non-zero coefficient being determined by sorting the non-zero coefficients of all SD basis vectors in the single target CSI-RS resource according to the priority order of the target CSI-RS resources with the single target CSI-RS resource as the unit, where the smaller the index of the SD basis vector, the greater the priority of the corresponding non-zero coefficient; sorting the non-zero coefficients corresponding to all FD basis vectors in the single target CSI-RS resource based on the preset algorithm, where the smaller the value of the preset algorithm, the greater the priority of the non-zero coefficient; and sorting the non-zero coefficients of all layers in the same target CSI-RS resource, where the smaller the number of layers, the greater the priority of the non-zero coefficient, the priority of the non-zero coefficient is determined based on a following formula:

$$\mathrm{Pri}\left(l,i_{n},f,n\right) = 2\cdot L_{tot}\cdot M_{v}\cdot l + 2\cdot\sum_{j=1}^{n-1}L_{j}\cdot M_{v} + 2\cdot L_{n}\cdot\pi\left(f\right) + i_{n}$$

where $l$ represents the number of layers, $i_{n}$ represents an index of an SD basis vector of the $n^{th}$ target CSI-RS resource, $f$ represents the index of the FD basis vector, $L_{tot} = \sum_{n=1}^{N}L_{n}$ represents a total number of SD basis vectors in a polarization direction corresponding to $N$ CSI-RS resources, $n$ represents the $n^{th}$ target CSI-RS resource, $L_{j}$ represents a number of SD basis vectors in a polarization direction corresponding to a $j^{th}$ CSI-RS resource, $v$ represents the rank, $M_{v}$ represents a number of FD basis vectors, $L_{n}$ represents a number of SD basis vectors in a polarization direction corresponding to the $n^{th}$ target CSI-RS resource, $\pi\left(f\right) = \min\left(2\cdot n_{3,l}^{(f)}, 2\cdot\left(N_{3} - n_{3,l}^{(f)}\right) - 1\right)$, $n_{3,l}^{(f)}$ represents an index mapped from the index $f$ of the FD basis vector to $N_{3}$, and $N_{3}$ represents a number of candidate FD basis vectors.

36. The method according to claim 31, wherein, in response to the priority of the non-zero coefficient being determined by sorting the non-zero coefficients corresponding to all SD basis vectors in all target CSI-RS resources in the same layer according to the priority order of the target CSI-RS resources, where the smaller the index of the SD basis vector, the greater the priority of the corresponding non-zero coefficient; sorting the non-zero coefficients corresponding to all SD basis vectors in all target CSI-RS resources in different layers in the interleaved way, where the smaller the number of layers, the greater the priority of the corresponding non-zero coefficient; and sorting the non-zero coefficients corresponding to all FD basis vectors in all target CSI-RS resources in different layers in the interleaved way based on the preset algorithm, where the smaller the value of the preset algorithm, the greater the priority of the non-zero coefficient, the priority of the non-zero coefficient is determined based on a following formula:

$$\mathrm{Pri}\left(l,i,f\right)=2\cdot L_{tot}\cdot v\cdot\pi\left(f\right)+L_{tot}\cdot l+i$$

where $l$ represents the number of layers, $i=0,1,...,2L_{tot}-1$, $L_{tot}=\sum_{n=1}^{N}L_{n}$ represents a total number of SD basis vectors in a polarization direction corresponding to $N$ CSI-RS resources, $n$ represents the $n^{th}$ target CSI-RS resource, $f$ represents the index of the FD basis vector, $v$ represents the rank, $\pi\left(f\right)=\min\left(2\cdot n_{3,l}^{(f)},2\cdot\left(N_{3}-n_{3,l}^{(f)}\right)-1\right)$, $n_{3,l}^{(f)}$ represents an index mapped from the index $f$ of the FD basis vector to $N_{3}$, and $N_{3}$ represents a number of candidate FD basis vectors.

37. The method according to claim 31, wherein a priority of the non-zero coefficient is determined based on one of following modes:

sorting the non-zero coefficients at the same position of the same target CSI-RS resource in different layers according to a priority order of the target CSI-RS resources with a single target CSI-RS resource as a unit, where the smaller a number of layers, the greater the priority of the non-zero coefficient; sorting the non-zero coefficients corresponding to indexes of all CSI-RS ports of the same target CSI-RS resource in the same layer, where the smaller an index of a CSI-RS port, the greater the priority of the non-zero coefficient; and sorting the non-zero coefficients corresponding to all FD basis vectors in the same layer, where the smaller an index of a FD basis vector, the greater the priority of the non-zero coefficient; or

sorting the non-zero coefficients at the same position of the same target CSI-RS resource in different layers according to a priority order of the target CSI-RS resources, where the smaller a number of layers, the greater the priority of the non-zero coefficient; sorting the non-zero coefficients corresponding to indexes of all CSI-RS ports of all target CSI-RS resources in the same layer, where the smaller an index of a CSI-RS port, the greater the priority of the non-zero coefficient; and sorting the non-zero coefficients corresponding to different FD basis vectors in the same layer, where the smaller an index of a FD basis vector, the greater the priority of the non-zero coefficient; or

sorting the non-zero coefficients of all CSI-RS ports in a single target CSI-RS resource according to a priority order of the target CSI-RS resources with the single target CSI-RS resource as a unit, where the smaller an index of a CSI-RS port, the greater a priority of a corresponding non-zero coefficient; sorting the non-zero coefficients of all FD basis vectors in the single target CSI-RS resource, where the smaller an index of a FD basis vector, the greater the priority of the non-zero coefficient; and sorting the non-zero coefficients of all layers in the single target CSI-RS resource, where the smaller a number of layers, the greater the priority of the non-zero coefficient; or

sorting the non-zero coefficients corresponding to all CSI-RS ports in all target CSI-RS resources in the same layer according to a priority order of the target CSI-RS resources, where the smaller an index of a CSI-RS port, the greater a priority of a corresponding non-zero coefficient; sorting the non-zero coefficients corresponding to all CSI-RS ports in all target CSI-RS resources in different layers, where the smaller a number of layers, the greater a priority of a corresponding non-zero coefficient; and sorting the non-zero coefficients corresponding to all FD basis vectors in all target CSI-RS resources in different layers, where the smaller an index of a FD basis vector, the greater the priority of the non-zero coefficient.

38. The method according to claim 37, wherein, in response to the priority of the non-zero coefficient being determined by sorting the non-zero coefficients at the same position of the same target CSI-RS resource in different layers according to a priority order of the target CSI-RS resources with a single target CSI-RS resource as a unit, where the smaller a number of layers, the greater the priority of the non-zero coefficient; sorting the non-zero coefficients corresponding to indexes of all CSI-RS ports of the same target CSI-RS resource in the same layer, where the smaller an index of a CSI-RS port, the greater the priority of the non-zero coefficient; and sorting the non-zero coefficients corresponding to all FD basis vectors in the same layer, where the smaller an index of a FD basis vector, the greater the priority of the non-zero coefficient, the priority of the non-zero coefficient is determined based on a following formula:

$$\mathrm{Pri}\left(l, i_n, f, n\right) = v \cdot \sum\nolimits_{j=1}^{n-1} K_{1,n} \cdot M + K_{1,n} \cdot v \cdot f + v \cdot i_n + l$$

where *l* represents the number of layers, $i_n$ represents an index of a CSI-RS port of the $n$th target CSI-RS resource, *f* represents the index of the FD basis vector, *n* represents the $n$th target CSI-RS resource, *v* represents the rank, *M* represents a number of FD basis vectors, and $K_{1,n}$ represents a number of CSI-RS ports selected by the terminal corresponding to the $n$th target CSI-RS resource.

39. The method according to claim 37, wherein, in response to the priority of the non-zero coefficient being determined by sorting the non-zero coefficients at the same position of the same target CSI-RS resource in different layers according to the priority order of the target CSI-RS resources, where the smaller the number of layers, the greater the priority of the non-zero coefficient; sorting the non-zero coefficients corresponding to indexes of all CSI-RS ports of all target CSI-RS resources in the same layer, where the smaller the index of the CSI-RS port, the greater the priority of the non-zero coefficient; and sorting the non-zero coefficients corresponding to different FD basis vectors in the same layer, where the smaller the index of the FD basis vector, the greater the priority of the non-zero coefficient, the priority of the non-zero coefficient is determined based on a following formula:

$$\mathrm{Pri}\left(l, i, f\right) = K_{1,tot} \cdot v \cdot f + v \cdot i + l$$

where *l* represents the number of layers, $i = 0, 1, ..., 2K_{1,tot} - 1$, $K_{1,tot} = \sum\nolimits_{n=1}^{N} K_{1,n}$ represents a total number of CSI-RS ports selected by the terminal corresponding to *N* CSI-RS resources, *n* represents the $n$th target CSI-RS resource, *f* represents the index of the FD basis vector, *v* represents the rank, $K_{1,tot}$ represents the total number of CSI-RS ports selected by the terminal corresponding to the *N* CSI-RS resources, and $K_{1,n}$ represents a number of CSI-RS ports selected by the terminal corresponding to the $n$th target CSI-RS resource.

40. The method according to claim 37, wherein, in response to the priority of the non-zero coefficient being determined by sorting the non-zero coefficients of all CSI-RS ports in the single target CSI-RS resource according to the priority order of the target CSI-RS resources with the single target CSI-RS resource as the unit, where the smaller the index of the CSI-RS port, the greater the priority of the corresponding non-zero coefficient; sorting the non-zero coefficients of all FD basis vectors in the single target CSI-RS resource, where the smaller the index of the FD basis vector, the greater the priority of the non-zero coefficient; and sorting the non-zero coefficients of all layers in the single target CSI-RS resource, where the smaller the number of layers, the greater the priority of the non-zero coefficient, the priority of the non-zero coefficient is determined based on a following formula:

$$\mathrm{Pri}\left(l, i_n, f, n\right) = l \cdot K_{1,tot} \cdot M + \sum\nolimits_{j=1}^{n-1} K_{1,j} \cdot M + K_{1,n} \cdot f + i_n$$

where *l* represents the number of layers, $i_n$ represents an index of a CSI-RS port of the $n$th target CSI-RS resource, *f* represents the index of the FD basis vector, *n* represents the $n$th target CSI-RS resource, *v* represents the rank, $K_{1,tot}$ represents a total number of CSI-RS ports selected by the terminal corresponding to *N* CSI-RS resources, *M* represents a number of FD basis vectors, $K_{1,j}$ represents a number of CSI-RS ports selected by the terminal corresponding to a $j$th CSI-RS resource, and $K_{1,n}$ represents a number of CSI-RS ports selected by the terminal corresponding to the $n$th target CSI-RS resource.

41. The method according to claim 37, wherein, in response to the priority of the non-zero coefficient being determined by sorting the non-zero coefficients corresponding to all CSI-RS ports in all target CSI-RS resources in the same layer according to the priority order of the target CSI-RS resources, where the smaller the index of the CSI-RS port, the greater the priority of the corresponding non-zero coefficient; sorting the non-zero coefficients corresponding to all CSI-RS ports in all target CSI-RS resources in different layers, where the smaller the number of layers, the greater the priority of the corresponding non-zero coefficient; and sorting the non-zero coefficients corresponding to all FD basis vectors in all target CSI-RS resources in different layers, where the smaller the index of the FD basis vector, the greater the priority of the non-zero coefficient, the priority of the non-zero coefficient is determined based on a following

formula:

$$\mathrm{Pri}\left(l,i,f\right) = K_{1,tot} \cdot v \cdot f + K_{1,tot} \cdot l + i$$

where $l$ represents the number of layers, $i = 0,1,\ldots,2K_{1,tot}-1$, $K_{1,tot} = \sum_{n=1}^{N} K_{1,n}$ represents a total number of CSI-RS ports selected by the terminal corresponding to $N$ CSI-RS resources, $n$ represents the $n^{\text{th}}$ target CSI-RS resource, $f$ represents the index of the FD basis vector, $v$ represents the rank, $K_{1,tot}$ represents the total number of CSI-RS ports selected by the terminal corresponding to the $N$ CSI-RS resources, and $K_{1,n}$ represents a number of CSI-RS ports selected by the terminal corresponding to the $n^{\text{th}}$ target CSI-RS resource.

42. The method according to claim 23, wherein the $N$ target CSI-RS resources correspond to $N$ CSIs, and the $N$ target CSI-RS resources have priorities; and
receiving CSI corresponding to $N$ target CSI-RS resources sent by the terminal comprises:
receiving $N$ CSIs corresponding to the $N$ target CSI-RS resources sent by the terminal based on a priority order of the $N$ target CSI-RS resources.

43. The method according to any one of claims 32 to 42, wherein the priorities of the $N$ target CSI-RS resources are determined based on the indexes of the $N$ target CSI-RS resources.

44. The method according to any one of claims 32 to 42, wherein the reference CSI-RS resource has a highest priority among the $N$ target CSI-RS resources, and the priorities of remaining $N$-1 target CSI-RS resources are determined based on indexes of the $N$-1 target CSI-RS resources.

45. An apparatus for reporting channel status information (CSI), applied to a terminal and comprising:

a determining module configured to determine $N$ target channel status information-reference signal (CSI-RS) resources from $N_{\text{trp}}$ CSI-RS resources in response to configuring, by a network device, the $N_{\text{trp}}$ CSI-RS resources for the terminal, where $N_{\text{trp}}$ and $N$ are positive integers, and $1 \le N \le N_{\text{trp}}$; and
a sending module configured to send CSI corresponding to the $N$ target CSI-RS resources to the network device.

46. An apparatus for reporting channel status information (CSI), applied to a network device and comprising:

a receiving module configured to receive CSI corresponding to $N$ target channel status information-reference signal (CSI-RS) resources sent by a terminal in response to configuring, by the network device, the $N_{\text{trp}}$ CSI-RS resources for the terminal,
where $N_{\text{trp}}$ and $N$ are positive integers, and $1 \le N \le N_{\text{trp}}$.

47. A device for reporting channel status information (CSI), comprising:

a processor; and
a memory for storing instructions executable by the processor;
wherein the processor is configured to perform the method according to any one of claims 1 to 22.

48. A device for reporting channel status information (CSI), comprising:

a processor; and
a memory for storing instructions executable by the processor;
wherein the processor is configured to perform the method according to any one of claims 23 to 44.

49. A storage medium having stored therein instructions that, when executed by a processor of a terminal, cause the terminal to perform the method according to any one of claims 1 to 22.

50. A storage medium having stored therein instructions that, when executed by a processor of a network device, cause the network device to perform the method according to any one of claims 23 to 44.

FIG. 1

FIG. 2

S11

determining $N$ target channel status information-reference signal (CSI-RS) resources from $N_{trp}$ CSI-RS resources in response to configuring, by a network device, the $N_{trp}$ CSI-RS resources for the terminal

S12

sending CSI corresponding to the $N$ target CSI-RS resources to the network device

FIG. 3

$f=0 \cdots f=3$

$i_0=0$

target CSI-RS resource 0

$i_0=3$

$i_1=0$

target CSI-RS resource 1

$i_1=3$

position of strongest coefficient

FIG. 4

$f=0 \bullet\bullet\bullet f=3$

$i=0$

target CSI-RS resource 0

target CSI-RS resource 1

$i=7$

position of strongest coefficient

FIG. 5

S21

receiving CSI corresponding to $N$ target channel status information-reference signal (CSI-RS) resources sent by a terminal

FIG. 6

100

determining module — 101

sending module — 102

FIG. 7

200

receiving module — 201

FIG. 8

memory ↔ processing component

304 302 300

power component ↔ 306

multimedia component ↔ 308

audio component ↔ 310

processor

320

communication component — 316

sensor component — 314

input/output (I/O) interface

312

FIG. 9

400

FIG. 10

## INTERNATIONAL SEARCH REPORT

| International application No. |
|---|
| **PCT/CN2023/070786** |

**A.    CLASSIFICATION OF SUBJECT MATTER**

H04L5/00(2006.01)i

According to International Patent Classification (IPC) or to both national classification and IPC

**B.    FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

3GPP, CNTXT, DWPI, ENTXTC, VEN, WPABSC: 多发送接收 信道状态信息 参数 相干 联合传输资源 资源集 资源池 multi TRP M-TRP CSI-RS CSI CJT

**C.    DOCUMENTS CONSIDERED TO BE RELEVANT**

| Category* | Citation of document, with indication, where appropriate, of the relevant passages | Relevant to claim No. |
|---|---|---|
| X | CN 114731193 A (LG ELECTRONICS INC.) 08 July 2022 (2022-07-08) description, paragraphs [0053]-[0921] | 1-4, 7, 20-26, 29, 42-50 |
| A | CN 114731193 A (LG ELECTRONICS INC.) 08 July 2022 (2022-07-08) description, paragraphs [0053]-[0921] | 5-6, 8-19, 27-28, 30-41 |
| A | CN 114765509 A (DATANG MOBILE COMMUNICATIONS EQUIPMENT CO., LTD.) 19 July 2022 (2022-07-19) entire document | 1-50 |
| A | CN 115380501 A (BEIJING XIAOMI MOBILE SOFTWARE CO., LTD.) 22 November 2022 (2022-11-22) entire document | 1-50 |
| A | WO 2022031077 A1 (LG ELECTRONICS INC.) 10 February 2022 (2022-02-10) entire document | 1-50 |
| A | SAMSUNG. "Further Enhancements on MIMO for NR" *3GPP TSG RAN Meeting #90-e, RP-202299*, 11 December 2020 (2020-12-11), entire document | 1-50 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 August 2023** | **11 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/070786**

| Patent document cited in search report | | | Publication date (day/month/year) | Patent family member(s) | | | Publication date (day/month/year) |
|---|---|---|---|---|---|---|---|
| CN | 114731193 | A | 08 July 2022 | US | 2022239358 | A1 | 28 July 2022 |
| | | | | JP | 2023508964 | A | 06 March 2023 |
| | | | | EP | 4106220 | A1 | 21 December 2022 |
| | | | | WO | 2021162517 | A1 | 19 August 2021 |
| | | | | US | 2023087177 | A1 | 23 March 2023 |
| | | | | KR | 20220050936 | A | 25 April 2022 |
| CN | 114765509 | A | 19 July 2022 | TW | 202231114 | A | 01 August 2022 |
| | | | | WO | 2022151952 | A1 | 21 July 2022 |
| CN | 115380501 | A | 22 November 2022 | None | | | |
| WO | 2022031077 | A1 | 10 February 2022 | None | | | |

Form PCT/ISA/210 (patent family annex) (July 2022)